# EUROPEAN PATENT APPLICATION

(11) **EP 1 387 306 A1**
(43) Date of publication of application: **04.02.2004**
(21) Application number: 02724728.7
(22) Date of filing: 08.05.2002
(51) Int. Cl.: G06F 17/60

(54) **DEPOSITS AND SAVINGS DISPLAY APPARATUS**

(30) Priority: 09.05.2001 JP 2001139012; 12.11.2001 JP 2001346320; 18.03.2002 JP 2002073905
(71) Applicant: Sony Corporation, Tokyo 141-0001 (JP)
(72) Inventor: NAKAMURA, Yoshiyuki, c/o SONY CORPORATION, Tokyo 141-0001 (JP); ANNO, Tetsuya, c/o SONY CORPORATION, Tokyo 141-0001 (JP); TOTOKI, Hiroki, c/o SONY BANK INC., Tokyo 106-0047 (JP); IDE, Hiroko, c/o SONY BANK INC., Tokyo 106-0047 (JP); HITOSUGI, Taro, c/o SONY CORPORATION, Tokyo 141-0001 (JP)
(74) Representative: DeVile, Jonathan Mark, Dr.
(86) International application number: PCT/JP2002/004489
(87) International publication number: WO 2002/091269

(57) **Abstract**

A user can easily manage an asset in accordance with planned use. A user sets virtual bags (sub-accounts) for virtually putting money therein such that the status of an ordinary deposit of the user is reflected in the amount of money put in the bags. Each virtual bag may be assigned a purpose such as "club activity expenses" or "for studying abroad" and a target amount. On a terminal device, money is displayed in the form of one or more icons. If an icon is dragged and dropped onto a virtual bag, an amount of money indicated by the dragged and dropped icon is moved into the virtual bag. The concepts of virtual bags can be extended to virtual moneyboxes. A parent moneybox and specific-purpose moneyboxes are prepared, and an ordinary deposit, a time deposit, a foreign-currency ordinary deposit, a foreign-currency time deposit, and/or investment trust are managed using the parent moneybox and the specific-purpose moneyboxes such that money put into or withdrawn from an account of a user is put into or withdrawn from the parent moneybox, while saving money for specific purposes is performed using the specific-purpose moneyboxes.

## Description

### Technical Field

The present invention relates to a deposit/saving display apparatus, a deposit/saving display method, a deposit/saving display program, a deposit/saving information providing apparatus, a deposit/saving information providing method, a deposit/saving information providing program, a storage medium, an asset management apparatus, an asset management method, an asset management program, and an asset management server, which allow a user to easily manage his/her asset such as a deposit by dividing it into portions defined by the user.

### Background Art

In recent years, the Internet has become very popular. As a result, it has become possible to receive various kinds of services via the Internet. For example, banks have servers for providing various banking services to users.

A user can log in to a server disposed in a bank via a personal computer to receive various kinds of banking services such as acquiring a balance of a deposit account, acquiring detailed information about a deposit, transferring money, opening or canceling a time deposit account, purchasing or selling investment trust, and acquiring detailed information about a transaction associated purchasing or selling investment trust.

In many homes, it is popular to manage money by dividing the total of money into paper bags.

For example, envelopes labeled the planned use such as ""Living expenses: ¥50,000", "Rent: ¥60,000", "Piano lesson: ¥10,000", "Electric bill: ¥5,000", "Personal computer: ¥300,00 (target value)", "For free use: ¥20,000" are prepared, and a salary is divided into those envelopes.

Money is paid from one of those envelopes depending on for what purpose money is to be paid. For example, living expenses such as food expenses are paid from an envelope labeled "Living expenses: ¥50,000", and the fee for piano lessons is paid from the envelope labeled "Piano lesson: ¥10,000".

As described above, predetermination of use of received money allows the user to easily manage money and use money in accordance with the plan.

In many cases, users have various types of assets such as an ordinary deposit, a time deposit, a foreign-currency ordinary deposit, a foreign-currency time deposit, and investment trust. The current amounts of those assets are managed in various units depending on the types of assets. For example, ordinary deposits are managed in units of yen, and time deposits and foreign-currency time deposits are managed in units of contracts. Foreign-currency ordinary deposits are managed in foreign-currency units, and investment trust is managed in units of funds. That is, metric units of assets vary depending on the types of assets.

However, information obtained via the Internet is limited to that about the balance of an account and related detailed information.

Many users inwardly have plans for use of deposited money. For example, a user may plan to spend ¥10,000 for books and ¥60,000 for rent, and so on, in the present month.

However, information displayed on the computer screen is limited to that indicating the current amount remaining in the account, and users cannot intuitively recognize amounts available for respective uses planned inwardly. This makes it difficult for users to use deposited money in accordance with the plans.

For example, even if a user has a plan to save money of ¥1,000,000 for preparation of studying abroad, any bank does not provide a service of informing the user of the target or the degree of achievement relative to the target value. That is, banks do not have effective means for motivating users to save money.

The manner of evaluating the current amounts of assets varies depending on the types of assets. Besides, the current amounts of assets based on foreign currency vary depending on the exchange rate, and the values of investment trust vary depending on the market prices, and thus it is difficult for users to precisely evaluate the total value of assets or values of respective groups of assets classified according to the types of assets.

Thus, it is an object of the present invention to provide a deposit/saving display apparatus, a deposit/saving display method, a deposit/saving display program, a deposit/saving information providing apparatus, a deposit/saving information providing method, a deposit/saving information providing program, a storage medium, an asset management apparatus, an asset management method, an asset management program, and an asset management server, which allow a user to easily manage his/her various types of assets such as a deposit.

### Disclosure of the Invention

To achiever the above object, the present invention provide a deposit/saving display apparatus for managing and displaying deposit/saving information, as is claimed in Claim 1, comprising: setting means for setting sub-accounts into which the current amount of money deposited in an account is divided; current amount indicating means for indicating current amounts of the respective sub-accounts set by the setting means; amount indicating means for indicating an amount of money which can be transferred into or from one or more of the sub-accounts, if there is such money; transfer means for transferring the amount of money indicated by the amount indicating means into or from one or more of the sub-accounts; and update means for updating the current amount of the one or more sub-accounts in accordance with the amounts transferred into or from the one or more sub-accounts by the transfer means.

The present invention provides, as is claimed in Claim 2, a deposit/saving display apparatus according to Claim 1, wherein division means for dividing the amount of money indicated by the amount indicating means into plural amounts of money, wherein transfer means transfers each of the plural amounts of money, into which the money has been divided by the division means, into one or more sub-accounts.

The present invention provides, as is claimed in Claim 3, a deposit/saving display apparatus according to Claim 1, wherein the display means displays an icon indicating the amount of money.

The present invention provides, as is claimed in Claim 4, a deposit/saving display apparatus according to Claim 1, wherein the display means displays an icon indicating the amount of money, and the division means displays, in response to a specific operation performed by a user on the icon, a plurality of icons indicating amounts whose sum is equal to the amount indicated by the original icon.

The present invention provides, as is claimed in Claim 5, a deposit/saving display apparatus according to Claim 4, wherein in response to a specific operation performed by a user on a plurality of icons indicating amounts of money, the plurality of icons are combined into a single icon indicating the sum of the amounts of money indicated by the plurality of icons.

The present invention provides, as is claimed in Claim 6, a deposit/saving display apparatus according to Claim 1, wherein name setting means for assigning a name to a sub-account indicated by display means and displaying the resultant name.

The present invention provides, as is claimed in Claim 7, a deposit/saving display apparatus according to Claim 1, wherein the amount of money, which can be put into one or more sub-accounts, is the amount of money which has been put into the account.

The present invention provides, as is claimed in Claim 8, a deposit/saving display apparatus according to Claim 1, wherein the amount of money, which can withdrawn from one or more sub-accounts, is the amount of money which has been withdrawn from the account.

The present invention provides, as is claimed in Claim 9, a deposit/saving display apparatus according to Claim 1, wherein the one or more sub-accounts, to or from which the amount of money is to be transferred by the transfer means, can be specified by a user.

The present invention provides, as is claimed in Claim 10, a deposit/saving display apparatus for managing and displaying deposit/saving information, comprising: sub-account setting means for setting virtual sub-accounts in one account; current amount acquisition means for acquiring the current amount of money deposited in the one account; assigning means for assigning the current amount acquired by the current amount acquisition means to one or more sub-accounts set by the sub-account setting means; determination means for, when money has been put into or withdrawn from the one account, determining one or more sub-accounts to which the amount of said money is to be assigned; and update means for updating the current amount of the one or more sub-accounts determined by the determination means.

The present invention provides, as is claimed in Claim 11, a deposit/saving display method for managing and displaying deposit/saving information, comprising: a first step of setting sub-accounts into which the current amount of money deposited in an account is divided; a second step of displaying current amounts of the respective sub-accounts set in the first step; and steps performed when there is money which can be put into or withdrawn from one or more sub-accounts, said steps including: a third step of indicating the amount of money which can be put into or withdrawn from one or more of the sub-accounts; a fourth step of transferring the amount of money indicated in the third step into or from one or more of the sub-accounts; and a fifth step of updating the current amount of the one or more sub-accounts in accordance with the amounts transferred in the third step into or from the one ore more sub-accounts.

The present invention provides, as is claimed in Claim 12, a deposit/saving display program for causing a computer to have functions for managing and displaying deposit/saving information, said functions comprising: a setting function of setting sub-accounts into which the current amount of money deposited in an account is divided; a current amount indicating function of indicating current amounts of the respective sub-accounts set by the setting function; an amount indicating function of indicating an amount of money which can be transferred into or from one or more of the sub-accounts, if there is such money; a transfer function of transferring the amount of money indicated by the amount indicating function into or from one or more of the sub-accounts; and an update function of updating the current amount of the one or more sub-accounts in accordance with the amounts transferred into or from the one or more sub-accounts by the transfer function.

The present invention provides, as is claimed in Claim 13, a computer-readable storage medium including a deposit/saving display program stored therein for causing a computer to have functions for managing and displaying deposit/saving information, said functions comprising: a setting function of setting sub-accounts into which the current amount of money deposited in an account is divided; a current amount indicating function of indicating current amounts of the respective sub-accounts set by the setting function; an amount indicating function of indicating an amount of money which can be transferred into or from one or more of the sub-accounts, if there is such money; a transfer function of transferring the amount of money indicated by the amount indicating function into or from one or more of the sub-accounts; and an update function of updating the current amount of the one or more sub-accounts in accordance with the amounts transferred into or from the one or more sub-accounts by the transfer function.

The present invention provides, as is claimed in Claim 14, a deposit/saving information providing server for providing deposit/saving information to a client terminal, comprising: sub-account setting means for setting virtual sub-accounts in one account; current amount acquisition means for acquiring the current amount of money deposited in the one account; assigning means for assigning the current amount acquired by the current amount acquisition means to one or more sub-accounts set by the sub-account setting means; display data providing means for providing, to the client terminal, display data to be used by the client terminal to display current amounts assigned by the assigning means to respective virtual sub-accounts; identification information acquisition means for, when money has been put into or withdrawn from the one account, providing, to the client terminal, amount-of-money information indicating the amount of money which has been put into or withdrawn from the one account and acquiring, from the client terminal, identification information indicating one or more sub-accounts to which the amount of money indicated by the amount-of-money information is to be assigned; and update means for updating the current amount assigned by the assigning means to the one or more sub-accounts in accordance with the identification information acquired by the identification information acquisition means.

The present invention provides, as is claimed in Claim 15, a deposit/saving information providing method for providing deposit/saving information to a client terminal, comprising: a first step of setting virtual sub-accounts in one account; a second step of acquiring the current amount of money deposited in the one account; a third step of assigning the current amount acquired in the second step to one or more sub-accounts set in the first step; a fourth step of providing, to the client terminal, display data to be used by the client terminal to display current amounts assigned in the third steps to respective virtual sub-accounts; a fifth step of, when money has been put into or withdrawn from the one account, providing, to the client terminal, amount-of-money information indicating the amount of money which has been put into or withdrawn from the one account and acquiring, from the client terminal, identification information indicating one or more sub-accounts to which the amount of money indicated by the amount-of-money information is to be assigned; and a sixth step of updating the current amount assigned in the third step to the one or more sub-accounts in accordance with the identification information acquired in the fifth step.

The present invention provides, as is claimed in Claim 16, a deposit/saving information providing program for causing a computer to have functions for providing deposit/saving information to a client terminal, said functions comprising: a sub-account setting function of setting virtual sub-accounts in one account; a current amount acquisition function of acquiring the current amount of money deposited in the one account; an assigning function of assigning the current amount acquired by the current amount acquisition function to one or more sub-accounts set by the sub-account setting function; a display data providing function of providing, to the client terminal, display data to be used by the client terminal to display current amounts assigned by the assigning function to respective virtual sub-accounts; an identification information acquisition function of, when money has been put into or withdrawn from the one account, providing, to the client terminal, amount-of-money information indicating the amount of money which has been put into or withdrawn from the one account and acquiring, from the client terminal, identification information indicating one or more sub-accounts to which the amount of money indicated by the amount-of-money information is to be assigned; and an update function of updating the current amount assigned by the assigning function to the one or more sub-accounts in accordance with the identification information acquired by the identification information acquisition function.

The present invention provides, as is claimed in Claim 17, a computer-readable storage medium including a deposit/saving information providing program stored therein for causing a computer to have functions for providing deposit/saving information to a client terminal, said functions comprising: a sub-account setting function of setting virtual sub-accounts in one account; a current amount acquisition function of acquiring the current amount of money deposited in the one account; an assigning function of assigning the current amount acquired by the current amount acquisition function to one or more sub-accounts set by the sub-account setting function; a display data providing function of providing, to the client terminal, display data to be used by the client terminal to display current amounts assigned by the assigning function to respective virtual sub-accounts; an identification information acquisition function of, when money has been put into or withdrawn from the one account, providing, to the client terminal, amount-of-money information indicating the amount of money which has been put into or withdrawn from the one account and acquiring, from the client terminal, identification information indicating one or more sub-accounts to which the amount of money indicated by the amount-of-money information is to be assigned; and an update function of updating the current amount assigned by the assigning function to the one or more sub-accounts in accordance with the identification information acquired by the identification information acquisition function.

The present invention provides, as is claimed in Claim 18, a computer-readable storage medium including a deposit/saving information display program stored therein for causing a computer to have functions for displaying deposit/saving information on a client terminal, said functions comprising: a current amount acquisition function of acquiring the current amount of money deposited in one account from a server; a current amount division function of dividing the current amount of money deposited in the one account acquired by the current amount acquisition function. into virtual sub-accounts; an assigning function of, if money has been put into or withdrawn from the one account, assigning the amount of money put into or withdrawn from the one account to one or more of the sub-accounts; and a current amount update function of updating the current amounts of the virtual sub-accounts into which the money has been divided by the current amount division function, in accordance with the amounts of money assigned by the assigning function.

The present invention provides, as is claimed in Claim 19, a computer-readable storage medium including a deposit/saving information display program stored therein for causing a computer to have functions for displaying deposit/saving information on a client terminal, said functions comprising: a current amount acquisition function of acquiring the current amount of money deposited in one account from a server; a current amount division function of dividing the current amount of money deposited in the one account acquired by the current amount acquisition function into virtual sub-accounts; an assigning function of, if money has been put into or withdrawn from the one account, assigning the amount of money put into or withdrawn from the one account to one or more of the sub-accounts; and a current amount update function of updating the current amounts of the virtual sub-accounts into which the money has been divided by the current amount division function, in accordance with the amounts of money assigned by the assigning function; a display function of displaying the respective sub-accounts into which the money in the one account has been divided by the current amount division function.

The deposit/saving display apparatus according to Claim 1 may further comprise determination means for determining whether a predetermined condition has been satisfied; and notification transmission means for, when the determination means determines that the conditions has been satisfied, transmitting a particular notification such as a remind electronic mail (reminder) to a user related to the account.

The present invention provides, as is claimed in Claim 20, an asset management apparatus comprising supplementary account creation means for creating a supplementary account related to an amount of an asset of a customer; credit/debit means for crediting or debiting the created supplementary account; and display means for displaying the amount of money stored in the supplementary account; wherein the total amount of money stored in the supplementary account is equal to or less than the amount of the asset of the customer.

The present invention provides, as is claimed in Claim 21, an asset management apparatus according to Claim 20, wherein in a case in which there are plural supplementary accounts, the credit/debit means is capable of transferring at least part of the amount stored in one supplementary account into another supplementary account.

The present invention provides, as is claimed in Claim 22, an asset management apparatus according to Claim 20, wherein the supplementary accounts include a first supplementary account the amount stored in which varies in accordance with a change in the amount of the asset of the customer and a second supplementary account the amount stored in which is not influenced by the change in the amount of the asset of the customer.

The present invention provides, as is claimed in Claim 23, an asset management apparatus according to Claim 20, wherein funds associated with plural types of financial products can be credited or debited to the supplementary account.

The present invention provides, as is claimed in Claim 24, an asset management apparatus according to Claim 20, wherein in a case in which the amount stored in the supplementary account includes an amount indicated in monetary units different from predetermined monetary units, the display means calculates the amount in predetermined units equivalent to the amount in said different monetary units and displays the calculated equivalent amount.

The present invention provides, as is claimed in Claim 25, an asset management apparatus according to Claim 20, wherein in a case in which the amount stored in the supplementary account includes an amount indicated in monetary units different from predetermined monetary units, the display means calculates the amount in predetermined units equivalent to the amount in said different monetary units and further calculates the total equivalent amount stored in the supplementary account and displays the total equivalent amount.

The present invention provides, as is claimed in Claim 26, an asset management apparatus according to Claim 20, wherein the display means displays the amount stored in the supplementary account in the form of one or more icons together with the supplementary account in a visually recognizable fashion.

The present invention provides, as is claimed in Claim 27, an asset management apparatus according to Claim 26, wherein an asset belonging to one supplementary account is transferred into another supplementary account in response to moving, by means of a predetermined operation, a displayed icon from said one supplementary account to said another supplementary account.

The present invention provides, as is claimed in Claim 28, an asset management apparatus according to Claim 26, wherein in response to a predetermined operation, an icon indicating an amount of money is divided into a plurality of icons such that the sum of amounts indicated by the plurality of icons becomes equal to the amount indicated by the original icon.

The present invention provides, as is claimed in Claim 29, an asset management apparatus according to Claim 20, further comprising name setting means for setting a name of the supplementary account, wherein the display means displays the named supplementary account together with the name in a visually recognizable fashion.

The present invention provides, as is claimed in Claim 30, an asset management apparatus according to Claim 20, further comprising: target setting means for setting a target amount for the amount stored in the supplementary account.

The present invention provides, as is claimed in Claim 31, an asset management apparatus according to Claim 30, further comprising calculation means for calculating the degree achievement relative to the target value on the basis of the amount stored in the supplementary account and the target amount, wherein the display means displays the calculated degree of achievement relative to the target amount.

The present invention provides, as is claimed in Claim 32, an asset management apparatus according to Claim 20, further comprising: character setting means for selecting a character from a plurality of prepared characters and assigning to the selected character to the supplementary account; and electronic mail transmission means for transmitting an electronic mail related to the character assigned to the supplementary account to a particular electronic mail address.

The present invention provides, as is claimed in Claim 33, an asset management apparatus according to Claim 32, wherein the particular electronic mail address is an electronic mail address specified by the customer.

The present invention provides, as is claimed in Claim 34, an asset management apparatus according to Claim 32, further comprising parameter acquisition means for acquiring a parameter related to a content of an electronic mail to be transmitted, wherein the electronic mail transmission means selects a content of the electronic mail to be transmitted, in accordance with the acquired parameter.

The present invention provides, as is claimed in Claim 35, an asset management apparatus according to Claim 34, wherein the parameter is determined in accordance with an operation performed on the supplementary account by the customer.

The present invention provides, as is claimed in Claim 36, an asset management method for a computer including supplementary account creation means and credit/debit means to manage an asset, comprising the steps of: creating a supplementary account related to the amount of an asset of a customer, using the supplementary account creation means; crediting or debiting the supplementary account such that the total amount stored in the supplementary account is equal to or less than the amount of the asset of the customer; and displaying the amount stored in the supplementary account, using the display means.

The present invention provides, as is claimed in Claim 37, an asset management program for causing a computer to have functions including: a function of creating an supplementary account related to an amount of an asset of a customer; a function of crediting or debiting the supplementary account such that the total amount stored in the supplementary account is equal to or less than the amount of the asset of the customer; and a function of displaying the amount stored in the supplementary account.

The present invention provides, as is claimed in Claim 38, a computer-readable storage medium having an asset management program stored therein for causing a computer to have functions including: a function of creating an supplementary account related to an amount of an asset of a customer; a function of crediting or debiting the supplementary account such that the total amount stored in the supplementary account is equal to or.less than the amount of the asset of the customer; and a function of displaying the amount stored in the supplementary account.

The present invention provides, as is claimed in Claim 39, an asset management server comprising: information acquisition means for acquiring information necessary to create a supplementary account from a client terminal; supplementary account creation means for creating the supplementary account related to the amount of an asset of a customer in accordance with the acquired information; crediting/debiting means for crediting or debiting the supplementary account such that the total amount stored in the supplementary account is equal to or less than the amount of the asset of the customer; and providing means for providing information indicating the amount stored in the supplementary account to the client terminal.

The present invention provides, as is claimed in Claim 40, an asset management method for a server including information acquisition means, supplementary account creation means, crediting/debiting means, and providing means to manage an asset, said method comprising the steps of: acquiring information necessary to create a supplementary account from a client terminal, using the information acquisition means; creating the supplementary account related to the amount of an asset of a customer in accordance with the acquired information, using the supplementary account creation means; crediting or debiting the supplementary account using the crediting/debiting means such that the total amount stored in the supplementary account is equal to or less than the amount of the asset of the customer; and providing information indicating the amount stored in the supplementary account to the client terminal, using the providing means.

The present invention provides, as is claimed in Claim 41, an asset management program for causing a computer to have functions including: a function of acquiring information necessary to create a supplementary account from a client terminal; a function of creating the supplementary account related to the amount of an asset of a customer in accordance with the acquired information; a function of crediting or debiting the supplementary account such that the total amount stored in the supplementary account is equal to or less than the amount of the asset of the customer; and a function of providing information indicating the amount stored in the supplementary account to the client terminal.

The present invention provides, as is claimed in Claim 42, a computer-readable storage medium having an asset management program stored therein for causing a computer to have functions including: a function of acquiring information necessary to create a supplementary account from a client terminal; a function of creating the supplementary account related to the amount of an asset of a customer in accordance with the acquired information; a function of crediting or debiting the supplementary account such that the total amount stored in the supplementary account is equal to or less than the amount of the asset of the customer; and a function of providing information indicating the amount stored in the supplementary account to the client terminal.

The present invention provides, as is claimed in Claim 43, a depositing/saving server comprising: means for setting an account in accordance with a request issued by a client terminal online-connected to the depositing/saving server; means for allowing a user of the client terminal to input a purpose of said account; and means for providing on-line customer information to a service provider capable of providing a service relating to the purpose of the account input by the user.

The present invention provides, as is claimed in Claim 44, a depositing/saving server according to Claim 43, further comprising means for providing on-line information relating to the purpose of the account to the client terminal, said information being provided by the service provider in accordance with the customer information.

The present invention provides, as is claimed in Claim 45, a depositing/saving server according to Claim 43 or 44, wherein said account is a sub-account created by a user of the client terminal by virtually dividing one account.

The present invention provides, as is claimed in Claim 46, an online depositing/saving system comprising a depositing/saving server and an intermediary server connected to each other on-line, wherein the depositing/saving server includes means for setting an account in accordance with a request issued by an online-connected client terminal, and the intermediary server includes: means for mediating transmission of information between the client terminal and the depositing/saving server; means for allowing a user of the client terminal to input a purpose of the account set by the depositing/saving server; and means for providing on-line customer information to a service provider capable of providing a service relating to the purpose of the account input by the user.

The present invention provides, as is claimed in Claim 47, an online depositing/saving system according to Claim 46, wherein the intermediary server includes means for providing on-line information relating to the purpose of the account to the client terminal, said information being provided by the service provider in accordance with the customer information.

The present invention provides, as is claimed in Claim 48, an online depositing/saving system according to Claim 46 or 47, wherein said account is a sub-account created by a user of the client terminal by virtually dividing one account.

The present invention provides, as is claimed in Claim 49, a method for, in a system including a client terminal, a depositing/saving server, and a service provider server, which are connected to each other on-line, providing deposit/saving information, said method including the steps of: in the depositing/saving server, setting an account in accordance with a request issued by a client terminal; getting a user of the client terminal to input a purpose of said account; and in the depositing/saving server, determining a service provider capable of providing a service relating to the purpose of the account input by the user of the client terminal and providing on-line customer information to said service provider.

The present invention provides, as is claimed in Claim 50, a method for, in a system including a client terminal, a depositing/saving server, an intermediary server and a service provider server, which are connected to each other on-line, providing deposit/saving information, said method including the steps of: in the depositing/saving server, receiving a request issued by the client terminal via the intermediary server and setting an account in accordance with the request; getting a user of the client terminal to input a purpose of said account; and in the intermediary server, determining a service provider capable of providing a service relating to the purpose of the account input by the user of the client terminal and providing on-line customer information to said service provider.

The present invention provides, as is claimed in Claim 51, a deposit/saving information providing method according to Claim 49 or 50, further comprising the step of providing on-line information relating to the purpose of the account to the client terminal, said information being provided by the service provider in accordance with the customer information.

The present invention provides, as is claimed in Claim 52, a program for causing a computer to have functions including: a function of setting an account in accordance with a request issued by an online-connected client terminal; a function which allows a user of the client terminal to input a purpose of said account; and a function of providing on-line customer information to a service provider capable of providing a service relating to the purpose of the account input by the user.

The present invention provides, as is claimed in Claim 53, a program for causing a computer to have functions including: a function of setting an account in accordance with a request issued by an online-connected client terminal; a function which allows a user of the client terminal to input a purpose of said account; a function of providing on-line customer information to a service provider capable of providing a service relating to the purpose of the account input by the user; and a function of providing on-line information relating to the purpose of the account to the client terminal, said information being provided by the service provider in accordance with the customer information.

The present invention provides, as is claimed in Claim 54, a program for causing a computer to have functions for operating an intermediary server online-connected to a depositing/saving server having a capability of setting an account in accordance with a request issued by an online-connected client terminal, said functions comprising: a function of mediating transmission of information between the client terminal and the depositing/saving server; a function of allowing a user of the client terminal to input a purpose of the account set by the depositing/saving server; and a function of providing on-line customer information to a service provider capable of providing a service relating to the purpose of the account input by the user.

The present invention provides, as is claimed in Claim 55, a program for causing a computer to have functions for operating an intermediary server online-connected to a depositing/saving server having a capability of setting an account in accordance with a request issued by an online-connected client terminal, said functions comprising: a function of mediating transmission of information between the client terminal and the depositing/saving server; a function of allowing a user of the client terminal to input a purpose of the account set by the depositing/saving server; a function of providing on-line customer information to a service provider capable of providing a service relating to the purpose of the account input by the user; and a function of providing on-line information relating to the purpose of the account to the client terminal, said information being provided by the service provider in accordance with the customer information.

The present invention provides, as is claimed in Claim 56, a computer-readable storage medium having a program stored therein for causing a computer to have functions including: a function of setting an account in accordance with a request issued by an online-connected client terminal; a function which allows a user of the client terminal to input a purpose of said account; and a function of providing on-line customer information to a service provider capable of providing a service relating to the purpose of the account input by the user.

The present invention provides, as is claimed in Claim 57, a computer-readable storage medium having a program stored therein for causing a computer to have functions including: a function of setting an account in accordance with a request issued by an online-connected client terminal; a function which allows a user of the client terminal to input a purpose of said account; a function of providing on-line customer information to a service provider capable of providing a service relating to the purpose of the account input by the user; and a function of providing on-line information relating to the purpose of the account to the client terminal, said information being provided by the service provider in accordance with the customer information.

The present invention provides, as is claimed in Claim 58, a computer-readable storage medium having a program stored therein for causing a computer to have functions for operating an intermediary server online-connected to a depositing/saving server having a capability of setting an account in accordance with a request issued by an online-connected client terminal, said functions comprising: a function of mediating transmission of information between the client terminal and the depositing/saving server; a function of allowing a user of the client terminal to input a purpose of the account set by the depositing/saving server; and a function of providing on-line customer information to a service provider capable of providing a service relating to the purpose of the account input by the user.

The present invention provides, as is claimed in Claim 59, a computer-readable storage medium having a program stored therein for causing a computer to have functions for operating an intermediary server online-connected to a depositing/saving server having a capability of setting an account in accordance with a request issued by an online-connected client terminal, said functions comprising: a function of mediating transmission of information between the client terminal and the depositing/saving server; a function of allowing a user of the client terminal to input a purpose of the account set by the depositing/saving server; a function of providing on-line customer information to a service provider capable of providing a service relating to the purpose of the account input by the user; and a function of providing on-line information relating to the purpose of the account to the client terminal, said information being provided by the service provider in accordance with the customer information.

### Brief Description of the Drawings

Fig. 1 is a diagram showing an example of a network system including a bank server and client terminals, according to an embodiment of the present invention.
Fig. 2 is a diagram showing an example of a configuration of a client terminal.
Fig. 3A is a diagram showing an example of a configuration of the bank server 5, and Fig. 3B is a diagram showing an example of a set of programs and data stored in a storage device of the bank server.
Fig. 4 is a diagram showing an example of amount-in-bag data.
Fig. 5 is a diagram showing an example of a divide-into-bags screen.
Fig. 6 is a diagram showing an example of a new bag creation window.
Fig. 7 is a diagram showing an example of a divide-into-bags screen which is displayed when money has been put into an account of a user.
Fig. 8 is a diagram showing a one-click change function.
Fig. 9 is a diagram showing an example of divide-into-bags screen which is displayed when money has been withdrawn from the account of the user.
Fig. 10 is a diagram showing an example of a divide-into-bags screen in which a achievement graph is displayed.
Fig. 11 is a diagram showing an example of a manner in which icons representing bills or coins are changed by means of the one-click change function.
Fig. 12 is a flow chart showing operations of the bank server and the client terminal performed when money is put into the account of the user.
Fig. 13 is a flow chart showing the operation of the bank server and the operation of the client terminal performed in response to withdrawing of money from the account of the user.
Fig. 14 is a flow chart showing the operation of the bank server and the operation of the client terminal performed to display the achievement graph on the divide-into-bags screen.
Fig. 15 is a diagram showing an example of a moneybox screen.
Fig. 16 is a diagram showing an example of a new moneybox creation window.
Fig. 17 is a diagram showing a manner in which a certain amount of asset is moved from the parent moneybox to a specific-purpose moneybox.
Fig. 18 is a diagram showing a manner in which a money icon is virtually changed into money icons having a smaller amount.
Fig. 19 is a diagram showing a manner in which money a negative amount of the parent moneybox is recovered.
Fig. 20 is a diagram showing an example of a manner in which a money icon is changed into money icons each indicating a smaller amount of money.
Fig. 21 is a flow chart showing a process of displaying detailed information about a specific-purpose moneybox.
Fig. 22 is a diagram showing an example of a configuration of a network according to a second embodiment.
Fig. 23 is a diagram showing an example of a set of a program and data stored in the storage device of the bank server.
Fig. 24 is a diagram showing an example of a mail transmission calendar.
Fig. 25 is a diagram showing an example of mail message data.
Fig. 26 shows an example of a condition table indicating conditions according to which points are increased or reduced.
Fig. 27 is a diagram showing an example of an initial screen.
Fig. 28 is a diagram showing an example of a details-of-parent-moneybox screen.
Fig. 29 is a diagram showing an example of a details-of-specific-purpose-moneybox screen.
Fig. 30 is a flow chart showing a process of calculating the point of a watcher character and displaying a screen message.
Fig. 31 is a flow chart associated with a process performed by a bank server to change the point of a watcher character.
Fig. 32 is a flow chart showing a process performed by the bank server to change the points of a watcher character depending on the previous access date, which is one of moneybox attributes.
Fig. 33 is a flow chart associated with a process performed by the bank server to transmit a character mail.
Fig. 34 is a diagram illustrating a general construction of an online banking system according to a third embodiment of the present invention.
Fig. 35 is a diagram showing an example of a configuration of a client terminal.
Fig. 36 is a diagram showing a hardware configuration of an intermediary server, a bank server, and a service provider server.
Fig. 37 is a diagram showing an example of a set of programs and data stored in the intermediary server.
Fig. 38 is a diagram showing an example of a set of programs and data stored in the bank server.
Fig. 39 is a diagram showing an example of sub-account data.
Fig. 40 is a diagram showing an example of a sub-account management screen.
Fig. 41 is a diagram showing an example of a sub-account creation screen.
Fig. 42 is a diagram showing an example of a set of programs and data stored in the service provider server.
Fig. 43 is a flow chart showing a process of creating a new sub-account in the bank server.
Fig. 44 is a diagram showing another example of a sub-account management screen.
Fig. 45 is a diagram showing an example of data input in the sub-account creation screen.
Fig. 46 is a diagram showing still another example of a sub-account management screen.
Fig. 47 is a diagram showing an example of a sub-account management screen in which advertisement information and advice on saving and replaying a loan are displayed.
Fig. 48 is a diagram illustrating a general construction of an online banking system according to a fourth embodiment of the present invention.
Fig. 49 is a diagram showing an example of a set of programs and data stored in the bank server.
Fig. 50 is a flow chart showing a process of creating a new sub-account in the bank server in the online banking system according to the fourth embodiment of the present invention.

### Best Mode for Carrying Out the Invention

### (First Embodiment)

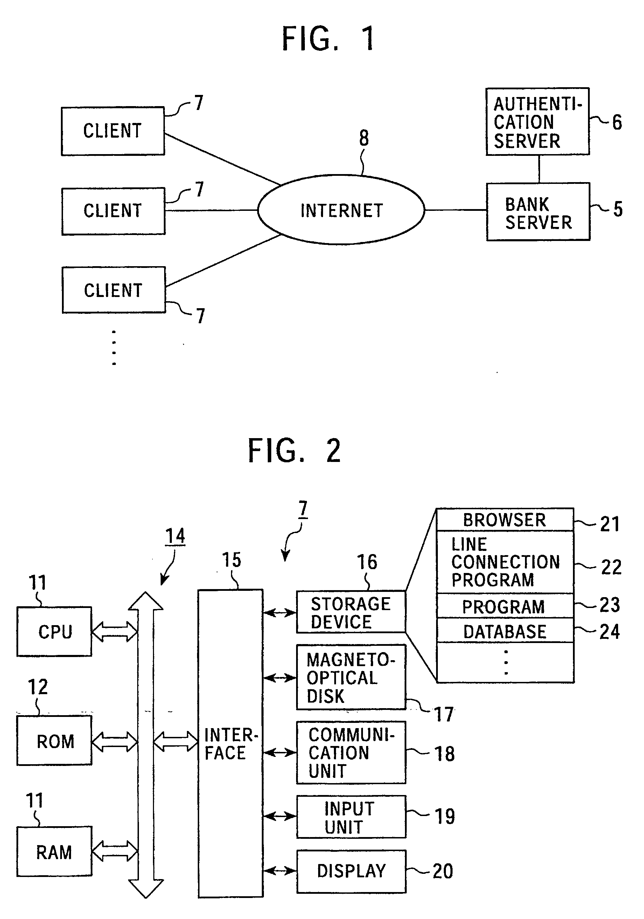

A first preferred embodiment of the present invention is descried in detail below with reference to Figs. 1 to 14.

Fig. 1 shows an example of a network system including a bank server 5 and client terminals 7 according to the present embodiment.

The bank server 5 is operated by a bank and is connected to the Internet 8. If a user logs in to the bank server 5, the user can receive various services such as acquiring the balance of a deposit, transferring money, opening a new account, canceling a time deposit account, and exchange into or from foreign currency.

The bank server 5 stores various kinds of screen data such as a current value display screen displayed on the client terminal 7 of the user. Each screen data is described in a computer language called HTML (Hyper Text Markup Language).

An authentication server 6 is a server for authenticating a user by verifying a login account, a password, or the like acquired from a client terminal 7.

If a user fails in passing authentication performed by the authentication server 6, the user cannot log in to the bank server 5.

The client terminals 7 are connected to the Internet 8 so that they can communicate with the bank server 5.

The specific examples of the client terminals 7 include a PC, a portable telephone, a word processor having a communication capability, and a digital television set having a built-in modem.

A user can log in to the bank server 5 via his/her client terminal 7 to receive various bank services from the bank server 5.

Each client terminal 7 has a preinstalled browser for displaying, on a display device, screen data in the HTML format received from the bank server 5.

If the user inputs, via the displayed screen, data such as an account number to which money is to be transferred, the input data is transmitted to the bank server 5.

The Internet 8 includes, for example, a telephone line, a cable television network, a satellite communication line, and an optical fiber network.

The communication between a client terminal 7 and the ban server 5 is performed using a protocol such as TCP/IP (Transmission Control Protocol/Internet Protocol).

Although in the example shown in Fig. 1, the client terminals 7 are directly connected to the Internet 8, a client terminal 7 may be connected to the Internet 8 via an Internet intermediary called a provider.

Although in the present embodiment, the client terminals 7 and the bank server are connected via the Internet 8, connection may be achieved via another communication network such as a private line, a LAN (Local Area Network), a WAN (Wide Area Network), or a satellite communication network.

Fig. 2 shows an example of a construction of a client terminal 7, wherein the client terminal 7 is assumed herein to be a PC.

Although there are plural client terminals 7, only one of such client terminals is described below.

A CPU (Central Processing Unit) 11 performs various processes, calculation, and decisions and also controls various devices such as a display, in accordance with a program stored in a ROM (Read Only Memory) 12 or a program loaded in a RAM (Random Access Memory) 13.

The various processes performed by the CPU 11 include, for example, displaying screen data received from the bank server 5 on a display 20 using a browser 21, and transmitting data input by a user to the bank server 5.

The ROM 12 is a read only memory in which a basic program for causing the client terminal 7 to operate and/or an associated parameter are stored.

The RAM 13 is a memory for storing a program and data used by the CPU 11 to perform various processes. The CPU 11 can change the contents stored in the RAM 13.

An interface 15 is connected to the CPU 11 and also to various devices such as a storage device 16, an magnetooptical disk 17, a communication unit 18, an input unit 19, a display 20, so that the interface 15 serves as an interface between the CPU 11 and the devices described above.

A bus line 14 is a transmission medium via which data and control signals are transmitted between the interface 15, the CPU 11, the ROM 12, and the RAM 13.

The storage device 16 includes a high-capacity high-speed storage medium on which various programs and data are stored. Specific examples of the storage device 16 include a hard disk, nonvolatile semiconductor memory, and a magnetooptical disk. In the present embodiment, a hard disk is employed as the storage device 16.

The storage medium 16 stores, for example, a browser 21, line connection program 22, other programs 23, and databases 24.

The browser is a program for displaying a file in the HTML format on the display 20.

The file in the HTML format is a file in which the structure of a document, a place at which an image or the like is located, and a location of linked data are described using tags (reserved words). Various screens such as a transfer screen can be defined using files in the HTML format. Any screen defined by a file in the HTML format can be displayed on the display using the browser.

The line connection program 22 is a program for connecting a client terminal 7 to the Internet 8 (or to a provider when the client terminal 7 is connected to the Internet 8 via the provider).

The magnetooptical disk 17 is a storage removably attached to the client terminal 7 and is used to store backup data of a program or data, although this type of storage is low in access speed compared with the storage device 16.

The communication unit 18 is a device for connecting the client terminal 7 to the Internet 8. In a case in which the client terminal 7 is connected to a public telephone network, a modem or the like is used as the communication unit 18.

The input unit 19 includes a keyboard, a mouse, and the like. The keyboard is a device for inputting character data and inputting edit data or the like by pressing a specific function key. A specific example of use of the keyboard is inputting characters into a field of a screen displayed by the bank server 5.

The mouse is a pointing device for inputting data by clicking on an icon or a button displayed on the display. Instead of the mouse, another type of pointing device such as a touchpanel or a tablet may be used.

Specific examples of the display 20 include a CRT (Cathode Ray Tube) display, a liquid crystal display, and a plasma display.

The display 20 is used to display various screens downloaded from the bank server 5 and also used to display data input by a user via the keyboard or the like.

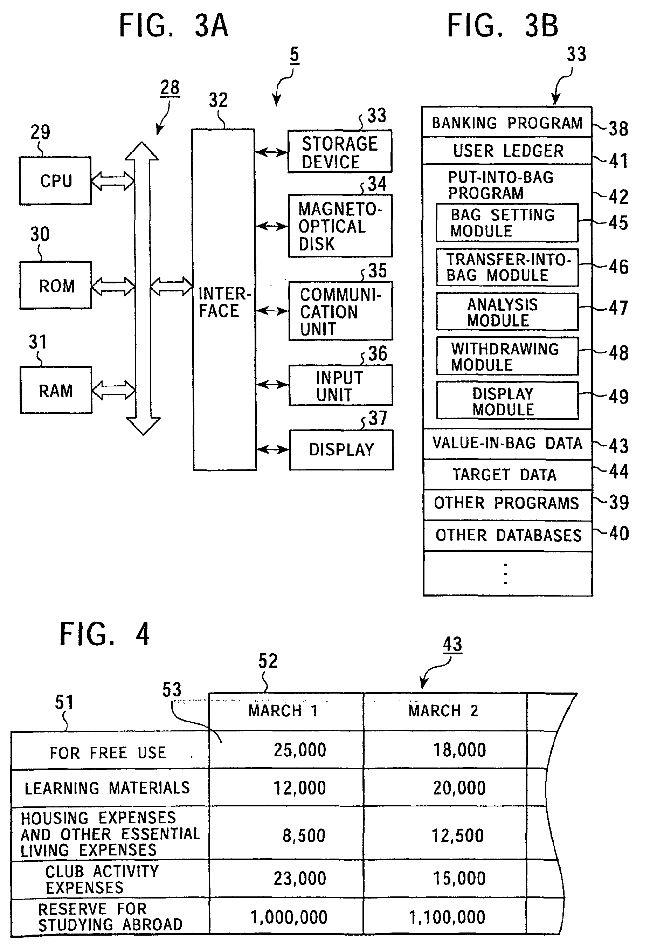

Fig. 3A shows an example of a construction of the bank server 5.

The bank server 5 may be realized by a computer, such as a work station, having a capability of performing complicated information processing at a high speed.

The.construction of the bank server 5 is basically similar to that of the client terminal 7 and includes parts such as a CPU 29 and a display 37 which function in similar manners as the parts such as the CPU 11 and the display 20 of the client terminal 7.

Fig. 3B shows a example of a set of a program and data stored in the storage device 33 of the bank server 5.

That is, the storage device 33 stores programs and databases which are needed by a bank to provide service to a user.

A banking program 38 is a program for making it possible for the bank server 5 to provide various banking services.

More specifically, the banking program 38 makes it possible for the bank server 7 to display a screen depending on a transaction on the client terminal 7 and to perform various banking processes such as determining the balance, transferring money, and opening an account in response to inputting of data performed by a user.

A user ledger 41 is a database in which data associated with transactions performed on ordinary deposit accounts or time deposit accounts of users and data indicating the balances of accounts are stored.

Other programs 39 include an OS (Operating System), a program for preventing the bank server 5 from being accessed from the outside in an unauthorized manner, and a program used by a human manager to perform maintenance.

Other databases 40 include various databases associated with the other programs 39.

A put-into-bag program 42 is a program for dividing, for example, an ordinary deposit account of a user into sub-accounts called bags defined by the user and displaying the current amount remaining in each sub-account or bag. That is, the put-into-bag program 42 divides the amount remaining in the account into virtual bags.

The put-into-bag program 42 starts when, for example, a start button on a deposit amount display screen provided by the banking program 38 is clicked.

The put-into-bag program 42 includes a display module 49, a bag setting module 45, a put-into-bag module 46, an analysis module 47, and a withdrawing module 48.

The display module 49 is a module for transmitting screen data such as a divide-into-bags screen described in HTML to the client terminal 7. When the client terminal 7 receives the screen data from the display module 49, the client terminal 7 can display a screen using the browser 21 (Fig. 2) in accordance with the received screen data.

The bag setting module 45 is a module for creating or deleting a virtual bag and for setting various attributes of a created bag, such as a name of a bag.

A user can create a virtual bag to be used in the division-into-bag capability (hereinafter, such a bag will be referred to simply as a bag) by using the bag setting module 45. The user can also set attributes of each bag. Attributes of a bag include:
bag name: name such as "for purchasing learning materials" assigned to a bag;
bag type: attribute indicating the type of a bag, such as a normal deposit, a time deposit, an investment trust, and a loan;
date of creating a bag: attribute indicating the date of creating a bag;
character attribute: user interface to a customer of a bag. A desired character such as a "bear" a "pig moneybox" can be selected, and a corresponding icon is displayed in the current value display screen or the like. If the icon is clicked, the put-into-bag program 42 is activated.
bag attribute: attribute indicating whether a target amount of a deposit is set;
target date: date by which the target amount should be achieved;
target content: content indicating a specific target;
achievement ratio: ratio of the current amount to the target amount;
progress ratio: degree of achievement indicated by the current amount;
put-into-bag type: information indicating whether money is allowed to be put into a bag only once or many times after the bag is created;
withdrawing-from-bag type: information indicating whether money is allowed to be withdrawn from a bag freely many times or allowed to be withdrawn only when a particular condition is satisfied;
amount range: information indicating whether the amount remaining in a bag can be negative;
currency unit: information indicating a currency unit of money stored in a bag, such as yen, dollar, or Euro; and
bag life cycle: information indicating whether a bag is "in a preparation state", "in operation", "out of operation", or "closed".

The put-into-bag module 46 provides a capability which allows a user to distribute money, put into an account of a user, into specified bags.

The put-into-bag module 46 is linked to the user ledger 41 so that when the banking program 38 inputs put-into-account data to the user ledger, the put-into-bag module 46 acquires the put-into-account data and displays it on the display 20 of the client terminal 7. More specifically, if the put-into-bag module 46 transmits data to the display module 49, the display module 49 produces HTML data in accordance with the data received from the put-into-bag module 46 and transmits the resultant HTML data too the client terminal 7.

As will be described in detail later, a user can distribute money displayed (in the form of icons representing bills) by the put-into-bag module 46 into bags by dragging bills to bags on the display 20.

If the user distributes the money into bags, the put-into-bag module 46 updates amount-in-bag data 43 by adding the amounts distributed to the respective bags to the current amounts of the corresponding bags. Herein, the amount-in-bag data 43 is a database in which amounts remaining in the respective bags are described.

The put-into-bag module 46 has a capability of virtually changing money. For example, when ¥10,000 is put into the account of the user, the put-into-bag module 46 displays an icon representing a bill of ¥10,000 on the display 20. When the user wants to distribute the money put into the account to bags, if the user points to the ¥10,000-bill icon with a pointer and clicks on the icon, the ¥10,000-bill icon is divided into, for example, ten ¥1,000-bill icons. This capability is called a one-click change capability. The user can put bills created by means of the one-click change capability into desired bags.

If an icon representing a bill having a particular amount is dragged and dropped onto another icon representing a bill having a particular amount, icons of two bills are combined into a single icon having an amount equal to the sum of the amounts of original two bills. For example, if a ¥1,000-bill icon is dragged and dropped onto another ¥1,000-bill icon, the two ¥1,000-bill icons are combined into a single ¥2,000-bill icon.

The manner of performing changing is not limited to one-click change, but changing may be performed in response to another operation such as double-clicking.

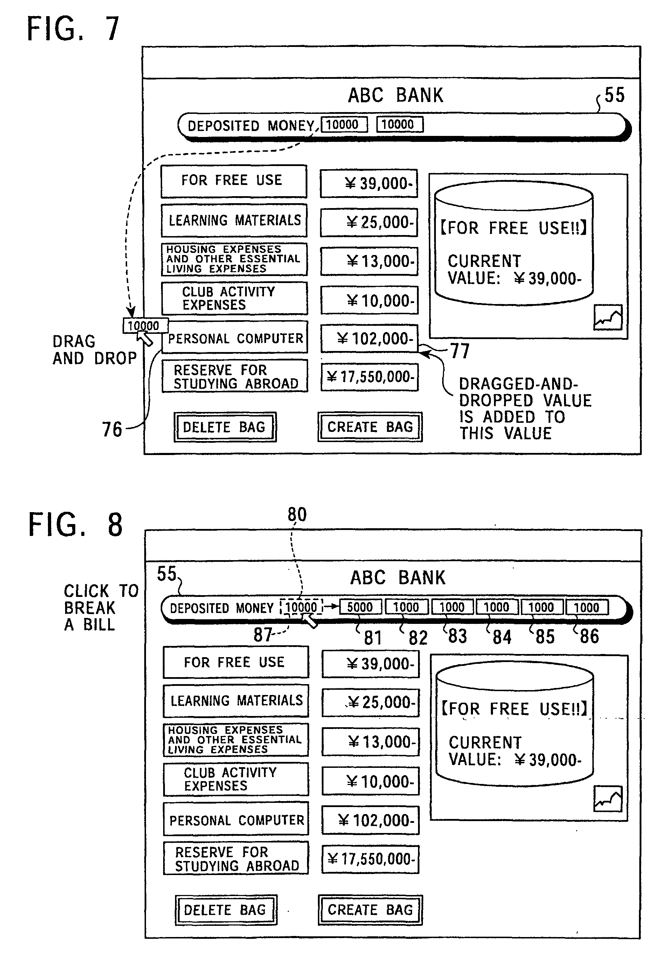

The one-click change capability will be described in further detail later with reference to Fig. 8.

The drag-and-drop operation refers to a process including:
moving a pointer to a desired icon by operating a mouse and pressing a left button on the mouse;
moving the pointer to a desired location while holding down the left button so that the icon is moved together with the pointer; and
releasing the left button from the held-down state when the icon has come to a desired location.

In response to the drag-and-drop operation, a programmed process is performed.

The effect provided by the operation of holding down the left button on the mouse may also be achieved by another operation.

The analysis module 47 is a module for producing a graph indicating the degree of achievement relative to the target defined by the user for each bag and displaying the resultant graph.

Using the bag setting module 45, the user can define a deposit target for each bag. For example, the user can define deposit targets such as a target amount of deposit and a target data for a "personal computer" bag created to deposit money "for purchasing a personal computer". Target data indicating the targets is stored in the target data 44.

The analysis module 47 reads the target data from the target data 44 and acquires data indicating the history of the amount stored in the bag from the amount-in-bag data 43. In accordance with those data, the analysis module 47 displays the degree of achievement on the display 20 in a visually recognizable fashion.

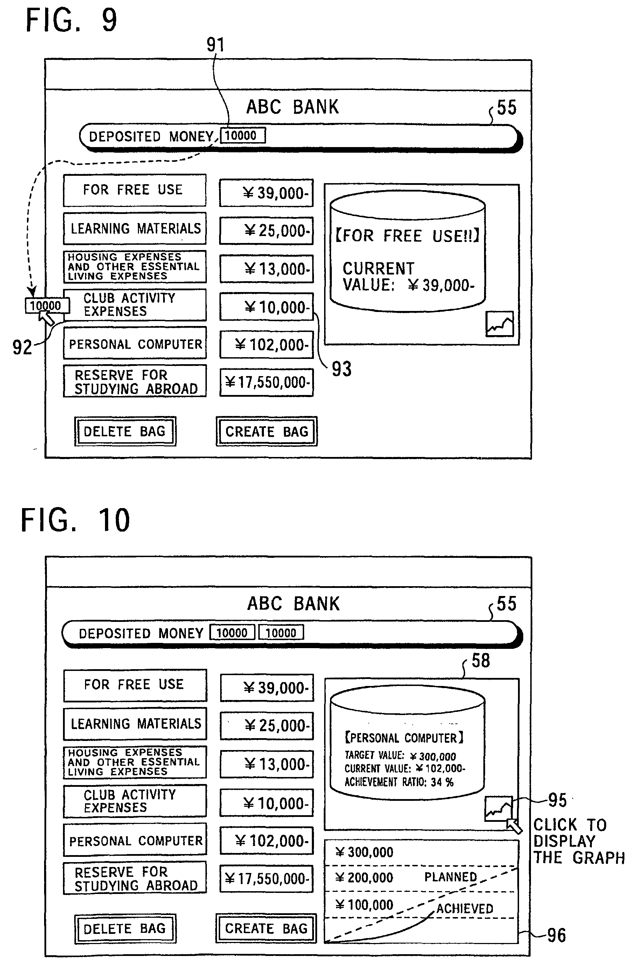

Displaying the degree of achievement in the visually recognizable fashion motivates the user to save money. The detailed functions of the analysis module 47 will be described later with reference to Fig. 10.

The withdraw-from-bag module 48 is a module for realizing functions opposite to those of the put-into-bag module 46. That is, when money is withdrawn from the account of the user, the withdraw-from-bag module 48 distributes withdrawing to one or more bags.

The withdraw-from-bag module 48 is linked to the user ledger 41 so that when the banking program 38 inputs withdraw-from-account data to the user ledger, the withdraw-from-bag module 48 acquires the withdraw-from-account data and displays it on the display 20 of the client terminal 7.

As will be described in detail later, the user can divide the withdrawn amount displayed (in the form of icons representing bills) on the display 20 by the withdraw-from-bag module 48 so that the total withdrawn amount is shared by specified bags, by dragging and dropping bills onto the bags.

If the user divides the withdrawn amount such that the total withdrawn amount is shared by specified bags, the withdraw-from-bag module 48 updates the amount-in-bag data 43 by subtracting amounts assigned to the respective specified bags from the current amounts of the corresponding bags. In a case in which money has been withdrawn from the account of user, withdrawn money is allotted to bags in the manner described later with reference to Fig. 9.

The withdraw-from-bag module 48 has a one-click change capability. For example, when ¥10,000 is withdrawn from the account of the user, the withdraw-from-bag module 48 displays an icon representing a bill of ¥10,000 on the display 20. When the user wants to divide the withdrawn amount such that the withdrawn amount is shared specified bags, if the user points to the ¥10,000-bill icon with a pointer and clicks on the icon, the ¥10,000-bill icon is divided into, for example, ten ¥1,000-bill icons. The user can divide the withdrawn amount so that the withdrawn amount is shared by the specified bags by dragging and dropping bills, created by means of the one-click change capability, onto specified bags.

The amount-in-bag data 43 is a database in which changes in deposit amounts of the respective bags are described. Note that the amount remaining in the account of the user is not actually divided, but the amount remaining in the single account of the user is virtually divided into virtual sub-accounts (bags) and the amounts remaining in the virtual sub-accounts (bags) are described in the amount-in-bag data 43.

The target data 44 is a database in which data indicating targets defined by the user for the respective bags is stored.

When the user creates a bag using the bag setting module 45, the user can define targets such as a target deposit amount and a target date for the bag. The data indicating the targets defined by the user is described in the target data 44 by the bag setting module 45.

Fig. 4 shows an example of amount-in-bag data 43.

The amount-in-bag data 43 is a database in which the amounts remaining in the respective bags, which may change day by day, are described on a day-by-day basis. In the example shown in Fig. 4, the data stored in the amount-in-bag data 43 is displayed in the form of a table.

"For free use" described in one of name fields 51 is a name assigned by the user to a bag when the bag is created using the bag setting module 45.

The user assigns a freely-usable part of money put into the account to this bag. "Learning materials", "housing expenses and other essential living expenses", "club activity expenses", and "reserve for studying abroad" described in other name fields are name assigned by the user to bags.

Date fields 52 are used to describe the dates when the amounts remaining in the bags are described.

In amount-of-bag fields 53, the amounts remaining, as of the date described in the date fields 52, in the bags having names described in the name fields 51 are described.

For example, the amount-in-bag data 43 indicates that ¥25,000 remained in the bag named "for free use" as of March 1.

Thus, it is possible to know the changes in the amounts of the respective bags by checking the amount-in-bag data 43. The amount-in-bag data 43 is used, for example, by the analysis module 47 to determine the degree of achievement relative to the target defined by the user.

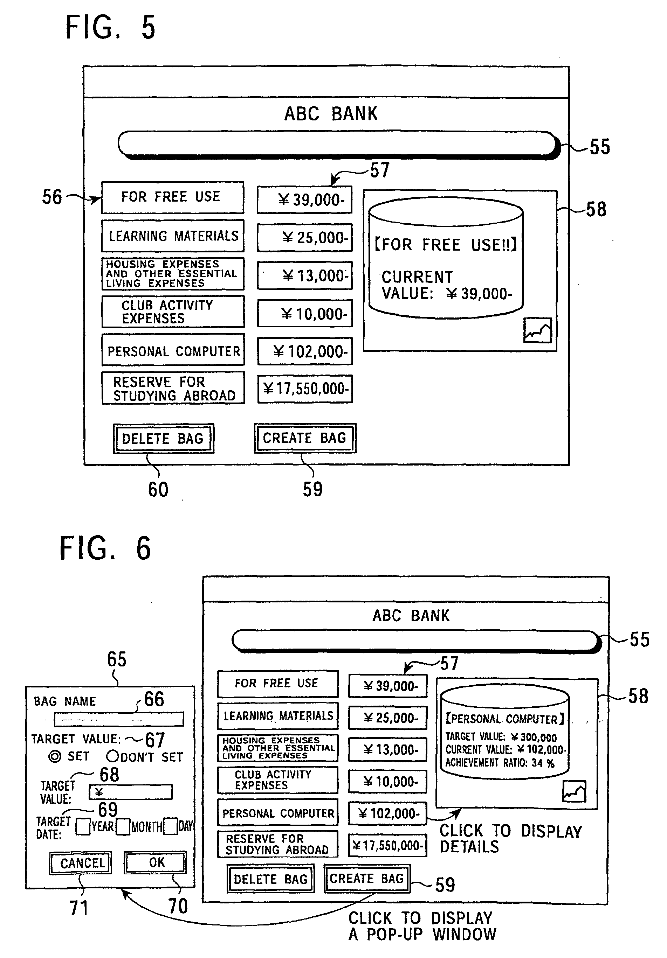

Fig. 5 shows an example of a divide-into-bags screen.

The divide-into-bags screen is displayed on the display 20 by the CPU 11 of the client terminal 7 by using the browser 21 in accordance with data described in an HTML file received from the display module 49.

The divide-into-bags screen includes an area 55 for displaying an amount put into or withdrawn from the account, a bag name area 56, a current amount area 57, a detailed information area 58, a new bag creation button 59, and a delete button 60.

In the credited/debited amount display area 55, as will be described in detail later, money is displayed such that if a certain amount of money has been put into the account of the user, that amount of money is displayed in the form of icons.

When money is put into the account of the user, the amount is displayed by the put-into-bag module 46. On the other hand, when money is withdrawn from the account of the user, the amount is displayed by the withdraw-from-bag module 48.

In the bag name area 56, names assigned by the user to the respective bags are displayed. In the example shown in Fig. 5, created bags include those named "for fee use", "learning materials", "housing expenses and other essential living expenses", "club activity expenses", "personal computer", and "reserve for studying abroad".

The user can freely use the money assigned to the bag of "for free use".

The money assigned to the bag of "learning materials" is used to purchase, for example, an English conversion learning material or a book for learning.

The money assigned to the bag of "housing expenses and other essential living expenses" is used, for example, to pay a rent for a house and to purchase toothbrush, clothes, shoes, and the like.

The money assigned to the bag of "club activity expenses" is used to pay expenses associated with club activity such as a tennis club activity or a tea ceremony club activity.

The money assigned to the bag of "personal computer" is money saved every month to purchase a new personal computer.

The money assigned to the bag of "reserve for studying abroad" is money saved every month for preparation of studying abroad, for example, at a law school in the USA.

In the current amount area 57, the virtual amounts remaining in the respective bags are displayed. Note that the account of the user is not divided in actual sub-accounts but the amount of account is virtually divided into the respective bags.

In the example shown in Fig. 5, the current amount remaining in the bag of "for free use" is ¥39,000, and the current amount remaining in the bag of "reserve for studying abroad" is ¥17,550,000. From the amounts displayed in the current amount area 57, the user can immediately recognize the current amounts remaining in the respective bags.

In the detailed information area 58, detailed information associated with a bag specified by the user is displayed. If the user operates the mouse so that the pointer points to a name or a current amount of a desired bag on the divide-into-bags screen and if the user clicks the left button on the mouse, the focus is switched to that bag.

If the focus is switched to the desired bag by the user, the color of the area in which the name of the bag is changed to allow the user to recognize that the focus is now on that bag. In the detailed information area, detailed information associated with the focused bag. The detailed information may include, for example, information indicating the current amount remaining in the bag, the target amount, and the achievement ratio. As a matter of course, the target amount and the achievement ratio are displayed only when the target amount associated with the bag is set.

Herein, the term "focus" is used to describe the state in which a particular one of items displayed on the screen is selected such that a particular operation will be performed on the selected item.

The new bag creation button 59 is a button which is used when a new bag is created.

When the user wants to create a new bag, if the user operates the mouse so that the new bag creation button 59 is pointed to by the pointer, and the user then clicks the left button on the mouse, the bag setting module 45 displays a new bag creation window. If the user inputs data needed for creation of a bag via the new bag creation window, the bag setting module 45 creates the new bag. An example of the new bag creation window is shown in Fig. 6.

The delete button 60 is used to delete a bag.

When the user wants to delete a particular bag, the user operates the mouse so that the pointer points to the name of the bag to be deleted and the user clicks the left button on the mouse so that the focus is switched to the bag.

Thereafter, if the delete button 60 is pointed to by the pointer and is left-clicked, the bag setting module 45 deletes the bag. The amount which was stored in the deleted bag is displayed in the form of bill icons in the credited/debited amount display area 55. If the user drags and drops the bill icons onto a desired bag, the amount is transferred into that bag.

Fig. 6 shows an example of a new bag creation window.

The new bag creation window 65 is popped up when the new bag creation button 59 is clicked. Herein, "popping up a window" refers to displaying the window on the screen. The new bag creation window 65 is displayed by a function of the bag setting module 45 (Figs. 3A and 3B).

The new bag creation window 65 includes a bag name field 66. The use assigning an arbitrary name such as "traveling abroad" to a new bag so as to indicate the purpose of the deposit by inputting the name into the bag name field. The bag name is stored into the amount-in-bag data 43.

In a target setting switch field 67, the user can select whether a target is set or not. If the "set target" radio button is checked, input target data is stored into the target data 44.

A target amount field 68 is used to input a target amount of deposit desired by the user.

A target date field 69 is used to input a date by which the target amount input by the user into the target amount field 68 should be achieved.

If an OK button 70 is clicked, the data input by the user is transmitted to the bank server 5, and the amount-in-bag data 43 and the target data 44 are updated.

In the example shown in Fig. 6, the focus is on the bag of "personal computer", and detailed information associated with the bag of "personal computer" is displayed in the detailed information area 58. From the information displayed in the detailed information area 58, the user can recognize that the target amount of ¥300,000 is set to the bag of "personal computer" and the current amount stored in the bag is "102,000". Furthermore, it is also displayed that the current achievement ratio (ratio of the current amount stored in the bag to the target amount) is 34%.

Fig. 7 shows an example of a divide-into-bags screen which is displayed when money has been put into the account of the user.

If money has been put into the account of the user, the put-into-bag module 46 displays icons representing bills of the amount put into the account in the credited/debited amount display area 55.

Money is put into the account of the user when, for example, a salary paid to the user is transferred into the account of the user. At this stage, the money put into the account has not been divided into bags.

¥500, ¥100, and ¥10 are indicated by icons representing coins of ¥500, ¥100, and ¥10, respectively. Depending on the amount, the money may be indicated by icons representing bills which are not actually issued, such as a ¥1,000,000 bill or a ¥100,000 bill.

The total amount of the amounts of icons displayed in the credited/debited amount display area 55 is equal to the amount put into the account of the user.

By dragging and dropping an icon displayed in the credited/debited amount display area 55 onto the name of a desired bag, the user can add the amount indicated by the icon to the current amount of the bag. Note that the amount indicated by the icon is virtually transferred from the account of the user and thus actual transfer of money from the account of the user does not occur.

In the example shown in Fig. 7, ¥20,000 has been put into the account of the user, and the user transfers ¥10,000 of the total of ¥20,000 to the bag of "personal computer" 76.

More specifically, ¥10,000 is added to the current amount 77 of the bag of "personal computer" 76 by dragging and dropping a ¥10,000-bill icon displayed in the credited/debited amount display area 55 onto the bag of "personal computer".

In response, the put-into-bag module 46 (Figs. 3A and 3B) updates the amount-in-bag data 43.

Fig. 8 shows the one-click change function.

When money is put into the account of the user, the money is displayed in the form of icons representing bills and/or coins, as shown in Fig. 7.

For example, when a ¥10,000-bill icon is displayed, the user may want to divide ¥10,000 such that ¥5,000 is transferred to a bag and ¥5,000 is transferred to another bag.

In such a case, if the icon displayed in the credited/debited amount display area 55 is right-clicked by operating the mouse, the icon is divided into icons representing smaller-amount bills. By dragging and dropping icons created by means of money change function onto desired bags, the user can divide the amount originally indicated by the single icon and can transfer the divided amounts to a plurality of bags.

In the example shown in Fig. 8, ¥10,000 has been put into the account of the user, and the money put into the account is displayed by an icon 80 representing a ¥10,000 bill.

If the user operates the mouse so that the icon 80 is pointed to by the pointer 87 and if the user clicks the right button on the mouse, the icon 80 is divided into icons 81 to 86 wherein the icon 81 represents a ¥5,000 bill and the icons 82 to 86 represent ¥1,000 bills.

By dragging and dropping the icons 81 to 86 onto desired bags, the user can transfer the money to the bags.

The one-click change capability used when money has been put into the account is provided by the put-into-bag module 46.

Fig. 9 shows an example of divide-into-bags screen which is displayed when money has been withdrawn from the account of the user.

For example, if the user has withdrawn money directly from the account of the user, or if a gas bill is paid from the account, the money withdrawn from the account is displayed in the form of bills or coins in the credited/debited amount display area 55. Note that the money indicated by the icons has been already withdrawn from the account of the user, and thus the money is not included in the current amount of the account.

As described above, when money has been withdrawn from the account of the user, the money is displayed in the form of icons as in the case in which money has been put into the account.

By dragging and dropping icons onto one or more particular bags, the user can divide the reduction in the account so that the reduction is shared by the bags. This means that money has been virtually withdrawn from the bags.

In the example shown in Fig. 9, the user has withdrawn ¥1,000 from the account to purchase a tennis ball.

The withdraw-from-bag module 48 (Figs. 3A and 3B) recognizes, from data transmitted from the user ledger 41, that ¥1,000 has been withdrawn from the account of the user, and the withdraw-from-bag module 48 displays an icon 91 representing a ¥1,000 bill in the credited/debited amount display area when the user displays the divide-into-bags screen.

If the user drags and drops the icons 91 onto the bag of "club activity", withdrawing of ¥1,000 from the account to purchase the tennis ball is allotted to the bag 92 of "club activity". As a result, the current amount 93 of the bag 92 is reduced by ¥1,000.

In response, the withdraw-from-bag module 48 updates the amount-in-bag data 43.

The money displayed in the credited/debited amount display area 55 can be changed by means of one-click change capability, as in the case in which money has been put into the account. However, in the case in which money has been withdrawn, the one-click change capability is provided by the withdraw-from-bag module 48.

In a case in which both putting money into the account of the user and withdrawing money from the account have been performed, the credited/debited amount display area 55 is displayed in a two-layer form so that information about the money put into the account is displayed (in the form of icons representing bills or coins) in an upper layer and information about the money withdrawn from the account is displayed (in the form of icons representing bills or coins) in a lower layer.

By dragging and dropping those icons, the user can attribute the putting and the withdrawing of money into and from the account to putting and withdrawing of money into and from specified bags.

When the user transfer money into a bag, the put-into-bag module 46 operates, while the withdraw-from-bag module 48 operates when money is withdrawn from a bag.

Although in the present embodiment, putting and withdrawing money into and from a bag is represented in a visualized fashion using icons, the manner of representing putting and withdrawing money is not limited to that employed in the present embodiment.

For example, a special bag may be specified in advance so that when a certain amount of money has been put or withdrawn into or from the account of the user, that amount of money is automatically put or withdrawn into or from the specified bag. In a case in which a certain amount of money has been withdrawn for a certain use from the account of the user and thus that amount of money has been automatically withdrawn from the specified special bag, the user may return that amount of money to the bag specified as the special bag from another bag specified for that use.

For example, in a case in which a bag of "miscellaneous" is specified as the special bag, if ¥1,000 is withdrawn from the account of the user, ¥1,000 is automatically withdrawn from the bag of "miscellaneous".

In the case in which that money of ¥1,000 was used to purchase a learning material, the user takes ¥1,000 out of the bag of "for purchasing learning materials" and puts it into the bag of "miscellaneous". More specifically, the transfer of money is performed as follows. If the bag of "for purchasing learning materials" is double-clicked (clicked twice successively) with the mouse, the money stored in that bag is displayed in the form of icons in the credited/debited amount display area 55. Thereafter, if an icon of ¥1,000 is dragged and dropped onto the bag of "miscellaneous", ¥1,000 is transferred thereinto.

Fig. 10 shows an example of a divide-into-bags screen in which a target achievement graph is displayed.

The detailed information area 58 includes a graph button 95. If the user left-clicks the graph button 95 with the mouse, a target achievement graph 96 associated with the focused bag is displayed.

More specifically, the target achievement graph 96 is produced such that the analysis module 47 (Figs. 3A and 3B) acquires target data associated with the bag from the target data 44 and also acquired data indicating the history of the amount stored in the bag from the amount-in-bag data 43, and then the analysis module 47 produces the target achievement graph 96 in accordance with the acquired data.

The target achievement graph 96 includes a line indicating the target of deposit assigned to the bag and a line indicating the history of the actual amount and the current amount stored in the bag.

The target achievement graph 96 allows the user to visually and intuitively recognize the degree of achievement relative to the target.

In the present embodiment, all or part of the amount stored in one bag can be transferred into another bag.

For example, in a case in which ¥10,000 is transferred from the bag of "personal computer" to the bag of "for free use", the transfer can be performed as follows.

First, the current amount of the bag of "personal computer" is right-clicked. In response, a window, in which the current amount remaining in the bag is displayed in the form of icons representing bills of ¥100,000, ¥10,000, and so on, is popped up on the divide-into-bags screen.

In a case in which ¥20,000 is transferred to the bag of "for free use", two icons representing ¥10,000 bills are dragged and dropped onto the current amount of the bag of "for free use".

In response, the current amount of the bag of "personal computer" is reduced by ¥20,000 and the current amount of the bag of "for free use" is increased by ¥20,000.

As described above, all or part of the amount stored in one bag can be transferred to another bag in a visual manner.

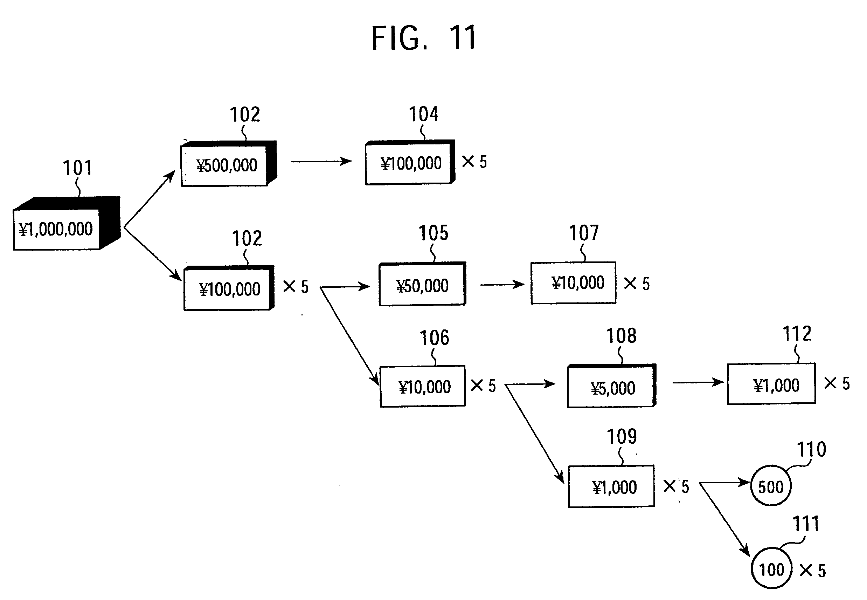

Fig. 11 shows an example of a manner in which icons representing bills or coins are changed by means of the one-click change capability.

Those icons are displayed in the credited/debited amount display area 55.

First, an icon 101 representing a ¥1,000,000 bill is changed into an icon 102 representing a ¥500,000 bill and five icons 103 representing ¥100,000 bills. The ¥500,000-bill icon 102 is changed into five icons 104 representing ¥100,000 bills.

The icons 103 representing ¥100,000 bills are changed into a icon 105. representing a ¥50,000 bill and five icons 106 representing ¥10,000 bills.

The icon 105 representing the ¥50,000 bill is changed into five icons 107 representing ¥10,000 bills.

The icons 106 representing ¥10,000 bills are changed into an icon 108 representing a ¥5,000 bill and five icons 109 representing ¥1,000 bills.

The icon 108 representing the ¥5,000 bill is changed into five icons 112 representing ¥1,000 bills.

The icons 109 representing ¥1,000 bills are changed into an icon 110 representing a ¥500 coin and five icons 111 representing ¥100 coins.

Furthermore, although not shown in the figure, a ¥500 coin is changed into five ¥100 coins, and a ¥100 coin is changed into ten ¥10 coins.

In a case in which a plurality of icons having small amounts are changed into an icon having a large amount, the resultant icon represents a bill having an amount equal to the sum of original icons. For example, if three ¥1,000-bill icons are combined together, one ¥3,000-bill icon is obtained.

By way of another example, one ¥100-bill icon and one ¥1,000-bill icon can be combined into one ¥1,100-bill icon.

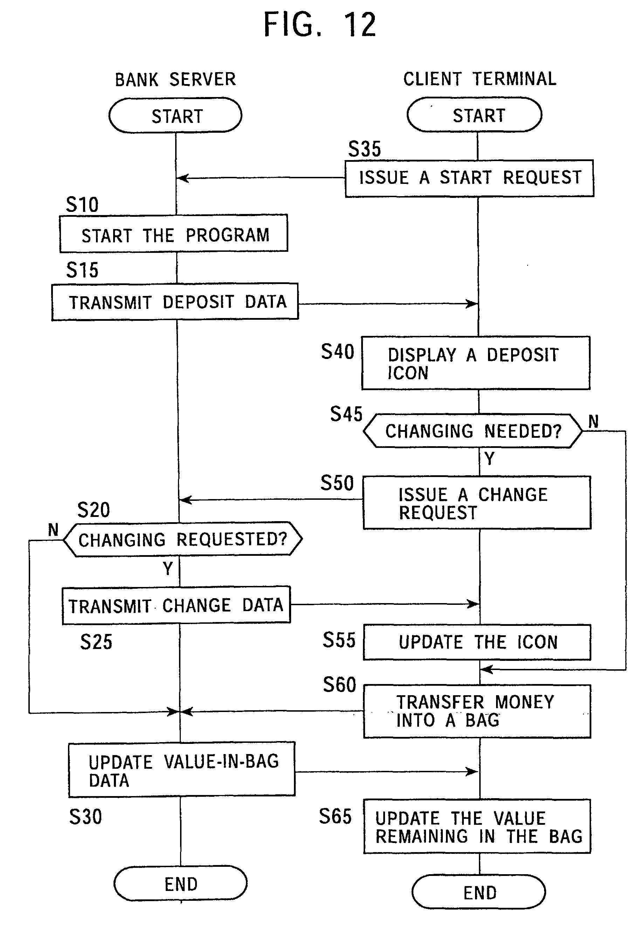

Fig. 12 is a flow chart showing operations of the bank server 5 and the client terminal 7 performed when money is put into the account of the user.

First, the operation of the bank server 5 is described.

If the bank server 5 receives a request for starting the put-into-bag program 42 from the client terminal 7, the bank server 5 starts the put-into-bag program 42 (step 10).

The put-into-bag module 46 then acquires the amount of money put into the account of the user from the user ledger 41 and transmits put-into-account data, which is to be used by the client terminal 7 to display put-into-account money in the form of icons, to the client terminal 7 (step 15).

Although in the present description, for the purpose of simplicity, the transmission of the put-into-account data to the client terminal 7 is assumed to be performed by the put-into-bag module 46, the transmission of the put-into-account data is actually performed by the CPU 29 of the bank server 5 in accordance with the program of the put-into-bag module 46.

Thereafter, the put-into-bag module 46 determines whether a money change request has been issued from the client terminal 7, that is, whether the user wants to change money by means of the one-click change capability (step 20).

If it is determined that a change request has been issued by the client terminal 7 (if the answer of decision step 20 is yes), the put-into-bag module 46 transmits money change data to the client terminal 7 (step 25). The money change data is used by the client terminal 7 to display icons representing small-amount bills changed from the original bill icons indicating the money put into the account.

In a case in which put-into-bag data (data indicating the bag into which money has been put by the user and indicating the amount put into the bag) is received without receiving a change request (that is, in a case in which the answer of decision step 20 is no), or in a case in which put-into-bag data is received from the client terminal 7 after change data was transmitted in step 25, the put-into-bag module 46 updates the amount-in-bag data 43 in accordance with the received data and transmits the updated current amount to the client terminal 7 (step 30).

Now, the operation of the client terminal is described.

Herein, it is assumed that the user has already logged in to the bank server 5 and the current value display screen is displayed on the display 20.

The user clicks on the start button of the put-into-bag program 42 displayed on the current value display screen thereby issuing a request for starting the put-into-bag program 42 (step 35).

In response, the display module 49 displays the divide-into-bags screen on the display 20 of the client terminal 7.

The client terminal 7 then receives put-into-account data from the put-into-bag module 46 and displays the amount put into the account in the form of icons representing bills and/or coins (step 40).

If the user wants to perform one-click change (yes in step 45), the user transmits a change request to the bank server 5 (step 50). In this step, the change request is transmitted when the icon is right-clicked.

If the client terminal 7 receives the change data output from the put-into-bag module 46, the client terminal 7 changes the present icons into icons of smaller money amounts (step 55).

If money is put into a desired bag by dragging and dropping one or more icons updated in step 55 or one or more original icons without performing money change (no in step 45) onto the desired bag (step 60), updated amount-in-bag data is transmitted from the bank server 5. The client terminal 7 updates the current amount of the bag in accordance with the received data and displays the resultant amount (step 65 ) .

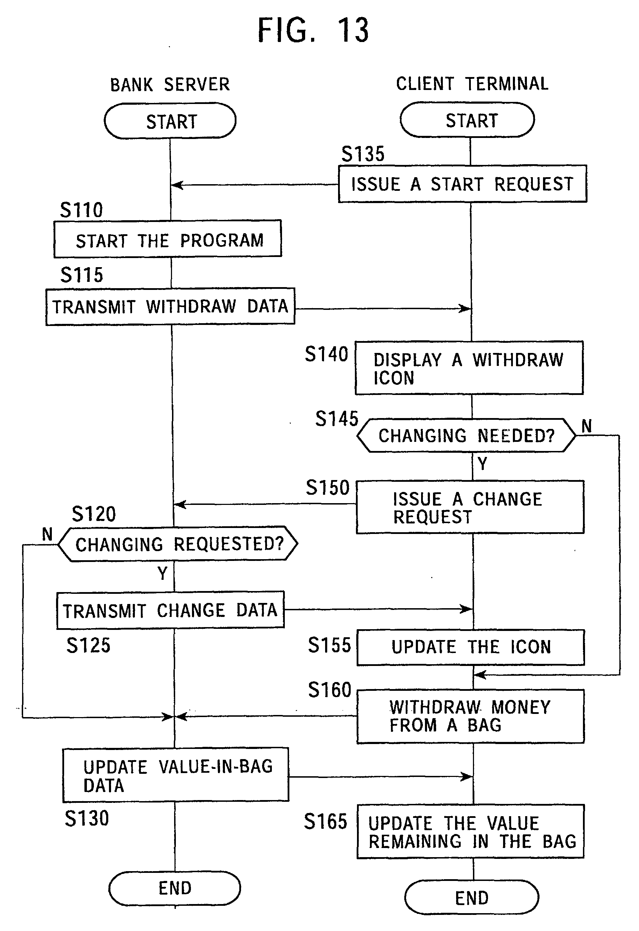

Fig. 13 is a flow chart showing the operation of the bank server 5 and the operation of the client terminal 7 performed in response to withdrawing of money from the account of the user.

First, the operation of the bank server 5 is described.

If the bank server 5 receives a request for starting the put-into-bag program 42 from the client terminal 7, the bank server 5 starts the put-into-bag program 42 (step 110).

The withdraw-from-bag module 48 then acquires the amount of money withdrawn from the account of the user from the user ledger 41 and transmits withdrawn-amount data, which is to be used by the client terminal 7 to display withdrawn-from-account money in the form of icons, to the client terminal 7 (step 115).

Although in the present description, for the purpose of simplicity, the transmission of the withdrawn-amount data to the client terminal 7 is assumed to be performed by the withdraw-from-bag module 48, the transmission of the withdrawn-amount data is actually performed by the CPU 29 of the bank server 5 in accordance with the program of the put-into-bag module 46.

Thereafter, the withdraw-from-bag module 48 determines whether a money change request has been issued from the client terminal 7, that is, whether the user wants to change money by means of the one-click change capability (step 120).

If it is determined that a change request has been issued by the client terminal 7 (if the answer of decision step 120 is yes), the withdraw-from-bag module 48 transmits money change data to the client terminal 7 (step 125). The money change data is used by the client terminal 7 to display icons representing small-amount bills changed from the original bill icons indicating the money withdrawn from the account.

In a case in which withdrawn-from-bag data (data indicating the bag from which money has been withdrawn by the user and indicating the withdrawn amount) is received from the client terminal 7 without receiving a change request (that is, in a case in which the answer of decision step 120 is no), or in a case in which withdrawn-from-bag data is received from the client terminal 7 after change data was transmitted in step 125, the withdraw-from-bag module 48 updates the amount-in-bag data 43 in accordance with the received data and transmits the updated current amount to the client terminal 7 (step 130).

Now, the operation of the client terminal is described.

Herein, it is assumed that the user has already logged in to the bank server 5 and the current value display screen is displayed on the display 20.

The user clicks on the start button of the put-into-bag program 42 displayed on the current value display screen thereby issuing a request for starting the put-into-bag program 42 (step 135).

In response, the display module 49 displays the divide-into-bags screen on the display 20 of the client terminal 7.

The client terminal 7 then receives withdrawn-amount data from the withdraw-from-bag module 48 and displays the amount put into the account in the form of icons representing bills and/or coins (step 140).

If the user wants to perform one-click change (yes in step 145), the user transmits a change request to the bank server 5 (step 150). In this step, the change request is transmitted when the icon is right-clicked.

If the client terminal 7 receives the change data output from the withdraw-from-bag module 48, the client terminal 7 changes the present icons into icons of smaller money amounts (step 155).

If money is withdrawn from a desired bag by dragging and dropping one or more icons updated in step 155 or one or more original icons without performing money change (no in step 145) onto the desired bag (step 160), updated amount-in-bag data is transmitted from the bank server 5. The client terminal 7 updates the current amount of the bag in accordance with the received data and displays the resultant amount (step 165).

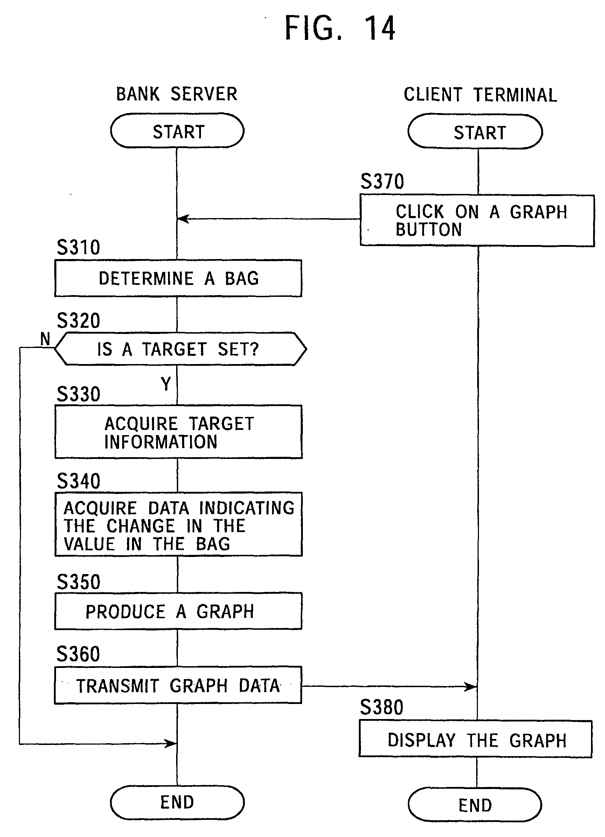

Fig. 14 is a flow chart showing the operation of the bank server 5 and the operation of the client terminal 7 performed to display the target achievement graph on the divide-into-bags screen.

Herein, it is assumed that the put-into-bag program 42 has already been started and the divide-into-bags screen is displayed on the display 20 of the client terminal 7.

If the analysis module 47 receives a graph production request from the client terminal 7, the analysis module 47 determines the bag the graph for which is requested to be produced (step 310).

The analysis module 47 then checks the target data 44 to determine whether a target is set for the bag (step 320).

If no target is set for the bag (no in step 320), the process is ended without performing anything.

In a case in which it is determined that a target is set for the bag (yes in step 320), the analysis module 47 acquires information associated with the target assigned to the bag from the target data 44 (step 330).

Thereafter, the analysis module 47 acquires data indicating history of the amount stored in the bag from the amount-in-bag data 43 (step 340).

The analysis module 47 produces data used to display the graph from the information of the target and the history of the amount stored in the bag (step 350).

The analysis module 47 then transmits the produced data to the client terminal 7 (step 360).

Now, the operation of the client terminal 7 is described.

First, the user switches the focus to a desired bag a graph for which is to be produced. The user then left-clicks on the graph production button 95 in the detailed information area 58.

In response, the CPU 11 of the client terminal 7 transmits graph production request data to the bank server 5.

If the client terminal 7 receives data used to produce the graph transmitted from the bank server 5, the client terminal 7 displays the graph on the divide-into-bags screen (step 380).

In a case in which no data is transmitted from the bank server 5, the client terminal 7 displays nothing.

The first embodiment described above provides the following advantages.

When money has been put into the account of the user, planned use is assigned to the money. This allows the user to easily manage the money in an intuitive manner and use the money in accordance with the plan.

The user can easily recognize the categories of the planned use assigned to respective virtual divisions of the current amount of the deposit account. This allows the user to easily use the deposited money in accordance with the plan without wasting money.

The user can set the deposit target and can easily check the degree of achievement relative to the target. This causes the user to have and maintain a motivation to save money.

Although the construction and the operation of the present invention have been described above with reference to the specific embodiment, the invention is not limited to the above-described construction and operation according to the embodiment but various modifications are possible without departing from the scope of the invention as defined by the claims.

Although in the present embodiment, the put-into-bag program is installed on the bank server 5, the put-into-bag program may be installed on another apparatus such as the client terminal 7.

In this case, the put-into-bag module 46 and the withdraw-from-bag module 48 are linked to an electronic bankbook so that putting and withdrawing of money into or from the account of user can be detected. The electronic bankbook is a database in which data having transaction items similar to those described in normal paper bankbooks is recorded. The electronic bankbook is stored in the storage device 16 of the client terminal 7. When the client terminal 7 is connected to the bank server 5, information about money put into or withdrawn from the account is updated.

Alternatively, in the case in which the put-into-bag program 42 is installed on the client terminal 7, the user may manually input information about money put into or withdrawn from the account of the user.

The present embodiment may be applied not only to a bank deposit account but also to a post office account, a securities account, or the like.

Although in the present embodiment, bags associated with a normal deposit account are created, bags may also be created in association with a time deposit account, an investment trust account, or the like.

In the present embodiment, the bank server 5 may have a remind mail transmission capability.

The reminding mail transmission capability allows the bank server 5 to analyze the history of depositing money into bags described in the amount-in-bag data 43 and to, if a specific condition is satisfied, transmit a remind mail (reminder) to an electronic mail address of the user.

For example, when the history of depositing money indicates that the amount put into a certain bag is decreasing, an electronic mail saying "Why haven't you put money into the bag?" is transmitted to the user. If the amount of money stored in a certain bag is approaching the target amount set by the user, an electric mail saying "Save further only ¥xxx yen to achieve the target. Good luck!" may be transmitted to the user.

The timing of transmitting a remind mail, that is, the condition that should be satisfied to transmit a remind mail, may be set, for example, on the basis of the relative amount of deposited money with respect to the target, a predetermined amount, or a predetermined date.

Transmission of a remind mail to the user can cause the user to have a strong motivation to deposit money. Furthermore, transmission of a remind mail to the user can cause the user to have greater trust in the bank and can cause the good relationship between the user and the bank to be maintained.

From the history of putting money into bags, it is possible to determine a pattern in which the user divides money into bags, and the detected pattern may be reflected in the manner of displaying icons of bills or coins.

For example, let us assume herein that ¥100,000 received as a wage for a part-time job is put into the account of the user on a specific day of every month and the user puts ¥5,000 of ¥100,000 into a particular bag. Such a pattern of dividing money into bags is detected from the history data, and one ¥90,000-bill icon and two ¥5,000-bill icons may be displayed when ¥100,000 received as the wage for the part-time job is put into the account of the user. This allows the user to immediately drag and drop a ¥5,000-bill icon onto a desired bag without having to change, for example, a ¥10,000-bill icon into ¥5,000-bill icons by means of the one-click.change function.

As described above, use of the detection means for detecting the put-into-bags/withdraw-from-bags pattern of the user allows particular icons to be displayed in the credited/debited amount display area 55 in accordance with the detected pattern.

### (Modification of the first embodiment)

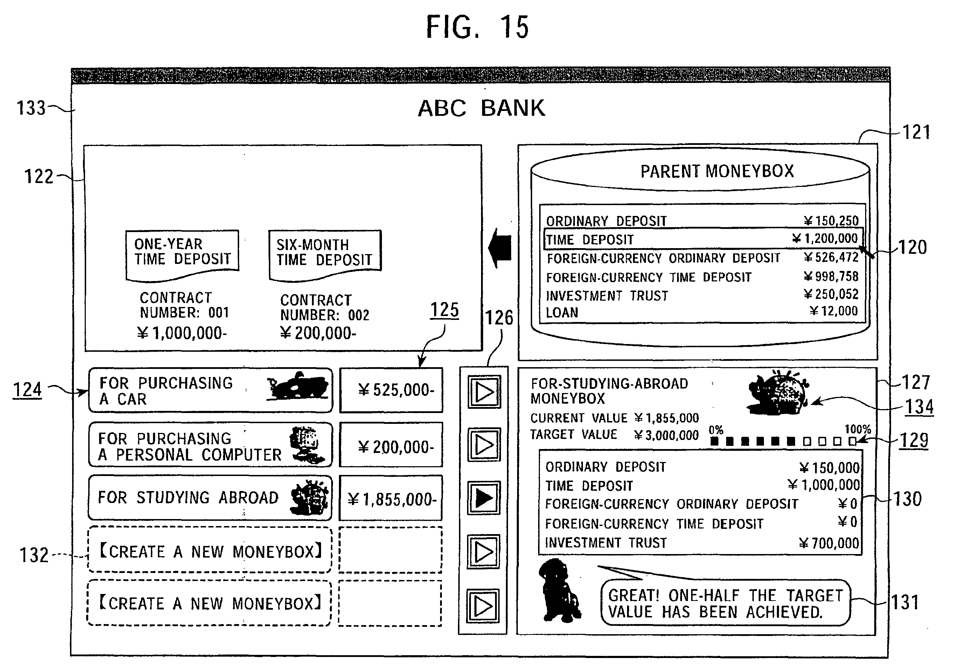

Referring to Figs. 15 to 21, a modification of the first embodiment are described below.

In the first embodiment, ordinary deposit is virtually divided into bags depending on the use of money. In a modified embodiment, in addition to an ordinary deposit, other types of assets such as a time deposit, a foreign-currency ordinary deposit, a foreign-currency time deposit, investment trust, and a loan are also virtually divided and managed in accordance with planned-use categories defined by the user.

In this modified embodiment, a system has a construction similar to that employed in the first embodiment. More specifically, the user ledger 41 (Figs 3A and 3B) stores data of transactions and asset amounts associated with various assets of the user, such as the ordinary deposit, the time deposit, the foreign-currency ordinary deposit, the foreign-currency time deposit, the investment trust, and the loan.

Virtual moneyboxes including a parent moneybox and specific-purpose moneyboxes used to separately manage the above-described various assets for respective purposes are established on a GUI (Graphical User Interface).

The specific-purpose moneyboxes provide virtual sub-accounts for depositing money for specific purposes such as for purchasing a car or a personal computer, and the functions and the purposes thereof are similar to those of the bags employed in the first embodiment. Each specific-purpose moneybox is divided into sub-moneyboxes according to the types of assets such as an ordinary deposit, a time deposit, a foreign-currency ordinary deposit, a foreign-currency time deposit, and investment trust.

As for ordinary deposits and foreign-currency ordinary deposits, sub-moneyboxes are established separately for respective currency types. As for time deposits and foreign-currency time deposits, sub-moneyboxes are established separately for respective contracts. As for investment trust, sub-moneyboxes are established separately for respective units (contract units).

The parent moneybox may include a sub-moneybox which does not belong to any specific-purpose moneybox.

When money is put into or withdrawn from some account of the user, equal amount is put into or withdrawn from the parent moneybox. That is, if money is put into or withdrawn from some asset account of the user and thus a change occurs in the balance of the asset account, the change is reflected in the parent moneybox. The amounts of the assets, divided into the respective moneyboxes are managed by a moneybox setting/managing module established, in stead of the bag setting module 45, in the bank server 5. The amounts remaining in the respective moneyboxes and targets such as target amounts assigned to the respective moneyboxes are described in moneybox data. The moneybox data corresponds to the amount-in-bag data 43 according to the first embodiment.

In the following description, when it is not necessary to distinguish the parent moneybox and the specific-purpose moneyboxes from each other, a simple expression of "moneybox" is used.

The moneybox setting/managing module performs setting associated with moneyboxes and manages the details of the respective moneyboxes.

For example, when money has been put into an ordinary deposit account of the user, the current amount of a ordinary-deposit sub-moneybox included in the parent moneybox is increased by an amount equal to that put into the ordinary deposit account. The user can move an arbitrary part of the money put into the ordinary-deposit sub-moneybox into an arbitrary specific-purpose moneybox.

On the other hand, when money has been withdrawn from the ordinary deposit account of the user, the current amount of the ordinary-deposit sub-moneybox included in the parent moneybox is decreased by an amount equal to that withdrawn from the ordinary deposit account.

The user can also move a desired amount from an ordinary-deposit sub-moneybox in a specific-purpose moneybox to the parent moneybox.

Fig. 15 shows an example of a moneybox screen 133 displayed on the display 20 of the client terminal 7, wherein the moneybox screen 133 corresponds to the divide-into-bags screen shown in Fig. 5.

The moneybox screen 133 includes a parent moneybox area 121, a tray 122, a specific-purpose moneybox area 124, a current saved amount area 125, specific-purpose moneybox selection buttons 126, and an area 127 for displaying detailed information about a specific-purpose moneybox.

In the parent moneybox area 121, asset amounts which have not been moved to any specific-purpose moneybox are displayed for each asset type. Of these asset amounts, asset amounts of foreign currency, such as the amount of the foreign-currency ordinary deposit and the amount of the foreign-currency time deposit are displayed in units of equivalent yen calculated on the basis of the current rate. As for assets such as investment trust whose market price varies, a current amount in units of yen in which the variation is reflected is displayed.

In the tray 122, detailed information about a selected asset in the parent moneybox is displayed in the form of icons.

For example, in the case of an ordinary deposit or a foreign-currency ordinary deposit, detailed information is displayed in the form of icons representing bills or coins. Note that the amount of the foreign-currency ordinary deposit is displayed in equivalent yens calculated on the current rate. In the case of a time deposit or a foreign-currency time deposit, detailed information is displayed in the form of icons representing a contract sheet. In the case if investment trust, detailed information is displayed in the form of a fund icon symbolically representing the fund type thereof.

Selection of an asset in the parent moneybox can be performed, for example, by operating the mouser such that a sub-moneybox assigned to a desired asset is pointed to by the pointer 120 and then clicking the left button of the mouse.

Although a detailed process is not described herein, a desired amount of an asset can be moved from the parent moneybox into a specific-purpose moneybox by means of dragging and dropping an icon onto the specific-purpose moneybox.

In the example shown in Fig. 15, the time-deposit sub-moneybox is selected, and detailed information (contract numbers, contracted amounts, and periods) about the time deposits is displayed in the form of contract icons in the tray 122.

Hereinafter, an operation of selecting an icon or a button by clicking on it with the mouse after pointing to the icon or the button on the screen with the pointer 120 will be denoted simply as "clicking" an icon or a button.

In the specific-purpose moneybox area 124, specific-purpose moneyboxes defined by the user are displayed. In each specific-purpose moneybox, characters representing the purpose and a purpose icon symbolically representing the purpose are displayed so that the specific-purpose moneybox can be identified.

In the example shown in Fig. 15, in a specific-purpose moneybox for "studying abroad", a purpose icon 128 representing a moneybox having the shape of a pig is displayed. A purpose icon selected by the user from various prepared icons can be employed. In an undefined specific-purpose moneybox area, a new moneybox creation button 132 is displayed. If the new moneybox creation button 132 is selected by clicking on it with the mouse, a new moneybox creation window is popped up so that the user can create a new specific-purpose moneybox.

A current amount are 125 is disposed on the right side of the specific-purpose moneybox area 124, and the current amounts of the respective specific-purpose moneyboxes are displayed in the current amount area 125.

The current amount displayed in the current amount area 125 indicates the sum of all assets belonging to the specific-purpose moneybox in units of yen or calculated equivalent yen. Because the amounts of assets such as foreign currency or investment trust vary depending on the market amounts, the variation in the amount is reflected in the current amount displayed in the current amount area 125 so that the current amount displayed therein indicates the actual total current amount on the basis of the market amounts.

Thus, the user can easily know the current amount in units of yen on the basis of market price for each specific-purpose moneybox.

The specific-purpose moneybox selection button 126 is a button for selecting a specific-purpose moneybox whose detailed information is displayed in the details-of-specific-purpose-moneybox display area 127.

One specific-purpose moneybox selection button 126 is disposed for each specific-purpose moneybox so that a specific-purpose moneybox is selected when a corresponding specific-purpose moneybox selection button 126 is clicked on.

The details-of-specific-purpose-moneybox display area 127 includes a purpose icon area 134 in which a purpose icon assigned to the corresponding specific-purpose moneybox is displayed. In the degree-of-achievement field 129, the total current amount of the corresponding specific-purpose moneybox and the target amount are displayed in units of yen, and the achievement ratio of the amount of this specific-purpose moneybox is displayed in % in the form of a graph or a chart so that the achievement ratio can be visually recognized.

In the details-of-assets area 130, the amounts of respective assets stored in the sub-moneyboxes in this specific-purpose moneybox are displayed. For foreign-currency assets, the amounts are displayed in equivalent yen calculated on the basis of the current rate. In the case of investment trust, current market prices are displayed.

In the watcher character message area 131, a message from a watcher character assigned by the user to the specific-purpose moneybox is displayed.

The watcher character refers to a cartoon character assigned to each specific-purpose moneybox and serving to watch the assets of the user and assist the user to achieve the target. The watcher character provides to the user not only a notice but also a message such as "I am in a bad mood" irreverent to the banking matters to maintain good communication with the user.

A large number of watcher characters having various shapes such as a dog or a bear are prepared so that the user can select a desired watcher character from them.

The properties of each watcher character include a cleverness point and an emotion point.

The cleverness point and the emotion point are varied in response to the action of the user. For example, if the user moves a certain amount of asset from the parent moneybox to a specific-purpose moneybox, the cleverness point is increased by 1.

The content of the message issued by the watcher character varies depending on the cleverness property and the emotion property.

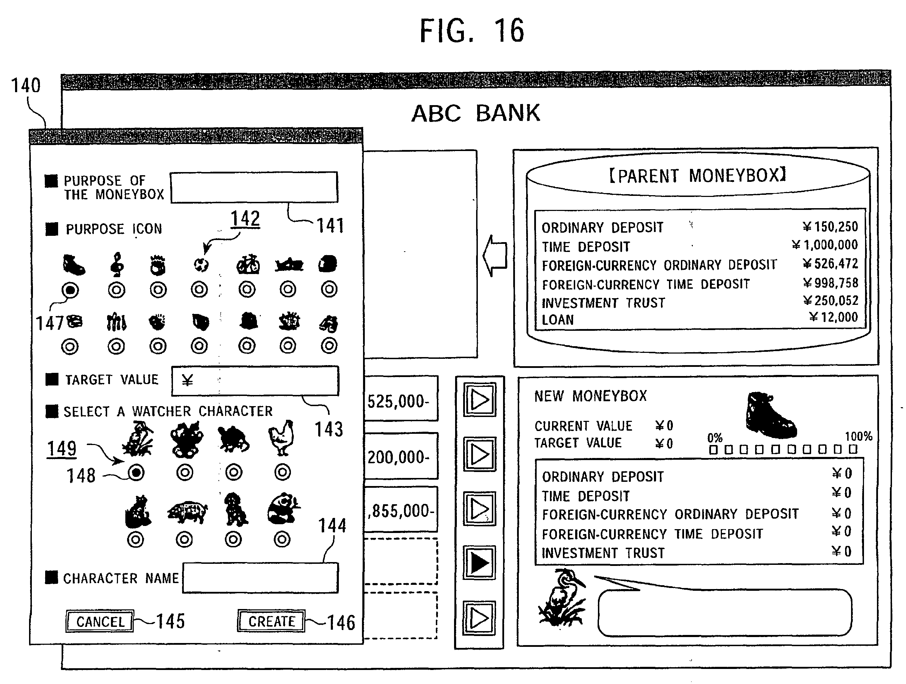

Fig. 16 shows an example of a new moneybox creation window 140 displayed in a popped-up form on the display 20 of the client terminal 7, wherein the new moneybox creation window 140 corresponds to the new bag creation window shown in Fig. 6.

The new moneybox creation window 140 is a window used to create a new specific-purpose moneybox. The new moneybox creation window 140 appears in the popped-up fashion on the screen when a new moneybox creation button 132 (Fig. 15) is clicked on.

A purpose setting field 141 is a field in which a purpose or planned use to be assigned to the specific-purpose moneybox is input. For example, when the purpose is to save money for purchasing a car, words such as "for purchasing a car" is input so as to straightforwardly indicate the purpose.

In a purpose icon area 142, various icons symbolically representing purposes of savings are displayed so that a desired purpose icon to be assigned to the specific-purpose moneybox is selected from them. A radio button 147 is disposed below each purpose icon so that if a radio button is checked, a corresponding purpose icon is assigned to the specific-purpose moneybox.

The radio button refers to a button which is used to select one of selectable items, wherein if one radio button is selected, selection of any other radio button is cancelled.

A target amount setting field 143 is a field in which a target amount of saving is input. The achievement ratio is calculated on the basis of the target amount input in this field. In the present embodiment, unlike the first embodiment in which the degree of achievement for a bag is calculated on the basis of the amount originating from the ordinary deposit, the degree of achievement for a specific-purpose moneybox is calculated on the basis of the sum of amounts, in units of yes based on the current market prices, stored in sub-moneyboxes assigned to respective types of assets, such as a normal deposit, a time deposit, a foreign-current normal deposit, a foreign-currency time deposit, and investment trust.

In a watcher character selection area 149, various watcher characters are displayed so that a watcher character to be assigned to the specific-purpose moneybox can be selected from them. A radio button 148 is disposed below each watcher character so that if a radio button is checked, a corresponding watcher character icon is selected and assigned to the specific-purpose moneybox.

In a name field 144, a name of the character selected in the watcher character selection field 149 is input. The name input in this field is assigned to the watcher character.

A cancel button 145 is used to cancel data input in the new moneybox creation window 140. If this cancel button 145 is clicked on before clicking on a creation button 146, all items input in the new moneybox creation window are cancelled and the new moneybox creation window 140 disappears from the display 20.

The creation button 146 is used to create a specific-purpose moneybox in accordance with the items input in the new moneybox creation window 140. If this button is clicked on, the items input in the new moneybox creation window 140 are fixed, and a new specific-purpose moneybox is created.

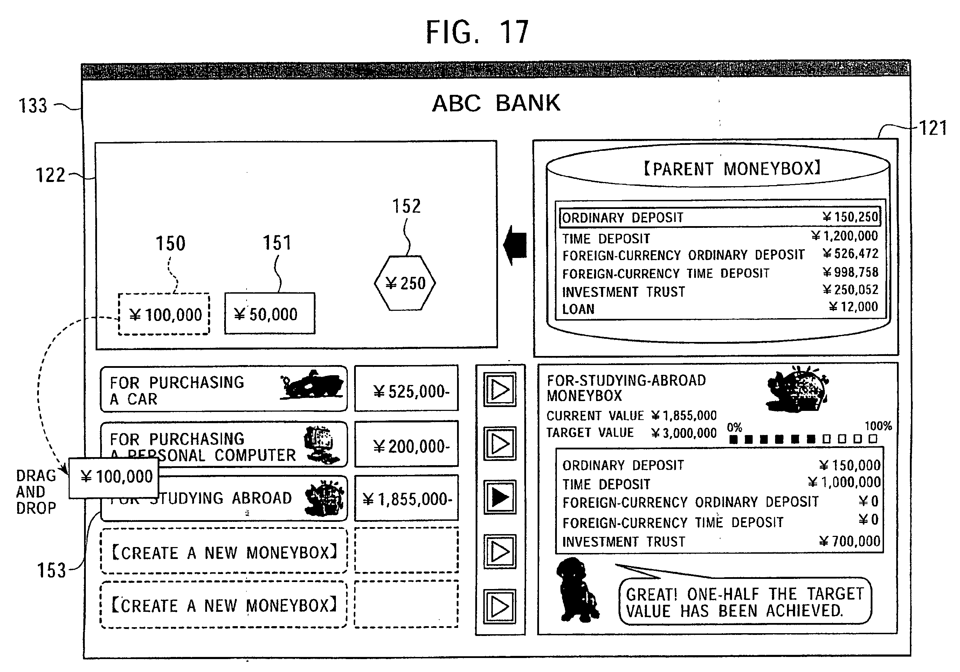

Fig. 17 shows a manner in which a certain amount of asset is moved from the parent moneybox to a specific-purpose moneybox on the moneybox screen 133, wherein the moneybox screen corresponds to the divide-into-bags screen according to the first embodiment described earlier with reference to Fig. 7.

In the example shown in Fig. 17, ¥100,000 is moved from the ordinary deposit sub-moneybox of the parent moneybox to a specific-purpose moneybox "for studying abroad".

In this example, the user first clicking on the ordinary deposit sub-moneybox in the parent moneybox area 121 thereby selecting it.

In response, the asset stored in the ordinary deposit sub-moneybox is displayed in the from of money icons in the tray 122.

In the example shown in Fig. 17, the current amount remaining in the ordinary deposit sub-moneybox in the parent moneybox is ¥150,250, and thus money icons including a ¥100,0000 icon 150, a ¥50,000 icon 151, and a ¥250 icon 152 are displayed in the tray 122. As described above, the current amount of the ordinary deposit sub-moneybox is displayed by money icons including a money icon having a rather large amount.

Thereafter, if the ¥100,000 icon 150 is dragged and dropped onto the specific-purpose moneybox "for studying abroad" 153, ¥100,000 is moved from the ordinary deposit sub-moneybox of the parent moneybox to the ordinary deposit sub-moneybox of the specific-purpose moneybox "for studying abroad" 153.

As described above, an asset can be moved from the parent moneybox to a specific-purpose moneybox by first selecting a type of asset in the parent moneybox area 121 thereby displaying the detailed information thereof in the form of icons in the try 122 and then dragging and dropping one or more icons onto the specific-purpose moneybox. Herein, if necessary, as will be described in detail later, a money icon having a large amount can be changed into money icons having smaller amounts on the tray 122.

In the example described above, an ordinary deposit is moved from the parent moneybox to a specific-purpose moneybox. Other types of assets can also be moved as described below.

In the case of a foreign-current ordinary deposit, the current amount is displayed in equivalent yen calculated on the current rate, and the current amount is displayed by money icons including a large amount as in the case of the ordinary deposit. Movement to a specific-purpose moneybox can be performed in a similar manner as in the case of the ordinary deposit. The bank server 5 calculates the equivalent amount of the foreign currency type of the foreign currency deposit of interest and manages the amount in units of that foreign currency.

In the case of a time deposit or a foreign-currency time deposit, asset movement can be performed by dragging and dropping one or more contract icons onto a specific-purpose moneybox.

In the case of investment trust, asset movement can be performed as follows. First, a fund icon is moved to a desired specific-purpose moneybox. In response, a window including a message "How many units do you want to move?" or the like is displayed in a popped-up fashion. If the user inputs the number of units, the specified number of units of investment trust is moved to the specific-purpose moneybox.

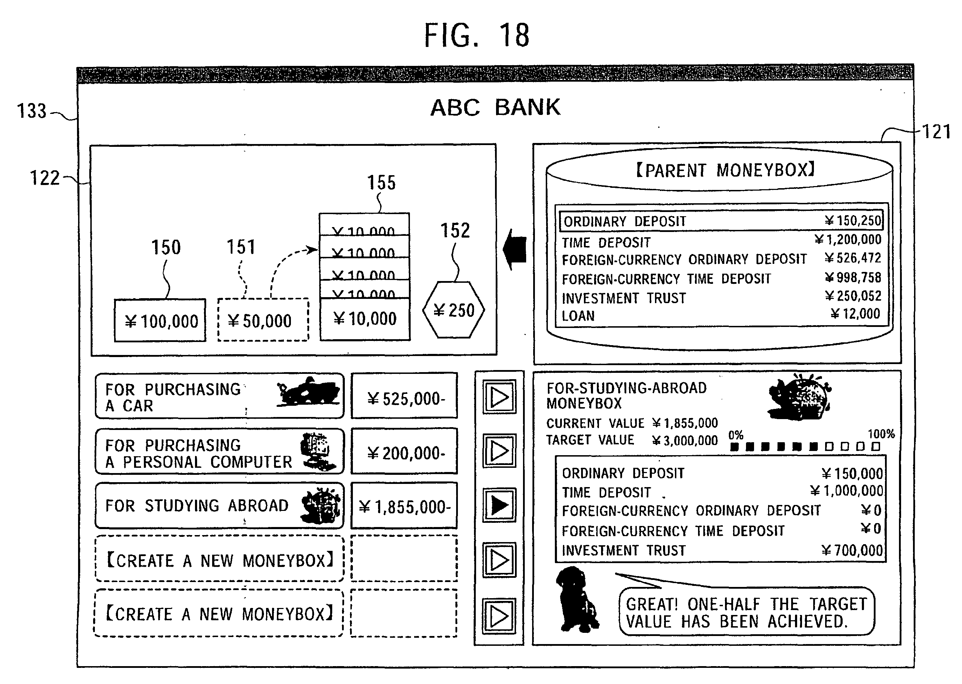

Fig. 18 shows a manner in which a money icon is virtually changed into money icons having a smaller amount. This process is.corresponds to that according to the first embodiment described above with reference to Fig. 8.

In the example shown in Fig. 18, a ¥50,000 icon 151 is virtually changed into ¥10,000 icons 155. The changing is performed by dragging, using the mouse, a money icon to the right on the screen. By performing such an operation, a desired money icon can be changed into money icons having an amount smaller by one order. The change operation may be performed in a one-click fashion as in the first embodiment.

Furthermore, if a money icon is dragged and dropped onto another money icon, they are combined into a single money icon having an amount equal to the sum.

Changing a money icon into money icons having an amount smaller than the original money icon makes it possible to move a desired amount, for example into a specific-purpose moneybox. For example, when a ¥50,000 icon 151 is displayed, ¥10,000 of the ¥50,000 icon 151 can be moved.

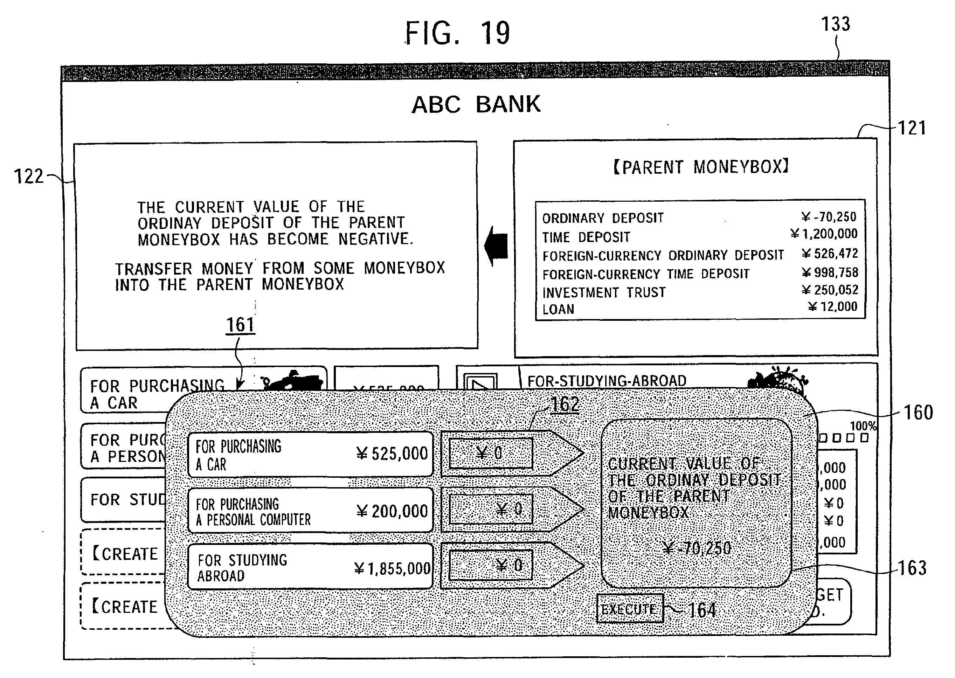

Fig. 19 shows a manner in which money is put into the parent moneybox to recover a negative amount, wherein this process corresponds to that according to the first embodiment described earlier with reference to Fig. 9.

Note that the parent moneybox and the specific-purpose moneyboxes including sub-moneyboxes.assigned to the respective types of assets are all virtual moneyboxes, and thus movement of an asset among moneyboxes does not result in actual movement of the asset. However, actual movement of an asset into or from the account of the user results in an increase or a reduction in the amount of the parent moneybox, and thus actual withdrawing of an asset from the account can cause the amount of the parent moneybox to become negative. In such a case, when the user logs in to the bank server 5, a replenishment window 160 is automatically displayed in a popped-up fashion on the moneybox screen 133 to prompt the user to replenish the parent moneybox by moving an asset from a specific-purpose moneybox to the parent moneybox. That is, when the amount of the parent moneybox has become negative, the user is prompted to recover the negative amount.

In the example shown in Fig. 19, the amount of the ordinary deposit sub-moneybox of the parent moneybox has become negative, and the negative amount is recovered by moving an asset from a specific-purpose moneybox to the parent moneybox.

The replenishment window 160 includes a specific-purpose moneybox area 161, replenishment amount fields 162, and a parent-moneybox amount area 163.

One replenishment amount field 162 is assigned to each specific-purpose moneybox so that the amount of money to be moved from a specific-purpose moneybox to the parent moneybox can be specified by inputting the amount of money into a corresponding replenishment amount field 162.

In the parent-moneybox amount area 163, the current amount of the ordinary deposit in the parent moneybox is displayed. This amount changes in real time in response to inputting of an amount of money into any replenishment amount field 162. That is, if an amount of money is input into one of the replenishment amount fields 162, the CPU of the client terminal 7 calculates the sum of the input amount and the amount displayed in the parent-moneybox amount field 163 and replaces the amount displayed in the parent-moneybox amount field 163 with the resultant sum. A file defining the moneybox screen 133, which is transmitted from the bank server 5 to the client terminal 7, includes a program according to which the client terminal 7 performs the operation. More specifically, the CPU operates in accordance with the program included in the file so as to update the amount displayed in the parent-moneybox amount area 163.

If the user clicks on an execute button 164, the amounts of money input in the replenishment amount fields 162 are transmitted to the bank server 5. In response, the moneybox setting/managing module in the bank server 5 updates the moneybox data.

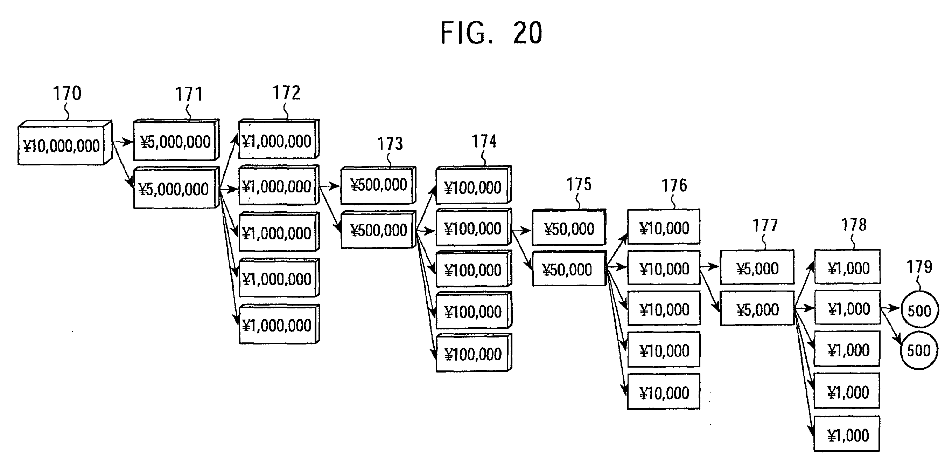

Fig. 20 shows an example of a manner in which a money icon is virtually changed into money icons with smaller amounts, wherein the manner corresponds to that according to the first embodiment described earlier with reference to Fig. 11.

As shown in Fig. 20, a ¥10,000,000 icon 170 is converted into two ¥5,000,000 icons 171, and a ¥5,000,000 icon 171 is converted into five ¥1,000,000 icons 172. A ¥1,000,000 icon 172 is converted into two ¥500,000 icons 173, and a ¥500,000 icons 173 is converted into five ¥100,000 icons 174.

Furthermore, a ¥100,000 icon 174 is converted into two ¥50,000 icons 175, and a ¥50,000 icon is converted into five ¥10,000 icons. A ¥10,000 icon 176 is converted into two ¥5,000 icons, and a ¥5,000 icon 177 is converted into five ¥1,000 icons 178. A ¥1,000 icon 178 is converted into two ¥500 icons 179.

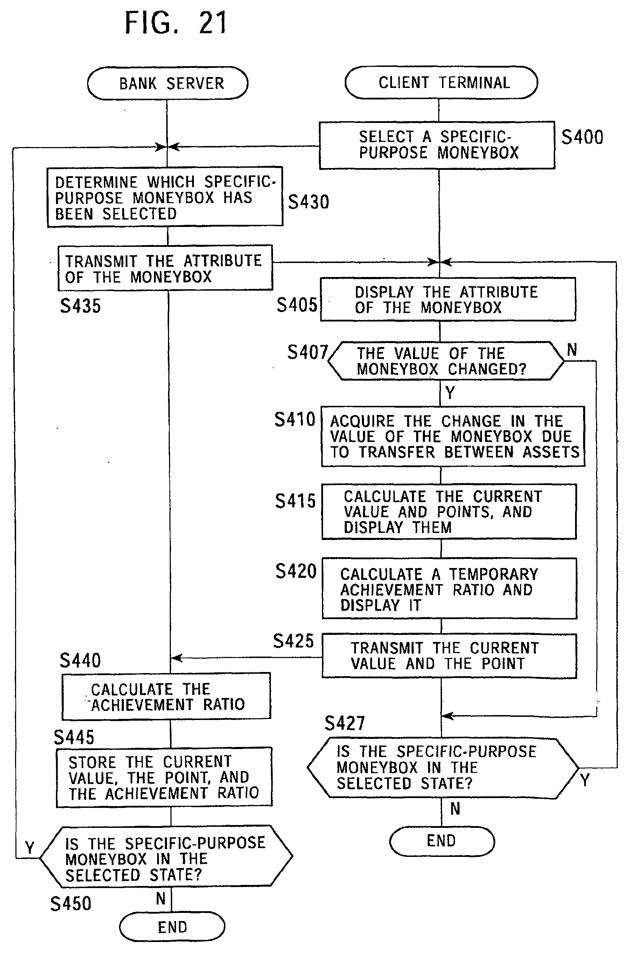

Fig. 21 is a flow chart associated with a process of, in response to selection of a specific-purpose moneybox, displaying detailed information about the selected specific-purpose moneybox in the details-of-specific-purpose-moneybox display area 127.

Herein, it is assumed that the client terminal 7 has already logged in to the bank server 5 and the moneybox screen 133 is displayed on the display 20.

First, the user selects a specific-purpose moneybox by, for example, clicking on a corresponding specific-purpose moneybox selection button 126 (step 400).

In response, the CPU 11 of the client terminal 7 transmits a specific-purpose moneybox identification signal indicating the specific-purpose moneybox selected by the user to the bank server 5.

The CPU 29 of the bank server 5 determines which specific-purpose moneybox has been selected in accordance with the received specific-purpose moneybox identification signal (step 430). The CPU 29 then acquires moneybox attributes of the selected specific-purpose moneybox from the specific-purpose moneybox setting module and transmits the acquired moneybox attributes to the client terminal 7 (step 435).

Specific examples of the moneybox attributes include a target amount, current amounts of respective assets, the total current amount, the current achievement ratio relative to the target amount, the cleverness point and the emotion point of the watcher character, and the previous-access date.

If the CPU 11 of the client terminal 7 receives the moneybox attributes, the CPU 11 displays the moneybox attributes of the specific-purpose moneybox selected by the user in accordance with the received moneybox attributes (step 405).

In a case in which the user has moved an amount of an asset from the parent moneybox into the specific-purpose moneybox and thus a change has occurred in the current amount of the asset in the specific-purpose moneybox (step 407), the CPU 11 of the client terminal 7 acquires the change in the amount of the asset (step 410). The CPU 11 of the client 7 calculates the current amount of the specific-purpose moneybox and the current amount of that asset and updates the total current amount and the current amount of that asset displayed in the details-of-specific-purpose-moneybox display area 127. The CPU 11 of the client 7 also calculates the changes in the cleverness point and the emotion.point (step 415).

The CPU 11 then calculates the achievement ratio relative to the target amount on the basis of the updated current amount and the target amount and updates the amount of the achievement ratio displayed in the degree-of-achievement field 129 (step 420). In the above process, the CPU 11 operates in accordance with a program included in a file defining the moneybox screen 133 and received from the bank server 5.

The CPU 11 then transmits the calculated current amount of the asset and the changed cleverness point and emotion point to the bank server 5 (step 425).

The CPU 11 then determines whether the specific-purpose moneybox of interest is in the selected state. If the specific-purpose moneybox is in the selected state (yes in step S427), the CPU 11 returns the process to step S405. However, in the case in which the specific-purpose moneybox is not in the selected state (no in step 427), the CPU 11 ends the process.

If the CPU 29 of the bank server 5 receives the calculated current amount of the asset and the changed cleverness point and emotion point from the client terminal 7, the CPU 29 updates the data of the moneybox setting/managing module (step 445).

The CPU 29 then determines whether the specific-purpose moneybox of interest is in the selected state in the client terminal 7. If the specific-purpose moneybox is in the selected state (yes in step 450), the process returns to step 435. However, if the specific-purpose moneybox is not in the selected state (no in step S450), the process is ended.

In the above process, for example, when the parent moneybox or another specific-purpose moneybox has been selected or when another screen such as a transfer screen has been selected, the CPU 29 determines that the specific-purpose moneybox of interest has exited from the selected state.

The above-described modification of the first embodiment provides the following advantages.

The moneybox screen allows the user to comprehensively know the amounts of various types of assets such as an ordinary deposit, a time deposit, a foreign-currency ordinary deposit, a foreign-currency time deposit, investment trust and also know the total amount thereof. This allows the user to easily divide his/her assets in an appropriate manner.

It becomes possible to easily manage deposits. Furthermore, by managing deposits using the specific-purpose moneyboxes, it becomes easy to properly divide the total asset into respective types of assets taking into account the future plan.

Assist of the watcher character assigned to each specific-purpose moneybox makes it easier for the user to achieve the target. The use of the watcher character causes the user to have a greater affinity for the bank. This makes it possible for the bank to acquire new child or woman customers.

### (Second Embodiment)

In this second embodiment, like the first embodiment, various types of assets of a user are managed using a parent moneybox and specific-purpose moneyboxes. In addition, in the second embodiment, a watcher characters assigned to each specific-purpose moneybox transmits a virtual electronic mail (referred to as a character mail) to the user.

Each of specific-purpose moneyboxes serves as a supplementary account assigned a specific purpose such as that for purchasing a car or studying abroad, and assets are virtually divided into specific-purpose moneyboxes depending on the purposes. For example, a desired part of the current amount of an ordinary deposit may be allotted to a specific-purpose moneybox for purchasing car. That is, current amounts of assets are managed on the basis of the purposed using the parent moneybox and specific-purpose moneyboxes such as that for purchasing a car.

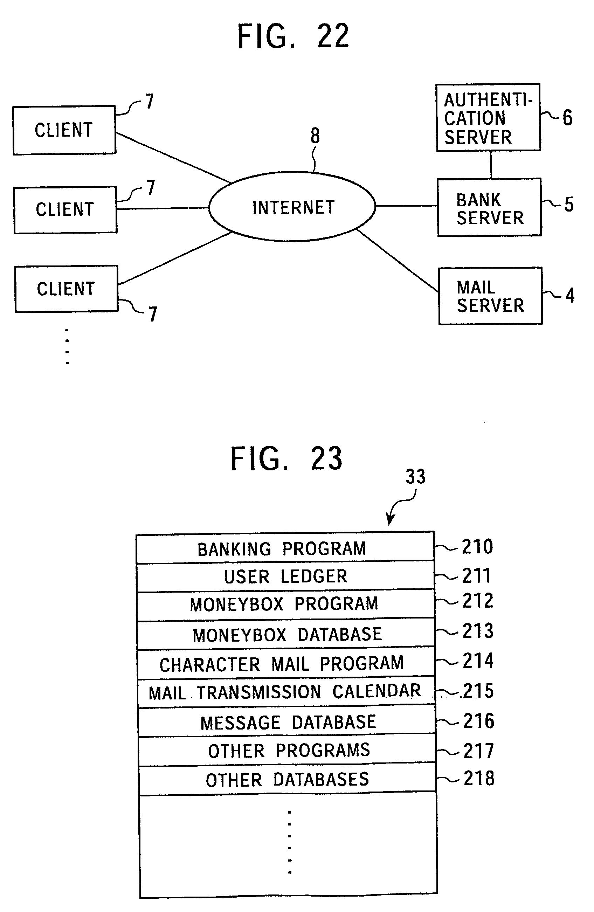

Fig. 22 shows an example of a configuration of a network according to the second embodiment. The network is similar to that according to the first embodiment (Fig. 1) except that a mail server 4 for transmitting a character mail is connected to the network.

A bank server 5 is a server used by a bank to manage assets of a user, such as an ordinary deposit, a time deposit, a foreign-currency ordinary deposit, a foreign-currency time deposit, investment trust, and a loan.

The bank server 5 may be configured in terms of hardware in a similar manner as in the first embodiment (Fig. 3A) .

By accessing the bank server 5 from a client terminal 7, a user can receive bank service such as acquiring data indicating the current amounts of assets, opening and canceling a time deposit, purchasing foreign currency, purchasing and selling investment trust, setting a loan, and transferring money to another account.

Although not shown in Fig. 22, the bank server 5 is connectable to a bank system of another bank via a private line or the like so that money can be transferred between banks.

As in the first embodiment, the bank server 5 allows the user to virtually divide each asset into a plurality of portions using a parent moneybox and specific-purpose moneyboxes thereby managing the amounts of respective asset portions. A watcher character can be assigned to each specific-purpose moneybox.

A plurality of watcher characters having various shapes such as a dog or a bear are prepared so that the user can select a desired watcher character from them and assign it to a specific-purpose moneybox.

The bank server 5 can upload a character mail, which is virtually issued by a watcher character selected by a user to the user, to the mail server 4, which in turn transmits it to an electronic mail address of the user.

A character mail is transmitted in a virtual situation in which a watcher character selected by a user issues an electronic mail to the user to establish good communication with the user and assist the user to achieve a target.

If the mail server 4 receives a character mail addressed to a user uploaded by the bank server 5, the mail server 4 transmits a mail server (not shown) in which the mail address of the user is located.

Fig. 23 shows an example of a set of a program and data stored in the storage device 33 of the bank server 5.

A banking program 210 is a program which causes the CPU 29 of the bank server 5 to perform basic banking processes.

A specific example of the banking process is a process of displaying a log-in screen or an initial screen on the client terminal 7 so that the user can select via the initial screen a desired banking service from management of moneyboxes, inquiry about the asset amounts, opening or canceling a time deposit account, purchasing or selling investment trust, and so on. Another example is performing transaction such as transferring of money into an account of another bank in accordance with data input by the user. Furthermore, the banking program 210 allows the bank server 5 to have a capability of acquire information such as the exchange rate of foreign currency or market prices of investment trust or the like via a network such as the Interne 8. This capability allows the bank serer 5 to calculate the price when the user purchases or sells foreign currency or investment trust.

A user ledger 211 is a database in which asset data of respective users are recorded.

The user ledger 211 includes information about the current and past assets of users, in terms of, for example, the current and past amounts of ordinary deposits and foreign-currency ordinary deposits, the current and past amounts of loans, the contract numbers, contracted period, and contracted amounts of time deposits and foreign-currency time deposits, the types and numbers of units of investment trust, and transactions performed on accounts of users.

A moneybox program 212 is a program for allowing the CPU 29 to have a moneybox management capability.

In the present embodiment, as in the first embodiment, assets which have not been moved into any specific-purpose moneybox are put in the parent moneybox, putting and withdrawing of money into or from the account of the user is directly reflected in the amount of the parent moneybox, and assets of the user are managed using specific-purpose moneyboxes created for the respective purposes.

The moneybox management capability realized by the CPU 29 in accordance with the moneybox program 212 includes the following functions:

### (1) Creating/deleting a moneybox

This function allows a user to create a specific-purpose moneybox and delete an existing specific-purpose moneybox. The user can assign a name and/or a target amount to each specific-purpose moneybox.

That is, the CPU 29 operates in accordance with the moneybox program to provide supplementary account creation means, name setting means, and target setting means.

### (2) Setting a watcher character

This function allows the user to assign a watcher character to a newly created specific-purpose moneybox and assign a name to the watcher character.

That is, the CPU 29 operates in accordance with the moneybox program so as to provide character setting means.

### (3) Moving of asset amounts among moneyboxes

This function allows the user to move assets in a desired direction between the parent moneybox and a desired specific-purpose moneybox or between specific-purpose moneyboxes. Note that asset amounts are moved among virtual moneyboxes called the parent moneybox and the specific-purpose moneyboxes, and actual movement of assets does not occur.

That is, the CPU 29 operates in accordance with the moneybox program so as to provide means for virtually moving asset amounts.

### (4) Calculating points of a watcher character

This function is to calculate the points of a watcher character selected by the user. In the present embodiment, as in the modification of the first embodiment, the properties of each watcher character include a cleverness point and an emotion point. The points are increased or decreased by amounts defined for respective events such as movement of an asset from the parent moneybox to a specific-purpose moneybox.

When it is not necessary to distinguish the cleverness point and the emotion point, a simple expression of "point" is employed.

The points are used as parameters which determine the content of a character mail (virtual electronic mail issued by a character) transmitted to the user.

That is, the CPU 29 operates in accordance with the moneybox program so as to provide parameter acquisition means.

### (5) Indicating a screen message

This function is to display a message (screen message), virtually issued by a watcher character assigned to the specific-purpose moneybox, on the client terminal 7 in response to an operation on the specific-purpose moneybox performed by the user. For example, when the amount of the asset stored in the specific-purpose moneybox has increased, the watcher character assigned to the specific-purpose moneybox is displayed together with a screen message such as "I am happy to see an increase in the saving". The screen message issued by the watcher character and the personality of the watcher character vary depending on the cleverness point, the emotion point, the degree of achievement, and/or other factors.

### (6) Requesting transmission of a character mail

This function is to issue a character mail including a message such as "How do you do" or "Goodbye" in response to creating a new specific-purpose moneybox or deleting an existing specific-purpose moneybox performed by the user.

That is, the CPU 29 operates in accordance with the moneybox program so as to provide electronic mail transmission means.

### (7) Calculating the equivalent amount in yen for foreign currency, investment trust, or the like

This function is to convert the amount of a foreign-currency ordinary deposit or a foreign-currency time deposit to be displayed in the parent moneybox or the specific-purpose moneyboxes into the equivalent amount in yen on the basis of the exchange rate acquired via the banking processing function or to calculate the market price of investment trust.

### (8) Changing the attributes of moneyboxes

This function is to change one ore more moneybox attributes stored in the moneybox database. As will be described in detail later, the moneybox attributes include detailed information about assets, the cleverness point, the emotion point, the degree of achievement relative to the target, the target, the target amount, and the name of the moneybox, which are defined for each moneybox. When the user has moved an asset among moneyboxes or when an attribute such as the cleverness point of a moneybox has changed, the CPU 29 updates the moneybox attributes stored in the moneybox database 213 by means of the function of changing the attributes of moneyboxes.

Putting money into a moneybox can occur when money has been moved into a specific-purpose moneybox from the parent moneybox or another specific-purpose moneybox or when the amount of the asset of the user has increased. In the latter case, money is automatically put into the parent moneybox. In any case, putting of money into a moneybox is performed by the CPU 29 by updating the moneybox attributes.

That is, the CPU 29 operates in accordance with the moneybox program so as to provide means for calculating the degree of achievement on the basis of the target amount assigned to a specific-purpose moneybox and the current amount stored in that specific-purpose moneybox and updating the corresponding moneybox attribute and means for putting and withdrawing money into and from a moneybox.

### (9) Displaying a screen

This function is to provide, to the client terminal 7, data to be used by the user terminal 7 to display a screen such as the screen indicating detailed information about the parent moneybox or the screen indicating detailed information about a specific-purpose moneybox. This function includes a capability of acquiring data input by the user via the screen. In accordance with the data acquired via this function, the function of changing the attributes of moneyboxes updates the corresponding moneybox attribute.

That is, the CPU 29 operates in accordance with the moneybox program so as to provide display means for displaying the parent moneybox or specific-purpose moneyboxes on the screen or displaying the status of the asset amount in a visually fashion, for example, by displaying the asset amount using icons.

The moneybox database 213 is a database in which attributes of respective specific-purpose moneyboxes are recorded.

The moneybox attributes include, for example, a user ID of a user of a moneybox, a moneybox number (the user can create five specific-purpose moneyboxes having moneybox numbers from 1 to 5, as will be described later), date of creating the moneybox, the purpose, the target amount, amounts for respective assets, the type of the watcher character, the cleverness point, the emotion point, and the degree of achievement relative to the target amount.

A character mail program 214 is a program for causing the CPU 29 to achieve a capability of transmitting a character mail from a watcher character, assigned by the user to a specific-purpose moneybox, to the user.

The character mail is produced in a batch process and transmitted in a virtual situation in which the electronic mail is transmitted from the watcher character to the user.

The timing of transmitting a character mail may be set, for example, such that: (1) a character mail is transmitted on an arbitrary date; (2) a character mail is transmitted when the user has created or deleted a moneybox; or (3) a character mail is transmitted on a special date such as the birthday of the user.

The character mail transmission function is executed, for example, once every day such that electronic mails to be transmitted on each day are produced and the resultant electronic mails are uploaded to the mail server 4.

In the case of (1) in which a character mail is transmitted on an arbitrary date, transmission date is randomly scheduled in advance for each watcher character, and a character mail is transmitted in accordance with the schedule. The schedule is represented in the form of a table in a mail transmission calendar 215.

Mail messages to be transmitted as character mails are stored in a message database 216. A mail message is selected from them depending on parameters such as the type of a watcher character, the cleverness point, and the emotion point.

The CPU 29 checks the mail transmission calendar 215 to determine the type of a watcher character and the moneybox number assigned to the present day and searches the moneybox database 213 on the basis of the type of the watcher character to determine the user who has selected that watcher character and the cleverness point and emotion point of that watcher character.

The CPU 29 then searches the message database 216 on the basis of the cleverness point and the emotion point to determine the mail message to be included in the character mail transmitted from the watcher character selected by the user. The CPU 29 then produces a character mail to be transmitted to the user.

In the case of (2) in which a character mail is transmitted in response to creating or deleting of a specific-purpose moneybox, a mail message prepared for this purpose is read from the message database 216 and transmitted.

Messages prepared for this purpose include a message to be transmitted in response creating of a new specific-purpose moneybox performed by a user, a message to be transmitted in response to deleting of a specific-purpose moneybox, wherein these two types of messages are prepared for each type of watcher characters.

For example, when a watcher character has been assigned to a new moneybox, a message such as "How do you do. I am Bob, a watcher working for you." or "Lets start saving money with great enthusiasm" is transmitted. In the case in which a specific-purpose moneybox has been deleted by a user, a message such as "Goodbye" or "Good luck" is transmitted. Messages are properly selected depending on the personality of the respective watcher characters.

In the case of (3) in which a character mail is transmitted on a special date, the date such as the birthday of user or the date on which a specific-purpose moneybox is created (regarded as the birthday of the watcher character assigned to that moneybox) on which a character mail is to be transmitted is set in advance, and a character mail is transmitted on that date.

For example, in the case in which the birthday of each user is employed as the special date, the CPU 29 checks user registration data stored in the other database 218 once every day to determine whether the present day is birthday of some user. If it is determined that the present day is birth day of a user, a mail message such as "Happy birthday!" prepared for use on birthday is read from the message database 216 and transmitted.

In the case in which a character mail is transmitted on the birthday of a watcher character, the CPU 29 searches the moneybox database 213 once every day to determine whether the present day is birthday of some watcher character. A birthday mail message prepared for each watcher character is stored in the message database 216, and thus the CPU 29 reads the birthday mail message for the watcher character from the message database 216 and transmits it.

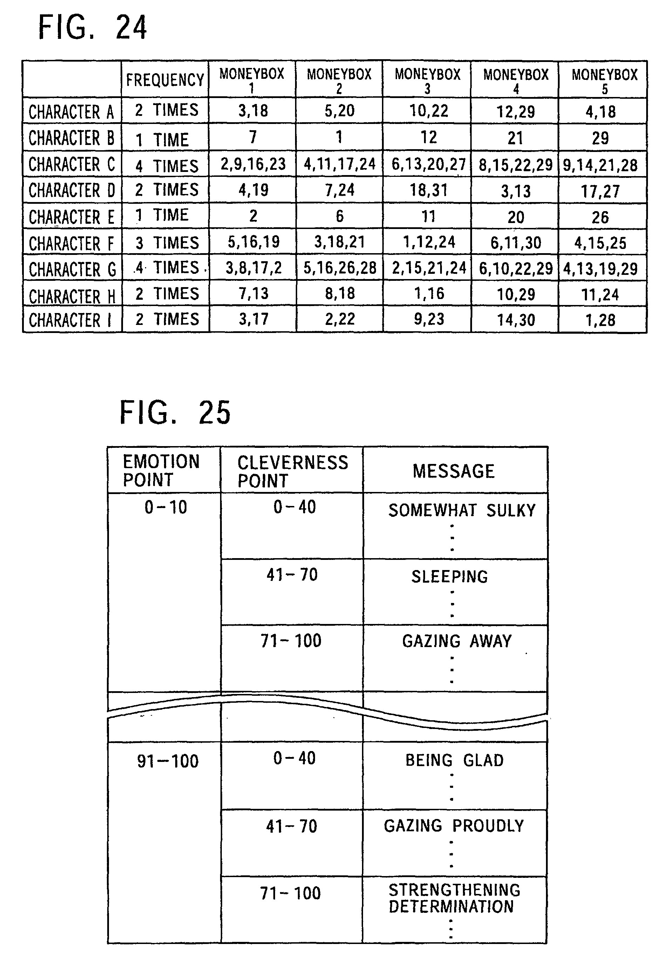

The mail transmission calendar 215 includes information about the schedule of transmitting character mails on randomly determined dates as in the case of (1) described above. An example of a mail transmission calendar is shown in Fig. 24.

In the mail transmission calendar 215, as shown in Fig. 24, the frequency of transmitting character mails per month is determined depending on the types of watcher characters, and the transmission dates are assigned to moneybox numbers to which watcher characters are assigned.

For example, in the case of a watcher character A, the transmission frequency is twice per month. For a specific-purpose moneybox having a moneybox number of 1 to which the watcher character A is assigned, the 3rd day and 18th day of each month are assigned as the transmission dates. For a specific-purpose moneybox having a moneybox number of 2, the 5th day and 20th day of each month are assigned as the transmission dates.

On the other hand, on the 16th day of each month, character mails are transmitted to users who has selected watcher character C or F to moneybox 1, watcher character G to moneybox 2, or watcher character H to moneybox 3.

As described above, even in the case in which the same type watcher character is employed, the transmission date varies depending on the moneybox number. This prevents a large number of character mails from being transmitted on a particular date even in a case in which the same type of watcher character is.assigned to a plurality of moneyboxes.

Referring again to Fig. 23, the message database 216 is a database in which mail messages to be transmitted as character mails are stored.

Fig. 25 shows an example of mail message data prepared for use in the case of (1) in which character mails are transmitted on arbitrary dates. In this specific example shown in Fig. 25, the mail message data defines mail messages for use by watcher character A, one of which is selected depending on the emotion point and the cleverness point and transmitted.

Emotion points from 0 to 100 are grouped into emotion levels in steps of 10 points such that the emotion level increases to a higher level each time the emotion point increases by 10, and cleverness points are grouped into three cleverness levels for each emotion level. Up to twenty mail messages are prepared for each cleverness level.

When the CPU 29 transmits a character mail, the CPU 29 selects an arbitrary one from a mail message group specified by the emotion point and the cleverness point of the watcher character and transmits the selected mail message.

As described above, a plurality of messages are prepared for each group determined by the emotion level and the cleverness level, and an arbitrary one is selected from them and transmitted thereby reducing the probability that messages having the same content are transmitted to the same user.

In addition to mail messages for use in the case of (1), the message database 216 also includes mail messages for use in the case of (2) in which a mail message is transmitted when a user creates or deletes a moneybox and also mail messages for use in the case of (3) in which a mail message is transmitted on a special date such as the birthday of a user.

A screen message, which is virtually issued by a watcher character and displayed on the client terminal 7, is selected depending on a combination of the emotion point and the cleverness point or depending on a particular parameter such as the degree of achievement relative to the target.

Although in the example described above, a mail message is selected depending on a combination of the emotion point and the cleverness point, the manner of selecting a mail message is not limited to that. For example, a screen message may be selected depending on the emotion point, and a mail message may be selected depending on the cleverness point.

Referring again to Fig. 23, the other programs 217 include banking process programs other than those described above, such as a current amount inquiry program and an investment trust selling program.

The other databases 218 include data such as data indicating private information of users and data of investment trust prospectus presented to users.

The manner of varying the cleverness point or the emotion point is described below.

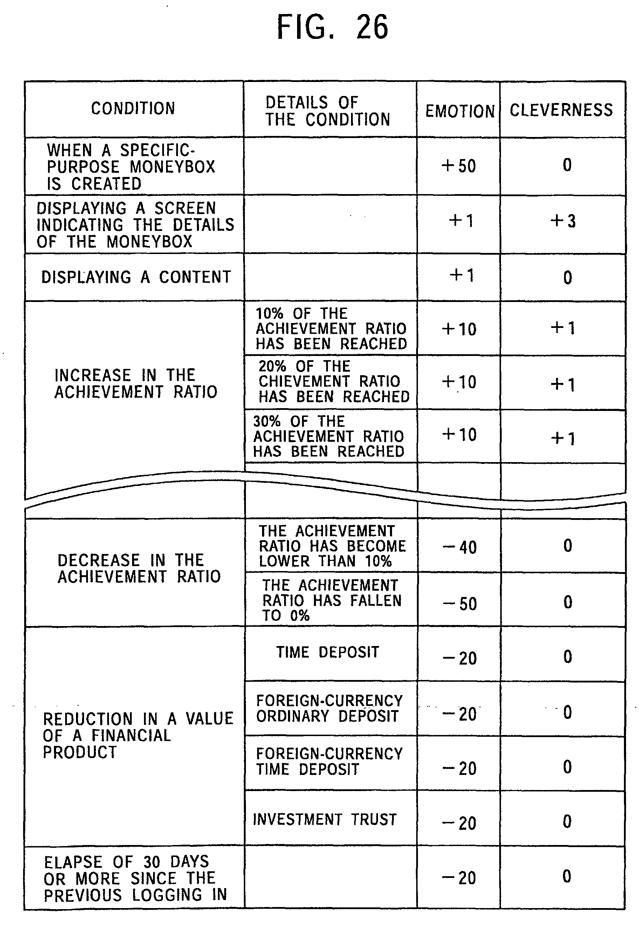

Fig. 26 shows an example of a condition table indicating conditions according to which points are increased or reduced. For example, if a user creates a specific-purpose moneybox, the emotion point is set to 50 and the cleverness point is set to 0. That is, the default amount of the emotion point is 50 and that of the cleverness point is 0. Although the emotion point is increased or decreased depending on the condition, only increasing is allowed for the cleverness point.

If a user opens the detail-information screen for a specific-purpose moneybox, the emotion point of the watcher character assigned to that specific-purpose moneybox is increased by 1, and the cleverness point is increased by 3. On the detailed-information-of-moneybox screen, as will be described in detail later, guidance contents on foreign-currency deposit, investment trust, or the like may be displayed. If a user displays such a content, the emotion point is increased by 1. However, in this case, the cleverness point is not changed.

As for the degree of achievement relative to the target, detailed conditions are set depending on the ranges of degree of achievement. For example, if the degree of achievement of a specific-purpose moneybox has reached 10%, the emotion point of the watcher character assigned to that specific-purpose moneybox is increased by 10 and the cleverness point is increased by 1.

Although not shown in the figure, if a user adds a new financial product (such as an ordinary deposit, a time deposit, a foreign-currency ordinary deposit, a foreign-currency time deposit or investment trust) to a specific-purpose moneybox, the emotion point of the watcher character assigned to that specific-purpose moneybox is increased by 20 and the cleverness point is increased by 1.

On the other hand, a financial product stored in a specific-purpose moneybox is removed, the emotion point of the watcher character assigned to that specific-purpose moneybox is reduced by 20. However, the cleverness point is not changed.

When a user has not logged in to the bank server 5 for 30 days or more since the previous log-in, the emotion point is reduced by 20 for all watcher characters set by the user.

Increasing or decreasing of points is performed as follows. When a user logs in to the bank server 5, the emotion point and the cleverness point of each watcher character set by the user are transmitted to the client terminal 7. Whenever some condition is satisfied, the CPU 11 of the client terminal 7 increases points. When the database is updated, the resultant points are transmitted to the bank server 5.

In the above process, when the user logs in to the bank server 5, the bank server 5 transmits a point changing program to the client terminal 7, and the CPU 11 of the client terminal 7 calculates the point in accordance with the received point changing program.

If the CPU 29 of the bank server 5 receives the points transmitted from the client terminal 7, the CPU 29 updates the moneybox database 213 in accordance with the received points.

The conditions for changing of points are not limited to those described above. The points may be increased or reduced in accordance with another condition.

A user interface used by a user to communicate with the bank server 5 is described below.

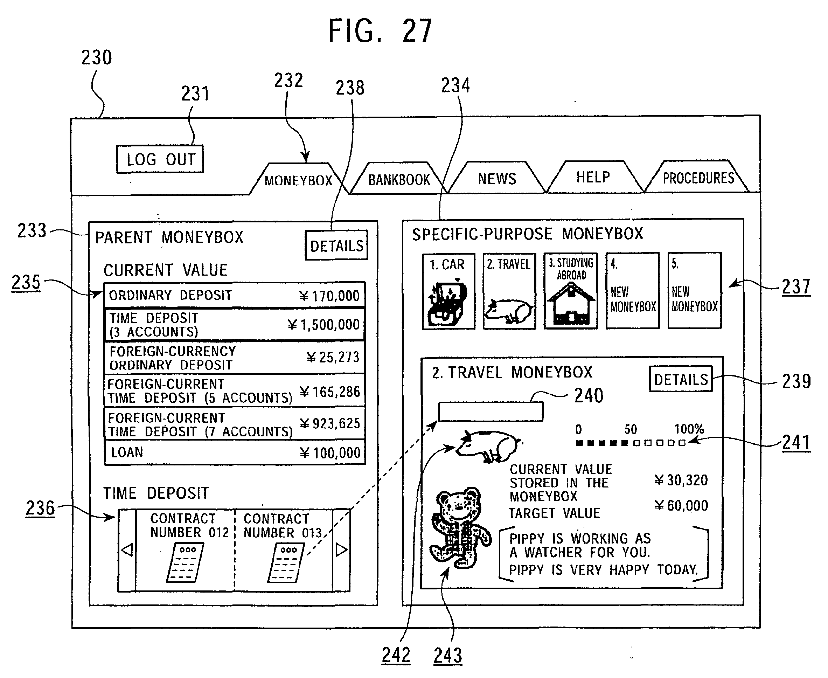

Fig. 27 shows an example of an initial screen 230 which is displayed on the client terminal 7 when a user logs in to the bank server 5.

The initial screen 230 has tabs 232 for selecting various operations. Each tab has its tab name such as "Moneybox", "Bankbook", "News", "Help", and "Procedures". If the user selects one of tabs by means of clicking, a screen corresponding to the selected tab is displayed on the display 20. In the default state, the moneybox tab is selected.

It is possible to immediately move from any screen to another screen by selecting a tab, without causing the user to encounter difficulty due to the hierarchy with a large number of levels.

The bankbook tab is a tab used to display detailed information about assets, such as the current amounts of respective assets. The news tab is a tab used to open a news screen on which news from a bank is displayed. The help tab is used to open a help screen. The procedure tab is used to open a screen which allows a user to open or a cancel a time deposit account, purchase foreign currency, and purchase and sell investment trust.

A log-out button 231 is used to log out of the bank server 5. That is, if this button is clicked, the client terminal 7 is logged out of the bank server 5.

A parent moneybox area 233 includes a detailed information button 238, a parent moneybox amount area 235, and a tray 236.

The detailed information button 238 is used to open a screen on which the detailed information about the parent moneybox is displayed. The detailed information button 238 can be selected by clicking on it with the mouse.

The parent moneybox amount area 235 is an area in which the current amounts of respective assets stored in the parent moneybox are displayed. When money has been put into the account of the user, the increase in the amount of the account is directly reflected in the amount of the parent moneybox. In the case of an asset in foreign currency, the amount is converted to an equivalent amount in yen and the result is displayed. In the case of investment trust, the current market price for each fund is determined and the total amount is displayed.

The assets displayed in the parent moneybox amount area 235 have not been moved to any specific-purpose moneybox.

The tray 236 is an area in which an asset stored in the parent moneybox is displayed in a visual fashion using icons, thereby making it possible for the user to move a desired amount of asset to a specific-purpose moneybox.

If the current amount of a financial produce displayed in the parent moneybox amount area 235 is selected by means of clicking, detailed information is displayed in the tray 236 located below the parent moneybox amount area 235. Icons of assets are displayed in a similar manner as in the modification of the first embodiment.

That is, in the case of an ordinary deposit, a foreign-currency ordinary deposit, or a loan, money icons (in yen) are displayed, while a contract icon is displayed for each of contract of time deposits or foreign-currency time deposits. In the case of investment trust, a fund icon is displayed for each fund.

Any of those icons can be moved into a desired specific-purpose moneyboxes by dragging and dropping it onto a moneybox slot 240 of the specific-purpose moneybox.

In the case of ordinary deposits or foreign-currency ordinary deposits, if a money icon is slid in the right direction with the mouse, the money icon is changed into icons with smaller amounts. This allows the user to move a desired amount of money to the specific-purpose moneybox by moving corresponding icons. In the case of a foreign-currency ordinary deposit, an amount of foreign currency corresponding to an equivalent moved amount in yen is moved into a specific-purpose moneybox.

In the case of a time deposit or a foreign-currency time deposit, movement is possible for each contract.

In the case of investment trust, if a fund icon is dragged to a moneybox 240, a window including a message "How many units do you want to move?" or the like is displayed in a popped-up fashion. If the user inputs the number of units, the specified number of units of investment trust is moved to the specific-purpose moneybox. In the case of investment trust, only a fund which has been actually delivered can be moved into a specific-purpose moneybox.

When a dividend of investment trust is received, the amount of the parent moneybox is increased by a corresponding amount. Alternatively, after a user logs in to the bank server 5, the user may specify a specific-purpose moneybox to which received dividend is to be put.

In the present embodiment, although the balance of a loan is displayed in the form of money icons, the icons cannot be moved into any specific-purpose moneybox.

The specific-purpose money box area 234 includes a selection area 237 and a display area 244.

In the selection area 237, specific-purpose moneyboxes are displayed in the form of moneybox icons, whereby up to five specific-purpose moneyboxes can be set.

If a moneybox icon is selected by means of clicking, information about the selected specific-purpose moneybox is displayed in the display area 244.

In each moneybox icon, a moneybox number, a purpose, and a target amount character are displayed.

The moneybox number has an amount from 1 to 5 assigned to a corresponding moneybox. The bank server 5 identifies specific-purpose moneyboxes used by users, on the basis of their moneybox number.

The purpose is a purpose of each specific-purpose moneybox, which is set by a user when the user creates the specific-purpose moneybox. Specific examples of purposes include "car", "travel", and "studying abroad".

The target amount character is a picture which is displayed depending on the target amount set by the user. The target amount character changes with the target amount, for example, in the order a wallet, a pig-shaped moneybox, a cash box, a treasure box, and a storehouse.

Alternatively, the target amount character may be changed with the degree of achievement relative to the target amount.

For a specific-purpose moneybox which has not been defined, a moneybox number and a character string "New moneybox" are displayed in a moneybox icon. If an undefined icon is clicked on, a specific-purpose moneybox setting screen (not shown) appears in a popped-up fashion. If a user inputs necessary data into this screen, a specific-purpose moneybox is created, and a moneybox icon indicating the created specific-purpose moneybox is displayed at a location whether the undefined icon was displayed. In the specific-purpose moneybox setting screen, the user can select a watcher character and can input a target, a target amount, and a name of the watcher character.

In the display area 244, information about a specific-purpose moneybox selected via the selection area 237 is displayed. The contents displayed therein include a moneybox slot 240, a target amount character 242, a degree-of-achievement area 241, a watcher message area 243, and a detailed information button 239.

The moneybox slot 240 is a slot via which an asset is put into the specific-purpose moneybox. If an asset icon is dragged and dropped from the tray 236 onto the moneybox slot 240, the asset indicated by the icon is moved into the specific-purpose moneybox.

The target amount character 242 is a character assigned to the specific-purpose moneybox.

In the degree-of-achievement area 241, a graph indicating the degree of achievement in a visually recognizable fashion, the current amount stored in the specific-purpose moneybox, and the target amount are displayed.

In the watcher message area 243, the watcher character assigned by the user to the specific-purpose moneybox and a screen message are displayed. The content of the screen message varies depending on the properties, such as the emotion point and the cleverness point, of the watcher character and also depending on the degree of achievement relative to the target.

If the amount stored in the specific-purpose moneybox has reached the target amount, the watcher character expresses his/her happiness to the user. However, if the amount stored in the specific-purpose moneybox does not increase, the watcher character may take a sulky attitude. This can motivate the user to save money. When the cleverness point has become high, the watcher character may explain a financial term or may give advice on the asset management.

The detailed information button 239 is used to open a screen in which detailed information about the specific-purpose moneybox is displayed.

In the screen of detailed information about the specific-purpose moneybox, amounts of respective assets stored in the specific-purpose moneybox are displayed. This screen is also used to move an asset from the present specific-purpose moneybox to another specific-purpose moneybox or the parent moneybox.

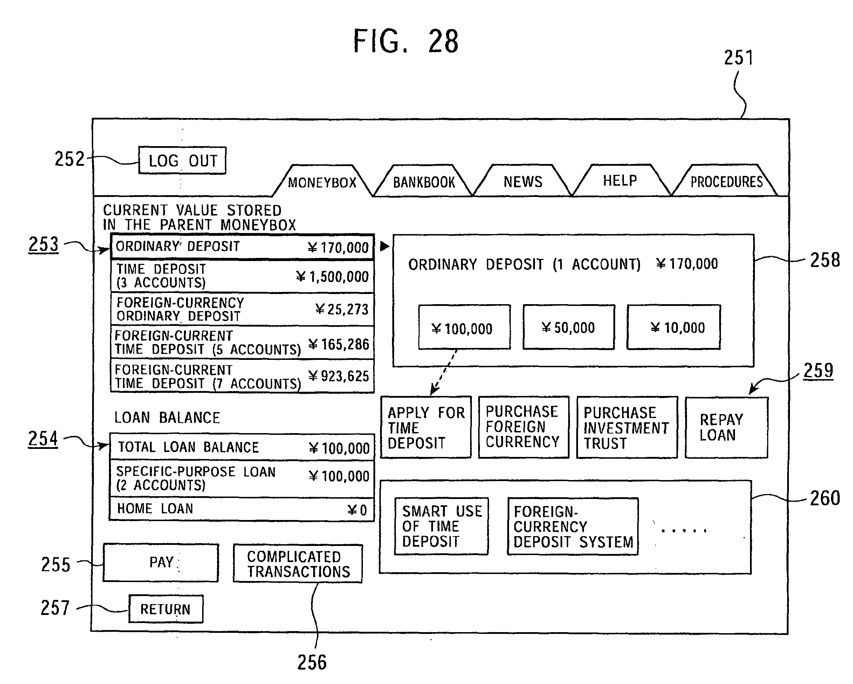

Fig. 28 shows an example of a screen 251 on which detailed information about the parent moneybox is displayed on the display 20, wherein screen 251 appears in response to clicking on a details-of-parent-moneybox button 238.

In a current amount area 253, current amounts of respective financial products stored in the parent moneybox are displayed. Of the assets possessed by the user, the amounts of assets which have not been moved in any specific-purpose moneybox are displayed in the current amount area 253. For assets in foreign currency, calculated equivalent amounts in yen are displayed. In the case of investment trust, the current market price in yen is displayed. In the current amount area 253 in Fig. 28, the number of types displayed in the time deposit field indicates the number of contracts. Similarly, the number of types displayed in the foreign-currency time deposit field indicates the number of contracts. The number of types displayed in the investment trust field indicates the number of funds possessed by the user.

In the current amount area 253, amounts are displayed for all financial products dealt with by the bank server 5. As described above, the parent moneybox allows the user to mange various financial products in a comprehensive manner.

In a loan balance area 254, balances are displayed for respective loans.

If one of financial products in the current amount area 253 is selected, a tray 258 is displayed, in which the current amount of the selected financial product is displayed using icons. The amount of each icon in yen is displayed on the icon. The contents displayed in the tray 258 are similar to those displayed in the tray 236 (Fig. 27).

That is, for ordinary deposits and foreign-currency ordinary deposits, the current amount is displayed in the form of money icons, which can be changed into icons with smaller amounts if necessary. For time deposits and foreign-currency time deposits, the current amount is displayed in the form of contract icons. In the case of investment trust, fund icons corresponding to the respective funds are displayed.

In a transaction menu 259, transaction icons for various transactions such as opening a time deposit, purchasing foreign currency, purchasing investment trust, repaying a loan are displayed. If one of transaction icons is clicked on, a transaction screen corresponding to the click icon is opened.

The transaction screen is also opened when a money icon or a contract icon displayed on the tray 258 is dragged and dropped onto a transaction icon. In this case, the amount of money or the content of the contract of the dragged and dropped icon is displayed in the opened transaction screen.

The types of transaction icons displayed in the transaction menu 259 are prepared for the respective financial products selected in the current amount area 253. Whenever the current amount of a financial product is selected, transaction icons displayed in the transaction menu 259 are switched.

As can be seen from the above description, any transaction can be performed via the details-of-parent-moneybox screen 251. This allows the user to easily manage his/her assets. Thus, it is not necessarily needed to start a transaction from a dedicated transaction screen.

A content area 260 is used to select a content provided by a bank. The bank server 5 has capability of providing to users various contents such as financial education content on use of time deposits or foreign-currency deposit systems.

If one of contents is selected, the bank server 5 transmits data to be used to display the selected content to the client terminal 7. The user can view the content by displaying it on the display 20.

A pay button 255 is used to open a payment screen. If the pay button 255 is selected, the payment screen appears, and the user can perform payment or transfer money via this screen.

A complicated transaction button 256 is used when a transaction other than payment is performed. If this button is clicked, a menu screen for selecting a transaction appears.
if a return button 257 is clicked, the screen is switched to the initial screen 230.

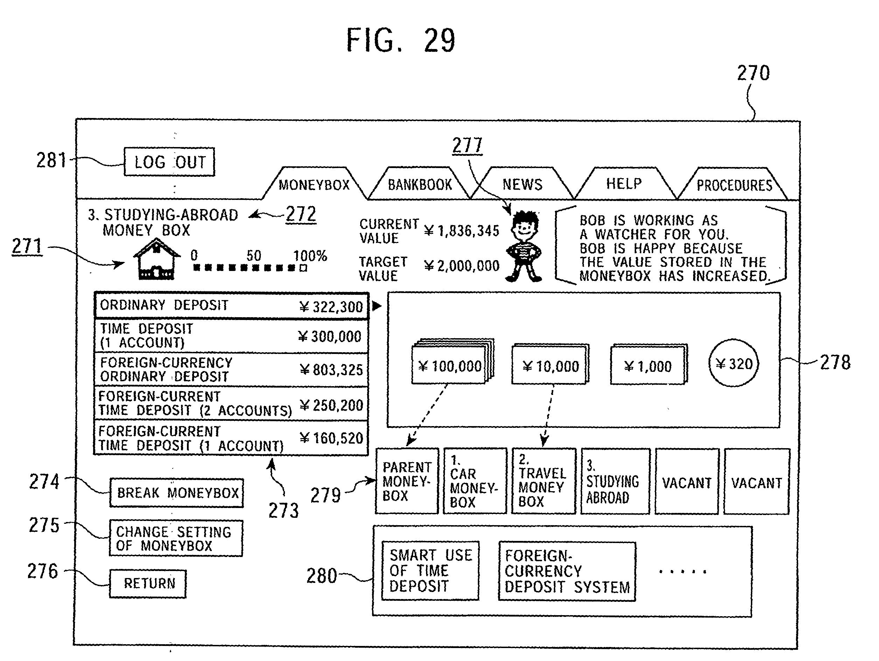

Fig. 29 shows an example of the details-of-specific-purpose-moneybox screen 270. This screen is displayed on the display 20 when the detailed information button 239 on the initial screen 230 (Fig. 27) is clicked. Detailed information about a selected specific-purpose moneybox is displayed on this screen.

In a purpose area 272, the moneybox number of the selected specific-purpose money box and the purpose thereof are displayed.

In a degree-of-achievement area 271, a target amount character assigned to the present specific-purpose moneybox a graph indicating the degree of achievement in a visually recognizable fashion, the current amount stored in the specific-purpose moneybox, and the target amount are displayed.

In a current amount area 273, the current amounts of respective financial products stored in the present specific-purpose moneybox are displayed. For assets in foreign currency, equivalent amounts in yen are displayed. In the case of investment trust, current market prices are displayed. In the current amount area 273, the number of types displayed in the time deposit field indicates the number of contracts. Similarly, the number of types displayed in the foreign-currency time deposit field indicates the number of contracts. The number of types displayed in the investment trust field indicates the number of funds when one or more units are stored in the present specific-purpose moneybox.

A desired financial product can be selected by means of clicking.

The tray 278 is an area in which the current amount of a financial product selected in the current amount area 273 is displayed using icons. Herein, icons are displayed in various fashions depending on the type of assets, as in the tray 258 (Fig. 28).

In a moneybox area 279, an icon indicating the parent moneybox and icons indicating respective specific-purpose moneyboxes are displayed.

On each icon of a specific-purpose moneybox, the moneybox number and the purpose thereof are displayed. In the case of an undefined moneybox, a character string such as "vacant" is displayed on an icon.

An asset displayed in the form of icons on the tray 278 can be dragged and dropped onto the moneybox area 279. In response to dragging and dropping of an icon, an asset corresponding to the moved icon is moved from the present specific-purpose moneybox into a moneybox onto which the icon was dragged and dropped.

If an icon is dragged and dropped onto an undefined specific-purpose moneybox, the specific-purpose moneybox setting screen appears in a popped-up fashion so that the user can create a new specific-purpose moneybox.

A content area 280 is similar to the content area 260 (Fig. 28), and the user can select a desired content in this area.

In a watcher message area 277, a watcher character assigned to the present specific-purpose moneybox and a screen message issued by the watcher character are displayed. The content of the screen message varies depending on the emotion point and the cleverness point of the watcher character and also depending on the degree of achievement relative to the target.

A log-out button 281 is used to log out of the bank server 5. That is, if this button is clicked, the client terminal 7 is logged out of the bank server 5.

A break-moneybox button 274 is a button used to delete the present specific-purpose moneybox. When a specific-purpose moneybox has become unnecessary because the target has been changed, or a specific-purpose moneybox is to be closed or a target has been achieved, if the break-moneybox button 274 is clicked, the specific-purpose moneybox is deleted. In this case, all assets which were stored in this specific-purpose moneybox are moved into the parent moneybox.

In this case, the assigned watcher character may display a message such as "Did you achieve the target or give up?". If the user answers by selecting one of two choices, the watcher character may transmit a character mail such as "Congratulations on the achievement of the target" or "Try again" depending on the selection.

A moneybox setting change button 275 is selected when setting of the present specific-purpose moneybox is changed. If this button is clicked, a setting change screen appears in a popped-up fashion. In the setting change screen, the user can change setting of the specific-purpose moneybox, such as the purpose, the target amount, the type of the watcher character, and the name of the watcher character.

A return button 276 is used to return to the initial screen 230.

As in the first embodiment, if the user withdraws, from an ATM (Automatic Teller Machine) or the like, a greater amount of money than the amount remaining in the parent money box, the amount of the parent moneybox becomes negative.

In this case, when the initial screen 230 is displayed after the user logged in to the bank server 5, a replenishment window similar to that employed in the modification of the first embodiment is automatically displayed in a popped-up fashion on the initial screen 230 to prompt the user to recover the negative amount by moving money from a specific-purpose moneybox to the parent moneybox.

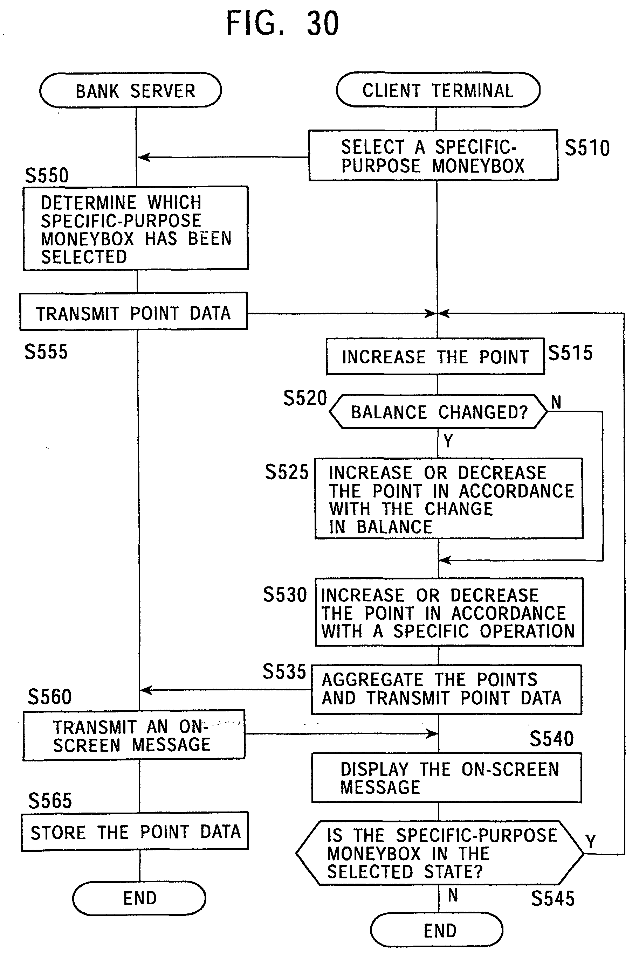

Fig. 30 is a flow chart showing a process of calculating the point of a watcher character and displaying a screen message.

First, if the user selects a specific-purpose moneybox in the initial screen 230, the CPU 11 of the client terminal 7 transmits information indicating which specific-purpose moneybox was selected to the bank server 5 (step 510).

If the CPU 29 of the bank server 5 receives the information indicating the selected specific-purpose moneybox from the client terminal 7, the CPU 29 determines which specific-purpose moneybox was selected by the user in accordance with the received information (step 550).

The CPU 29 then searches the moneybox database to acquire the emotion point and the cleverness point of the watcher character assigned to the present specific-purpose moneybox, and the CPU 29 transmits data indicating the emotion point and the cleverness point to the client terminal 7 (step 555).

In the client terminal 7, if the CPU 11 receives the data indicating the emotion point and the cleverness point of the watcher character assigned to the present specific-purpose moneybox, the CPU 11 stores the data into the RAM 13 and updates the points by increasing the points by predetermined amounts (step 515). More specifically, selecting a specific-purpose moneybox causes the emotion point to increase by 3 and the cleverness point by 1.

In the above process, the CPU 11 of the client terminal 7 performs the above-described operation in accordance with a program included in the file defining the initial screen 230, which was transmitted from the bank server 5 to the client terminal 7.

The CPU 11 determines whether the amount of the present specific-purpose moneybox has changed. If a change has occurred (yes in step 520), the CPU 11 changes the point by an amount in response to the change in the amount of the specific-purpose moneybox (step 520). In the case in which no change has occurred in the amount of the specific-purpose moneybox (no in step 520), the point is not changed.

The changing of points is performed such that both emotion point and cleverness point are increased by 1 if the amount of the specific-purpose moneybox has increased, while the emotion point is reduced by 5 if the amount of the specific-purpose moneybox has decreased.

The CPU 11 further increases or decreases the points in accordance with the predetermined procedure (step 535). For example, in the case in which a content was selected in the content area 280, the cleverness point is increased by 1, while the emotion point is reduced by 1 in the case in which a money icons was changed.

The CPU 11 transmits the updated emotion point and cleverness point to the bank server 5 (step 535).

In the bank server 5, if the CPU 29 receives the emotion point and the cleverness point from the client' terminal 7, the CPU 29 selects a proper screen message from the message database 216 in accordance with the received points and transmits the selected screen message to the client terminal 7 (step 560).

In accordance with the received emotion point and cleverness point, the CPU 29 then updates the points of the watcher character stored in the moneybox database 213 and stores the updated points (step 565).

On the other hand, in the client terminal 7, the CPU 11 displays the screen message received from the bank server 5 on the display 20 (step 540).

The CPU 11 then determines whether the specific-purpose moneybox of interest is still in the selected state. If the specific-purpose moneybox is in the selected state (yes in step 545), the process returns to step 520. In the case in which the specific-purpose moneybox is not in the selected state (no in step 545), the process of changing the points associated with the present specific-purpose moneybox and the screen message is ended.

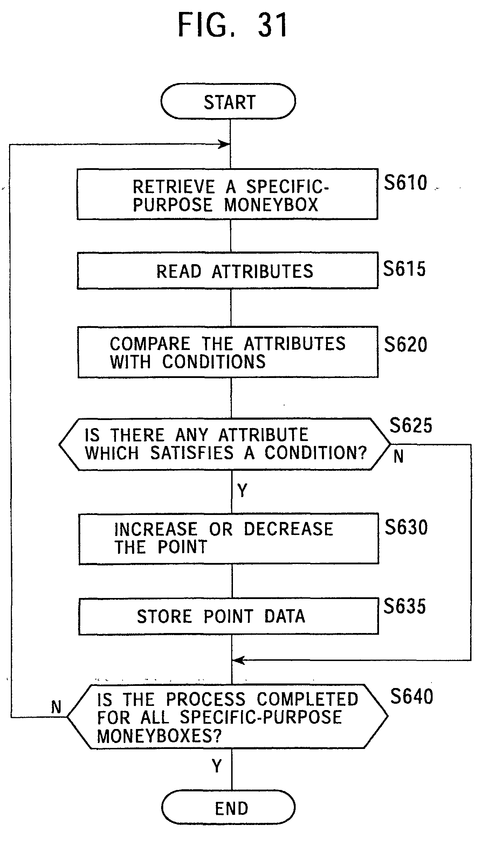

Fig. 31 is a flow chart associated with a process performed by the bank server 5 to change the point of a watcher character. This process is performed, for example, once every day.

First, the CPU 29 searches the moneybox database 213 for a first specific-purpose moneybox (step 610).

The CPU 29 then reads the attributes of the specific-purpose moneybox (step 615).

The CPU 29 compares the attributes of the present specific-purpose moneybox with the point-changing conditions to determine whether the present specific-purpose moneybox satisfies the conditions for changing the points of the watcher character assigned to the present specific-purpose moneybox (step 620). For example, if the degree of achievement has reached 10%, the emotion point is increased by 10 and the cleverness point is increased by 1.

If it is determined that the present specific-purpose moneybox satisfies the conditions for changing the points of the watcher character assigned to the present specific-purpose moneybox (yes in step 625), the CPU 29 changes the emotion point and/or the cleverness point by predetermined amounts (step 630). The CPU 29 updates the emotion point and/or the cleverness point of the present watcher character stored in the moneybox database 213 in accordance with the changed points and stores them (step 635).

If it is determined that the present specific-purpose moneybox does satisfy the conditions for changing the points of the watcher character assigned to the present specific-purpose moneybox (no in step 625), the process jumps to step 640.

The CPU 29 then determines whether the process has been completed for all specific-purpose moneyboxes stored in the moneybox database 213. If the process is not completed (no in step 640), the flow returns to step 610 to perform the process for a next specific-purpose moneybox. However, if the process has been completed for all specific-purpose moneyboxes (yes in step 640), the process is ended.

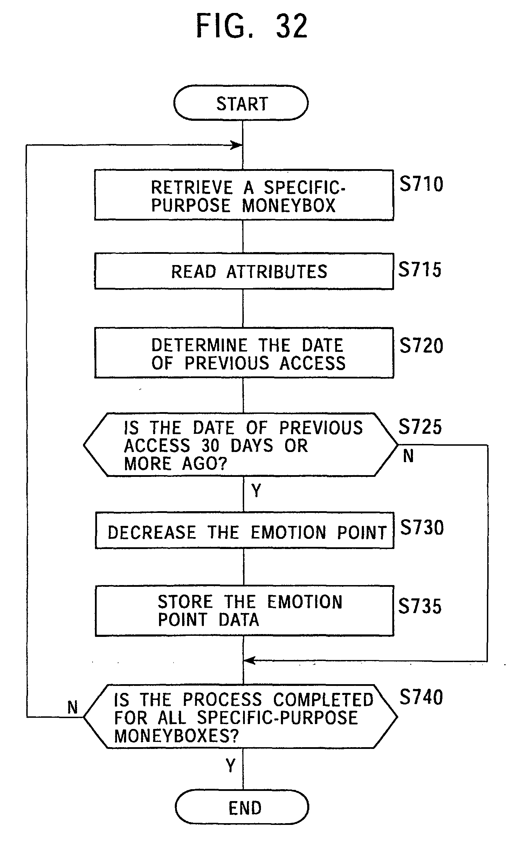

Fig. 32 is a flow chart showing a process performed by the bank server 5 to change the points of a watcher character depending on the previous access date, which is one of moneybox attributes. This process is performed, for example, once every day.

First, the CPU 29 searches the moneybox database 213 for a first specific-purpose moneybox (step 710).

The CPU 29 then reads the attributes of the specific-purpose moneybox (step 715).

From the attributes, the CPU 29 determines the previous access date on which the specific-purpose moneybox was last accessed (step 720).

The CPU 29 then determines whether the previous access date is 30 days or more ago. If the previous access date is 30 days or more ago (yes in step S725), the emotion point of the watcher character assigned to the specific-purpose moneybox is reduced by 20 (step 630).

The CPU 29 updates the emotion point of the watcher character on the basis of the amount reduced by 20 and stores the resultant emotion point (step 735).

In the case in which the previous access date is less than 30 days ago (no in step 725), the process jumps to step 740 which will be described later.

The CPU 29 then determines whether the process has been completed for all specific-purpose moneyboxes stored in the moneybox database 213. If the process is not completed (no in step 740), the flow returns to step 710 to perform the process for a next specific-purpose moneybox. However, if the process has been completed for all specific-purpose moneyboxes (yes in step 740), the process is ended.

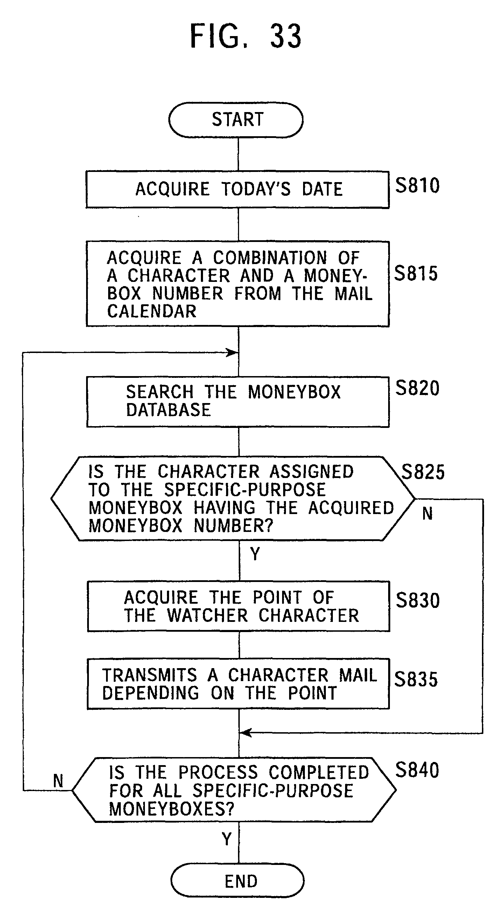

Fig. 33 is a flow chart associated with a process performed by the bank server 5 to transmit a character mail. This process is performed, for example, once every day.

First, the CPU 29 acquires the date on which the process is performed (step 810).

The CPU 29 then checks the mail transmission calendar 215 to acquire a combination of a moneybox number and a watcher character type to be used on that day (step 815).

The CPU 29 then starts scanning the moneybox database 213 to retrieve a user who has assigned a watcher character of the acquired type to the moneybox number (step 820).

The CPU 29 determines whether a watcher character of the above-described type is assigned to the moneybox number (step 825).

If a watcher character of that type is assigned to the moneybox number (yes in step 825), the CPU 29 acquires the emotion point and the cleverness point of the watcher character from the moneybox database 213 (step 830).

In the case in which a watcher character of the above-described type is not assigned to the moneybox number (no in step 825), the process jumps to step 840 which will be described later.

The CPU 29 searches the message database 216 on the basis of the type of the watcher character, the emotion point, and the cleverness point to acquire a mail message to be transmitted to the user. The CPU 29 then produces an electronic mail including the acquired mail message and transmits the resultant electronic mail to the user (step 835).

The CPU 29 then determines whether all specific-purpose moneyboxes have been scanned. If all specific-purpose moneyboxes have been scanned (yes in step 840), the process is ended. However, all specific-purpose moneyboxes have not been scanned, (no in step 840), the process returns to step 820 to scan a next specific-purpose moneybox.

As can be seen from the above explanation, the second embodiment provides the following advantages.

By managing assets of various financial products using the parent moneybox and the specific-purpose moneyboxes, the user can easily divide the total asset into respective types of assets taking into account the future plan.

The assistance of the watcher character to the user in achieving the target motivates the user to save money in the specific-purpose moneybox. The user can enjoy receiving a message in the form of a screen message or a mail message from the watcher character, and the message can motivate the user to save money.

The screen message or the mail message issued by the watcher character can be varied by changing the properties of the watcher character, such as the emotion point or the cleverness point.

Although in the present embodiment, whenever the asset of the user has changed by a certain amount, that amount of asset is automatically reflected in the parent moneybox, the moneybox the amount stored in which is automatically changed in response to the actual change in the asset is not limited to the parent moneybox. That is, one or more moneyboxes may be specified as moneyboxes the amounts of which are automatically changed in response to changes in the asset for particular purposes. For example, a salary may be automatically put into a specific-purpose moneybox assigned salary reception, and public utility charges may be automatically paid from a specific-purpose moneybox assigned the public utility charge payment.

### (Third Embodiment)

The purposes of accounts vary from user to user. For example, a user may open an account into which his/her salary is to be paid. Another example of the purpose is to save money for planned use such as purchasing a car or traveling.

A user may collect information about a car to be purchased or about travel by accessing a site on the Internet while saving money in his/her account. When the amount of saved money has reached the target amount, the user may make a contract for desired service with a service provider via the Internet and may perform electronic settlement via the Internet.

However, in the conventional online bank service system, services provided to users are limited to those associated with deposits. Providers who provide banking services cannot know the purposes of accounts of users, and thus the banking service providers cannot provide further services in cooperation with external service providers such as auto dealers or travel agents.

The third embodiment of the present invention described below makes it possible to provide to users not only online banking services but also various other services in cooperation with external service providers.

Thus, the third preferred embodiment of the present invention is described below with reference to drawings.

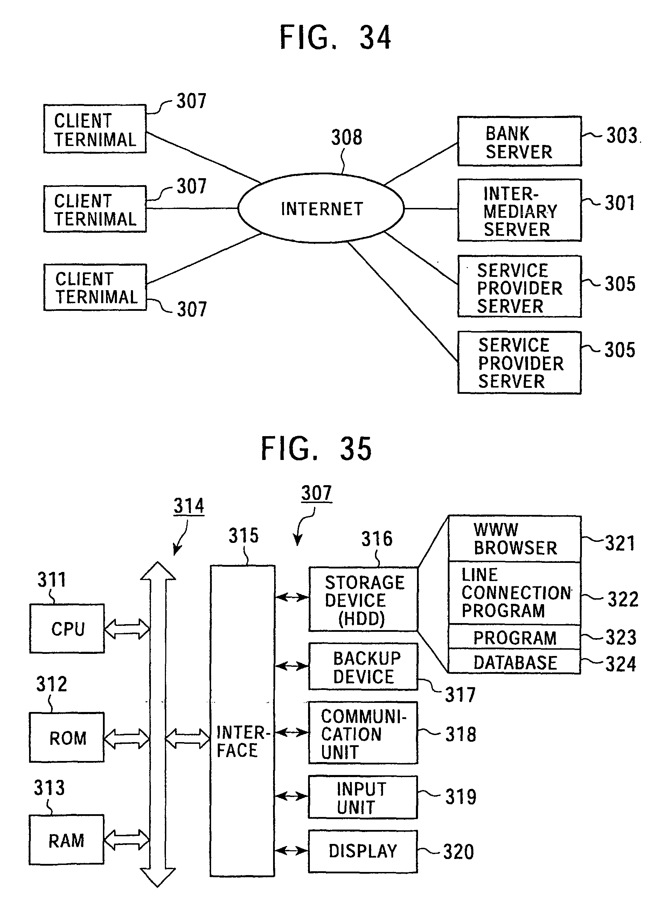

Fig. 34 is a diagram illustrating a general construction of an online banking system according the third embodiment of the present invention. As shown in Fig. 34, the online banking system includes an intermediary server 301, a bank server 303, service provider servers 305, client terminals 307, and the Internet 308. In this bank system, transmission of information among the bank server 303, the service provider servers 305, and the client terminal 307 is performed via the intermediary server 301.

The intermediary server 301 is a server which mediates information among the client terminal 307, the bank server 303, and the service provider server 305.

The bank server 303 is operated by a bank to process a bank service request issued by a user of a client terminal 307 and received via the intermediary server 301 and to return a response to the user of the client terminal 307 via the intermediary server 301.

Each service provider server 305 is operated by a service provider that sells goods or provides information. The service provider receives customer information from the intermediary server 301 and uses the received customer information for sales promotion.

Each client terminal 307 is used by a user as communication means for obtaining various kinds of information from the intermediary server 301, the bank server 303, and the service provider servers 305. Specific examples of client terminals include a personal computer, PDA (Personal Digital (Data) Assistants), a portable telephone, and a consumer electronic device having a capability of communication via the Internet.

Providing of information to client terminals 307 from the intermediary server 301, the bank server 303, and the service provider servers 305 is performed mainly by means of WWW (World Wide Web). Client terminals 7 can display information received from the intermediary server 301, the bank server 303, or the service provider servers 305, on a display 320 using a WWW browser. A user can input character information into an input field of a screen displayed on the display 320 of the client terminal 307 and can transmit input information to a server.

Although in the present embodiment, the intermediary server 301, the bank server 303, the service provider servers 305, and the client terminals 307 are connected to each other via the Internet 308, connections may also be achieved via another communication network such as a private line, a LAN (Local Area Network), a WAN (Wide Area Network), or a satellite communication network.

Fig. 35 is a diagram showing an example of a configuration of a client terminal 307. In the present embodiment, by way of example, a personal computer is employed as the client terminal 307.

A CPU (Central Processing Unit) 311 performs various processes, calculation, and decisions in accordance with a program stored in a ROM (Read Only Memory) 312 or a program loaded in a RAM (Random Access Memory) 313.

The ROM 312 is a read only memory in which a basic program used by the client terminal 307 to perform operations and associated parameters are stored. The RAM 313 is a high-speed accessible memory for storing a program and data used by the CPU 311 to.perform various processes.

The interface 315 is connected to the CPU 311 and other various devices such as a storage device 316, a backup device 317 such as a magnetooptical disk drive, a communication unit 318, and an input unit 319 so that the interface 315 serves as an interface between the CPU 311 and the other devices. A bus line 314 is a transmission medium via which data and control signals are transmitted between the interface 315, the CPU 311, the ROM 312, and the RAM 313.

The storage device 316 includes a high-speed accessible storage medium having a large storage capacity in which various programs and data such as a browser program 321, a line connection program 322, other programs 323, and other databases 324 are stored. Specific examples of the storage device 316 include a hard disk, nonvolatile semiconductor memory, and a magnetooptical disk.

The browser program 321 is a program for interpreting a file described in a markup language such as HTML or XML and displaying the content of the file on the display 320.

The line connection program 322 is a program for connecting a client terminal 307 to the Internet 308 (or to a provider when the client terminal 7 is connected to the Internet 308 via the provider).

The communication unit 318 is a device for connecting the client terminal 307 to the Internet 308. In a case in which the client terminal 307 is connected to a public telephone network, a modem or the like is used as the communication unit 318.

The input unit 319 includes a keyboard, a mouse, and the like. Instead of the mouse, another type of pointing device such as a touchpanel or a tablet may be used.

Specific examples of the display 320 include a CRT (Cathode Ray Tube) display, a liquid crystal display, and a plasma display.

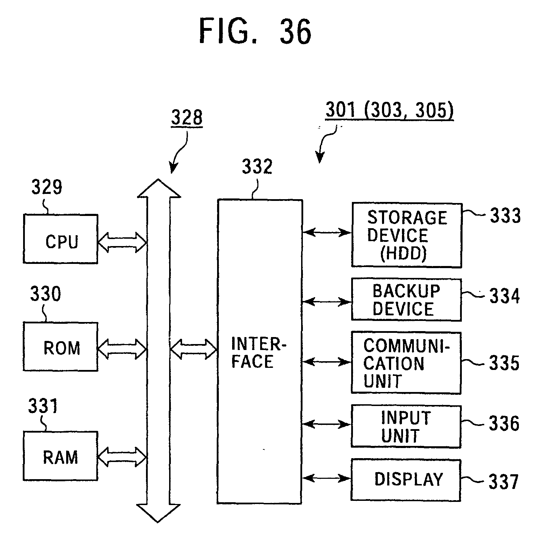

Fig. 36 shows the hardware configuration of the intermediary server 301, the bank server 303, and the service provider servers 305.

Each of the intermediary server 301, the bank server 303, and the service provider servers 305 may be realized by a computer having an advanced high-speed information processing capability, such as a workstation. The hardware configuration thereof is basically similar to that of the client terminal 307, and thus it is not described in further detail herein.

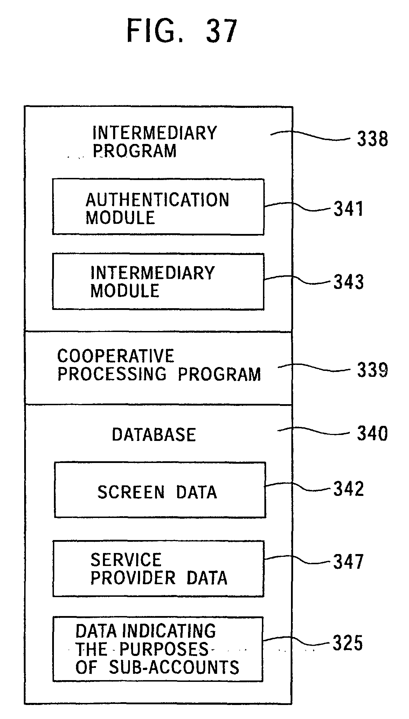

Fig. 37 shows an example of a set of programs and data stored in the storage device 333 of the intermediary server 301.

The storage device 333 of the intermediary server 301 stores an intermediary program 338 for achieving intermediary service between the bank server 303 and the client terminal 307 of users, a cooperative processing program 339 for making it possible for the service provider servers 305 to achieve a capability of providing customer information, and a database 340 in which various data necessary to execute the programs 338 and 339 are stored.

The intermediary program 338 includes an authentication module 341 for authenticating users and an intermediary module 343 for transferring to a client terminal 307 screen data to be displayed on the display 320 of the client terminal 307 and used by the client terminal 307 to communicate with the bank server 303 thereby allowing data, input by a user into the screen displayed on the display 320 of the client terminal 307, to be transferred to the bank server 303.

The cooperative processing program 339 is a program for extracting the purpose of a sub-account set by a user from information transmitted between the client terminal 307 of the user and the bank server 303 and for providing customer information to a service provider capable of providing service relating to the purpose of the sub-account via a transmission medium such as the Internet 308. Herein, customer information refers to information including at least user information and data indicating the purpose of a sub-account set by a user. Specific examples of the user information include an electronic mail address of a user and a user ID employed in the online bank system.

In the database 340, data 342 representing a screen displayed on the client terminal 307, data 347 associated with service providers, and data 325 indicating the purposes of the sub-accounts set by users are stored. The data 347 associated with service providers indicates, for example, the details of services provided by service providers. The cooperative processing program 339 determines a service provider capable of providing a service relating to the purpose of a sub-account set by a user, on the basis of the data 325 indicating the purposes of sub-accounts set by users and the data 347 associated with the service providers stored in the database 340, and the cooperative processing program 339 provides customer information including user information and data indicating the purpose of the sub-account to the service provider.

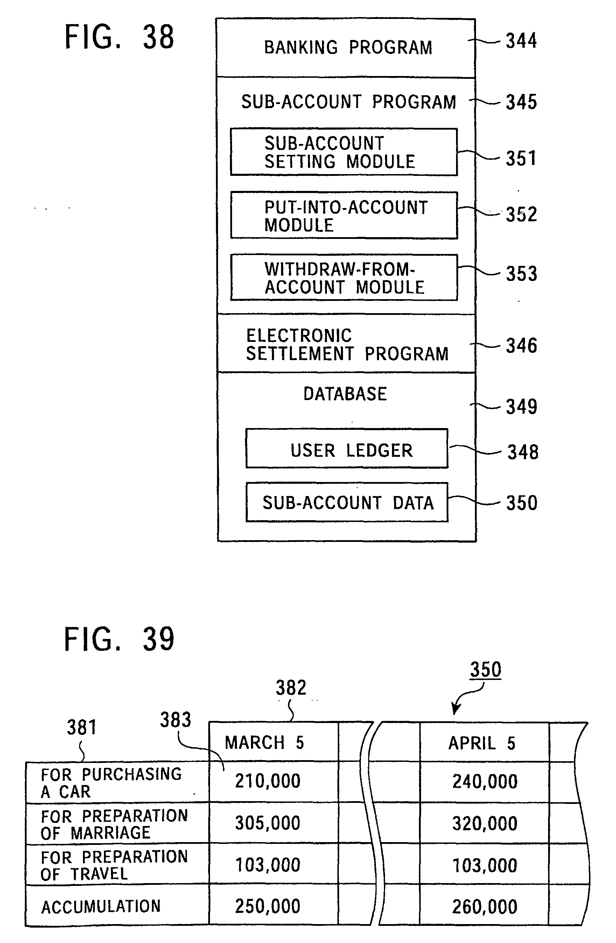

Fig. 38 shows a example of a set of a program and data stored in the storage device 333 of the bank server 303.

In the storage device 333 of the bank server 303, programs such as a banking program 344, a sub-account program 345, and an electronic settlement program 346 and a databases 349 including a user ledger 348 and sub-account data 350 are stored.

The banking program 344 is a program for achieving a capability of providing various services associated banking activities via the intermediary server 301. More specifically, the banking program 344 transfers screen data depending on a transaction specified by a user to a client terminal 307 via the intermediary server 301, acquires data input by the user into the screen displayed on the display 320 of the client terminal 307 via the intermediary server 301, and performs a banking process such as acquisition of balance, transferring of money, or opening of an account in accordance with the input data.

The user ledger 348 is a database in which data associated with transactions (such as transferring of money or interest payment) performed on ordinary deposit accounts or time deposit accounts of users and data associated with balances of accounts are recorded.

The sub-account program 345 manages the balances of ordinary deposit accounts of users by virtually dividing the balances of ordinary deposit accounts of users into one or more sub-accounts set by the users. The sub-account program 345 includes a sub-account setting module 351, a put-into-subaccount module 352, and a withdraw-from-subaccount module 353.

The sub-account setting module 351 acquires sub-account setting data input by a user into a sub-account setting screen displayed on the display 320 of the client terminal 307 via the intermediary server 301 and sets a sub-account according to the acquired sub-account setting data.

When money has been put into an account of a user, the put-into-subaccount module 352 allows the user to distribute the money into desired sub-accounts. The put-into-subaccount module 352 is linked to the user ledger 348 such that if the banking program 344 inputs put-into-account data into the user ledger 348, the put-into-subaccount module 352 acquires the put-into-account data and transfers it to the client terminal 307 via the intermediary server 301. If the client terminal 307 receives the put-into-account data, the client terminal 307 displays it on the display 320. The user can distribute the money from the account into desired sub-accounts by dragging and dropping the money displayed (in the form of icons representing bills) on the display 320 of the client terminal 307 onto desired sub-accounts on the screen. If the user distributes money put into the account of the user into one or more sub-accounts, the put-into-subaccount module 352 updates sub-account data 350 by adding the amounts distributed to the respective sub-accounts to the current amounts of the corresponding sub-accounts.

The withdraw-from-subaccount module 353 is a module for realizing a function opposite to that of the put-into-subaccount module 352. That is, when money is withdrawn from the actual account of the user, the withdraw-from-subaccount module 353 distributes withdrawing to one or more sub-accounts. The withdraw-from-subaccount module 353 is linked to the user ledger 348 so that when the banking program 344 inputs withdrawn-from-account data to the user ledger 348, the withdraw-from-subaccount module 353 acquires the withdrawn-from-account data and displays it on the display 320 of the client terminal 307. The user can distribute withdrawing of money displayed (in the form of icons representing bills) on the display 320 by the withdraw-from-subaccount module 353 to desired sub-accounts by dragging and dropping the money onto the desired sub-accounts. If the user distributes the withdrawn amount to one or more sub-accounts, the withdraw-from-subaccount module 353 updates the sub-account data 350 by subtracting the amounts distributed to the respective sub-accounts from the current amounts of the corresponding sub-accounts.

In the present embodiment, it is also possible to transfer a desired amount from one sub-account into another sub-account by means of dragging and dropping.

The electronic settlement program 346 is a program for achieving a capability of performing electronic settlement between a user of a client terminal 307 and a service provider of a service provider server 305.

The sub-account data 350 is a database in which the history of the amounts of the respective sub-accounts is recorded. Fig. 39 shows an example of sub-account data 350. Note that the amount remaining in the account of the user is not actually divided, but the amount remaining in the single account of the user is virtually divided into virtual sub-accounts and the amounts remaining in the virtual sub-accounts are described in the sub-account data 350. The description such as "for purchasing a car" in a name field 381 of the sub-account data 350 is a name which was assigned by the user to a sub-account when the sub-account was created by the user. Date fields 382 are used to describe the dates when the amounts remaining in the sub-accounts are described. In amount fields 383, the amounts remaining, as of the date described in the date fields 382, in the sub-accounts having names described in the name fields 381 are described. For example, the sub-account data 350 indicates that ¥240,000 remained in the sub-account named "for purchasing a car" as of April 5. Thus, it is possible to know the history of the amounts of the respective sub-accounts by checking the sub-account data 350.

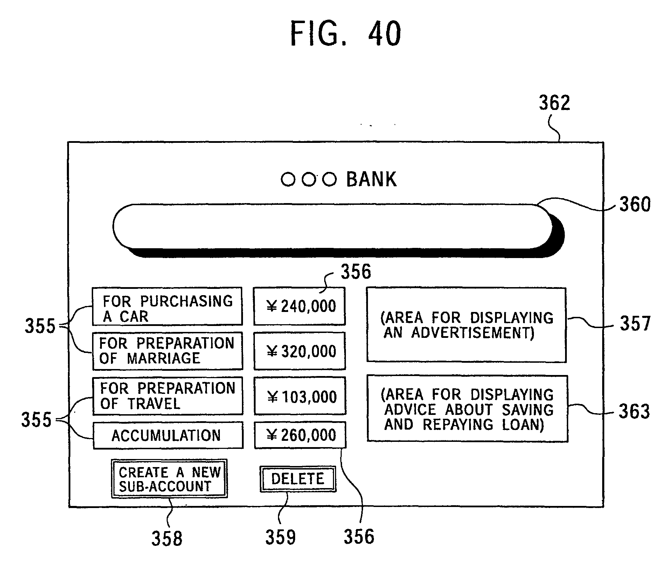

Fig. 40 shows an example of a sub-account management screen displayed on the display 320 of the client terminal 307.

The sub-account management screen 362 includes a sub-account name area 355, a current amount area 356, an advertisement area 357, a create button 358, a delete button 359, a credited/debited amount display area 360, and an area 363 for displaying advice on saving money or repaying loan.

The credited/debited amount display area 360 is an area for displaying money in the form of money icons put into or withdrawn from the account of the user. When money has been put into the account of the user, the put-into-subaccount 352 displays the money put into the account. On the other hand, in the case in which money has withdrawn from the account of the user, the withdraw-from-subaccount 353 displays the money withdrawn from the account.

In the sub-account name area 355, names of sub-accounts created by the user are displayed. In the example shown in Fig. 40, sub-accounts having names "for purchasing a car", "for preparation of marriage", and "for preparation of travel" have been created. Those sub-accounts are used to save money every month.

In the current amount area 356, current amounts remaining in the respective sub-accounts are displayed.

In the advisement area 357, advertisement information provided by the service provider server 305 is displayed. The advertisement information displayed in the advertisement area 357 of the sub-account management screen originates from advertisement information provided by the service provider server 305 on the basis of customer information received from the intermediary server 301.

In the advice-on-saving-money/repaying-loan display area 363, a message for encouraging the user, selected depending on the target amount set by the user and the current sub-account data 350, is displayed. For example, a message such as "Maintain the current pace. Good luck!" or "You can achieve the target in three months!" is displayed. A plan of replaying a loan may also be displayed.

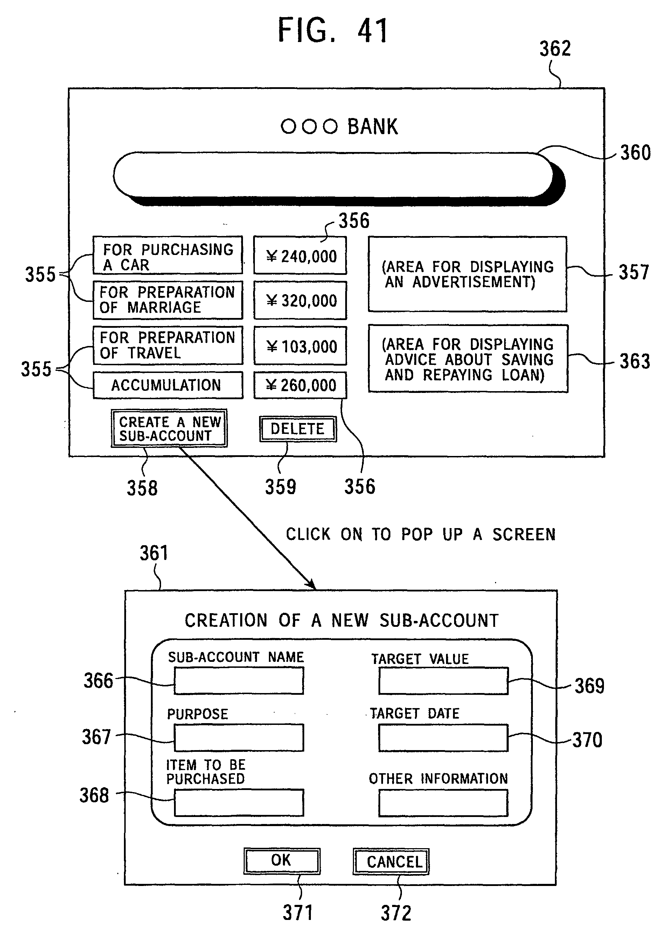

The new sub-account creation button 358 is a button which is used when a new sub-account is created. When the user wants to create a new sub-account, if the user operates the mouse so that the new sub-account creation button 358 is pointed to by the pointer, and the user then clicks the left button on the mouse, a new sub-account creation screen 361 appears as shown in Fig. 41. If the user inputs necessary data in the new sub-account creation screen 361, a new sub-account is created.

The delete button 359 is used to delete a sub-account. When the user wants to.delete a particular sub-account, the user operates the mouse so that the pointer points to the name of the sub-account to be deleted and the user clicks the left button on the mouse so that the focus is switched to the sub-account. Thereafter, if the delete button 359 is pointed to by the pointer and is left-clicked, the sub-account program 345 deletes the specified sub-account. The amount which was stored in the deleted sub-account is displayed in the form of bill icons in the credited/debited amount display area 360. If the user drags and drops the bill icons onto a desired sub-account, the amount is transferred into that sub-account.

The sub-account creation screen 361 includes a name input field 366, a purpose input field 367, an item-to-be-purchased input field 368, a target amount input field 369, and a target date input field 370.

In the name input field 366, an arbitrary name of the sub-account determined by the user is input. In the purpose input field 367, a character string representing the planned use or the purpose of the sub-account is input. Instead of inputting a character string, one of services/products provided by a service provider may be selected. In this case, a homepage of the service provider may be linked so that the user can access the homepage to obtain information. In the item input field 368, a character string indicating a specific type or a genre of an item to be purchased is input. In the target amount input field 369, the price of what is to be purchased or the target amount of money to be saved is input. In the target date input field 370, the target date by which the target amount should be achieved or the date on which the saved money is planned to be used is input.

If the OK button 371 on the sub-account creation screen 361 is clicked, the data input in the respective input fields 366 to 370 are transmitted as sub-account creation data to the intermediary server 301 from the client terminal 307. If the intermediary server 301 receives the sub-account creation data from the client terminal 307, the intermediary server 301 transfers it to the bank server 303. In the intermediary server 301, data indicating the purpose of the sub-account ("purpose" data and "item-to-be-purchased" data in this specific example) included in the sub-account creation data is stored into the database 340 so that the data can be used as an information resource when customer information to be supplied to the service provider server 305 is produced.

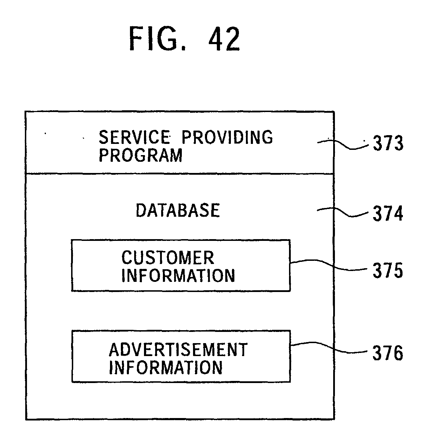

Fig. 42 shows an example of a set of programs and data stored in the storage device 333 of the service provider server 305.

In the storage device of the service provider server 305, a program 373 for performing a process of providing advertisement information to customers on the basis of customer information received from the intermediary server 301 and a database 374 in which customer information 375 and advertisement information 376 are recorded are stored.

Providing advertisement information to customers may be accomplished by using an electronic mail or by pasting advertisement information onto a Web page (such as the sub-account management screen 362 shown in Fig. 40) of an online bank whose Web address is available from the intermediary server 301.

The operation of the online banking system is described below.

First, the user of the client terminal 307 accesses a homepage of an online bank whose information is provided by the intermediary server 301. In the homepage, the user inputs his/her user ID and password required to log in. The user ID and the password input by the user are transmitted to the intermediary server 301. If the intermediary server 301 receives the user ID and the password required to log in from the user, the intermediary server 301 performs user authentication. The user authentication is performed, for example, by comparing the user ID and the password given by the user of the client terminal 307 with the registered user ID and password acquired from the bank server 303. Alternatively, the user authentication may be performed such that the user ID and the password input by the user are transferred from the intermediary server 301 to the bank server 303, and the bank server 303 performs user authentication and returns an authentication result to the client terminal 307 of the user via the intermediary server 301. If the user authentication is successful, the user can receive various banking services from the bank server 303.

Herein, let us assume that the user has already jumped from the log-in screen to the sub-account management screen to receive service associated with sub-accounts from the bank server 303.

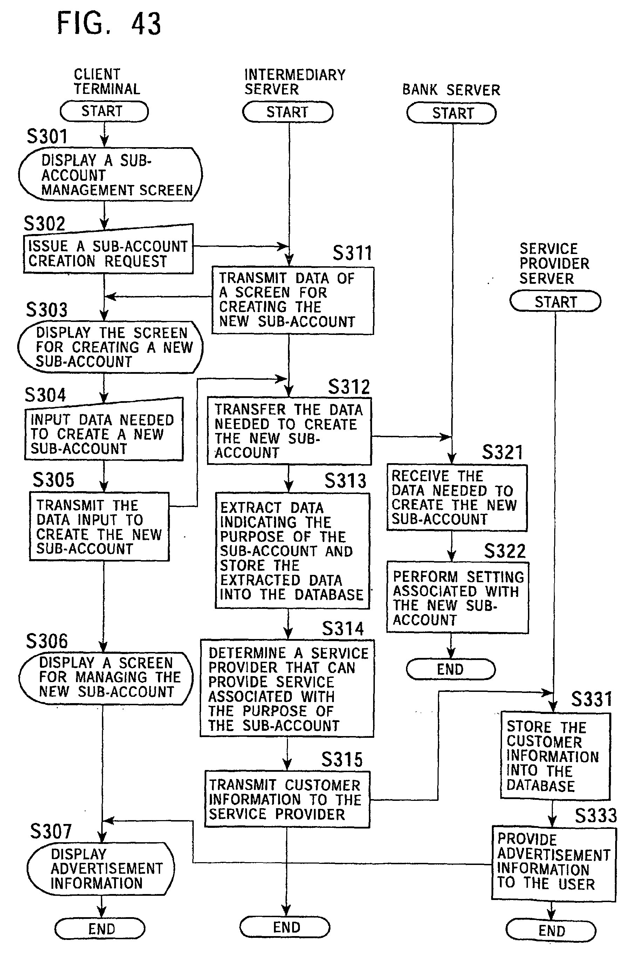

The user of the client 307 can create a new sub-account in the online bank as described below with reference to Fig. 43.

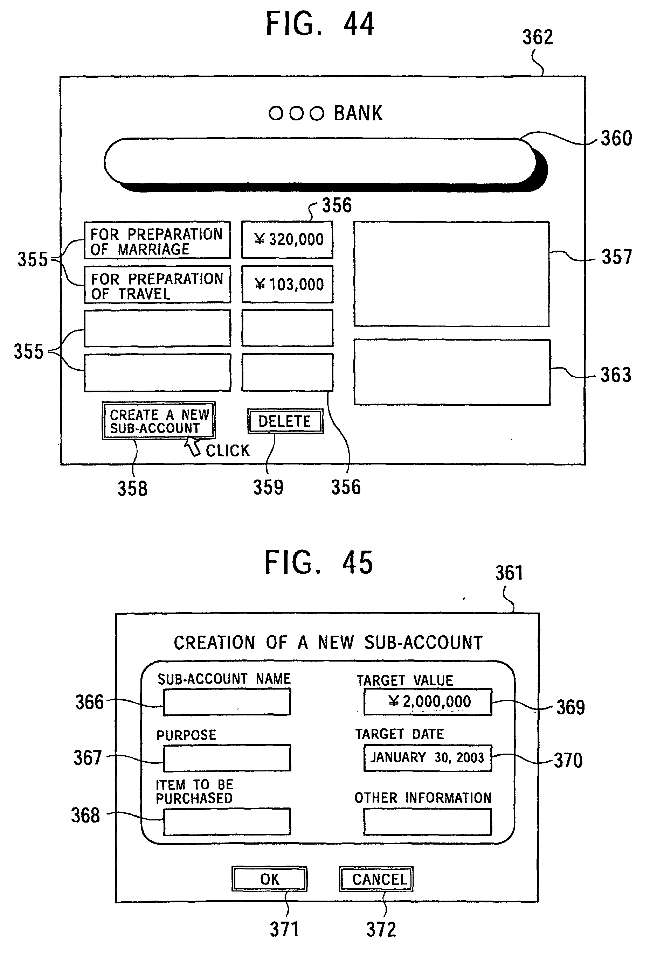

Fig. 44 shows an example of a sub-account management screen. In the sub-account management screen 362 names of sub-accounts "for preparation of marriage" and "for preparation of travel" which have already been created by the user and current amounts stored in those sub-accounts are displayed (step 301).

The data displayed in the sub-account name area 355 and the current amount area 356 of the sub-account management screen 362 is provided as follows. The bank server 303 produces the data in accordance with the sub-account data 350 of the user and transmits the produced data to the intermediary server 301. The data is inserted in screen data stored in the intermediary server 301. The client terminal 307 of the user downloads the screen data including the inserted data indicating the sub-account names and the current amounts from the intermediary server 301 and displays the screen data on the display 320.

If the user clicks on the new sub-account creation button 358 on the sub-account management screen 362, a sub-account create request is transmitted from the client terminal 307 to the intermediary server 301 (step 302).

In response to receiving the sub-account create request from the client terminal 307, the intermediary program 338 transmits sub-account creation screen data to the client terminal 307 using the intermediary program 338 running on the intermediary server 301 (step 311).

In response, the client terminal 307 displays the sub-account creation screen on the display 320 (step 303). The user of the client terminal 307 inputs data needed to create a new sub-account into respective input fields of the sub-account creation screen (step 304).

Fig. 45 shows an example of data input in the sub-account creation screen 361. In the example shown in Fig. 45, "for purchasing a car" has been input into the name field 366 of the sub-account creation screen 361, "for purchasing a car" into the purpose field 367, "Model-XXXX of AAAA company" into the item field 368, "¥2,000,000" into the target amount field 369, and "January 30, 2003" into the target date.

Thereafter, if an OK button 371 on the sub-account creation screen 361 is clicked, the data input in the respective input fields 366 to 370 is transmitted as sub-account creation data from the client terminal 307 to the intermediary server 301 (step 305) and further transmitted from the intermediary server 301 to the bank server 303 (step 312).

If the bank server 303 receives the sub-account creation data transferred from the intermediary server 301, the bank server 303 sets a new sub-account using the sub-account program 345 running on the bank server 303 in accordance with the received data (steps 321 and 322). More specifically, the bank server 303 registers sub-account data 350 having a name of "for purchasing a car" and target data indicating the target amount and the target data into the database 349.

On the other hand, the intermediary server 301 extracts data indicating the purpose of the sub-account set by the user (data input in the purpose field and the data input in the item field) from the sub-account creation data received from the client terminal 307, using the cooperative processing program 339 running on the intermediary server 301. The intermediary server 301 stores the extracted data (sub-account purpose data 325) into the database 340 so that the data can be used as information resource according to which customer information to be provided to the service provider server 305 will be produced (step 313).

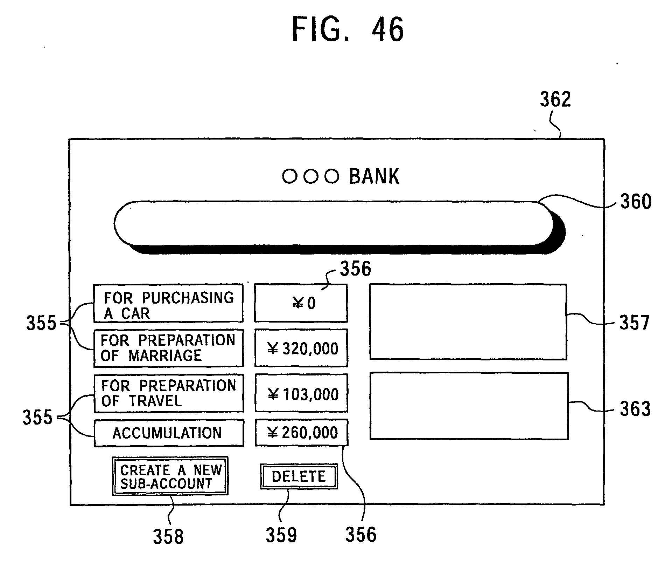

If the process of creating the new sub-account is completed, the sub-account creation screen 361 displayed on the display 320 of the client terminal 307 of the user is closed, and the sub-account management screen 362 including the additional information about the newly created subaccount "for purchasing a car" is displayed again as shown in Fig. 46 (step 306) .

Meanwhile, the intermediary server 301 provides customer information to the service provider server 305 as follows. The intermediary server 301 detects service providers capable of providing service associated with the purpose of the sub-account set by the user, on the basis of the sub-account purpose data 325 and the service provider data 347 stored in the database 340 (step 314).

More specifically, in a case in which the sub-account purpose data 325 includes data indicating "car", the intermediary server 301 searches the service provider data 347 to detect service providers capable of providing services associated with "car".

The service provider data 347 refers to data indicating services provided by respective service providers. For example, in a case in which the service provider data 347 indicates that a service provider A provides service of "selling and repairing cars", a service provider B provides service of "publishing magazines on cars", and a service provider C provides service of "providing information about cars", those service providers A, B, and C are detected as service providers capable of providing service relating to "car".

If the intermediary server 301 detects service providers capable of providing service relating to the purpose of the sub-account set by the user, the intermediary server 301 provides customer information to the service provider servers 305 of detected service providers (step 315). The customer information refers to information including at least user information such as an electronic mail address of a user or a user ID of an online banking system and data indicating the purpose of a sub-account set by the user.

If each service provider server 305 receives customer information from the intermediary server 301, the service provider server 305 stores the received customer information into the database 374 (step 331) and provides advertisement information 376 according to the customer information 375 stored in the database 374 to the user (step 332).

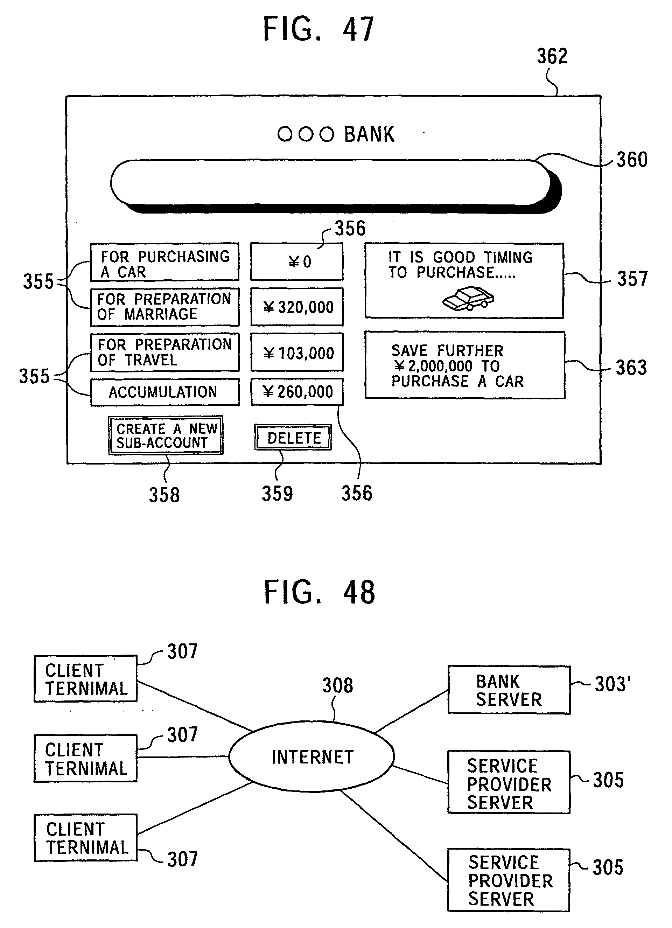

The manner of providing advertisement information 376 to the user depends on selection performed by the service provider. In the present online banking system, as shown in Fig. 47, and the service provider pastes the advertisement information 376 onto the advertisement area 357 defined in the sub-account management screen 362 of each user thereby providing the advertisement information 376 to the user (step 307). On the basis of the user information such as user ID included in the customer information 375, the service provider server 305 can specify a user the advertisement information 376 is to be provided to.

In the case in which the customer information 375 includes the electronic mail address of the user, the service provider server 305 may directly transmit advertisement information 376 to the user by electronic mail. Although in the present embodiment, the information provided by service provider servers 305 to users is referred to as "advertisement information", the information provided by service provider servers 305 may include information other than advisement. For example, information provided by a magazine publisher to users may include an article about a particular type of car a user wants to purchase or information indicating a publication including such an article. An example of information provided by a service provider to a user is a list of sales prices such as a list of auto dealers who can provide at a low price a particular type of car the user wants to purchase, provided by a sales price provider.

In the present online banking system, the bank server 303 is capable of performing an online sales transaction (electronic settlement) between the service provider server 305 and the client terminal 307, using the electronic settlement program 346 installed on the bank server 303.

Furthermore, the present online banking system is capable of allowing a user to make a loan contract to purchase an item set in the sub-account. If a loan contract has been made, the bank server 303 may produce a repayment plan depending on the desire of the user and transmit it to the client terminal 307 of the user. Repayment advice such as "You can finish repayment in 5 months!" may be displayed in the deposit/loan advice area 363 of the sub-account management screen 362.

In the deposit/loan advice area 363, advice for encouraging the user to save money such as "You need to further save only ¥2,000,000 to get a car!" may also be displayed, as shown in Fig. 47.

Furthermore, in the present banking system, the interest for the sub-account is determined in accordance with the degree of concreteness of the purpose set to the sub-account. The degree of concreteness of the purpose set to the sub-account can be estimated on the basis of the contents input in the name input field 366, the purpose input field 367, the item-to-be-purchased input field 368, the target amount input field 369, and the target date input field 370 of the sub-account creation screen 361 such as that shown in Fig. 41. For example, in a case in which a specific type of item or a specific manufacturer is input in the item-to-be-purchased input field 368, the degree of concreteness is regarded as being high and the interest is set to a rather high value.

In a case in which a charge for advertisement displayed in the advertisement area 357 is received from the service provider, the interest may be set to be high.

To provide an advantage to a user having a deposit in the bank, the interest for a loan may be set to be rather low. In a case in which a car can be purchased if ¥1,000,000 is further saved, the banking system may automatically produce a concrete plan of a loan (amount and period) and propose it to the user. If incentive from the service provider can be obtained, the interest of the loan may be set to be low to increase the probability that the user will make a loan contract with the present online bank.

As can be seen from the above explanation, the online banking system according to the present embodiment provides the following advantages.

The present online banking system, in which users, the bank, and service providers are connected on-line, makes it possible to provide various kinds of services. For example, by taking advantage of the broadcasting capability of the Internet, various kinds of information relating to the purpose of sub-accounts set by users can be provided from service providers to users. This can encourage users to save money and enhance buying inclination. On the other hand, service providers can quickly make contact with users having concrete purchasing plans. This increases the probability that the service providers can get orders. Thus, the online bank provides means that for connecting users and service providers with each other, and the online bank makes it possible to reduce the sales incentive from service providers to users, thereby increasing the sense of satisfaction of users and allowing fixed long-term commission income to be obtained.

Furthermore, uses can easily obtain useful information without any effort.

The high-quality customer information allows service providers to increase income.

Now, a fourth embodiment of the present invention is described below.

In this fourth embodiment, unlike the third embodiment described above in which communication among the client terminal 307 of the user, the bank server 303, and the service provider server 305 is performed via the intermediary server 301, communication among the client terminal 307 of the user, the bank server 303', and the service provider server 305 is performed directly without passing through the intermediary server 301.

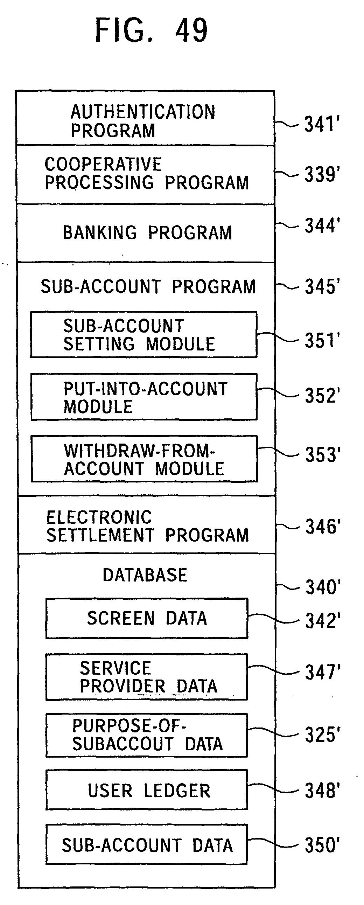

Fig. 49 shows an example of a set of a program and data stored in the storage device 333 of the bank server 303'.

An authentication program 341' is a program for authenticating a user.

The cooperative processing program 339 is a program for extracting the purpose of a sub-account set by a user from information transmitted between the client terminal 307 of the user and the bank server 303 and for providing customer information to a service provider capable of providing service relating to the purpose of the sub-account via a transmission medium such as the Internet 308.

A banking program 344' is a program for realizing a capability of providing various bank services. More specifically, the banking program 344' transmits screen data depending on a transaction specified by a user to a client terminal 307, acquires data input by the user into the screen displayed on the display 320 of the client terminal 307, and performs a banking process such as acquisition of balance, transferring of money, or opening of an account in accordance with the input data.

The sub-account program 345' manages the balances of ordinary deposit accounts of users by virtually dividing the balances of ordinary deposit accounts of users into one or more sub-accounts set by the users. The sub-account program 345' includes a sub-account setting module 351', a put-into-subaccount module 352', and a withdraw-from-subaccount module 353'.

The sub-account setting module 351' acquires sub-account setting data input by a user into a sub-account setting screen displayed on the display 320 of the client terminal 307 and sets a sub-account according to the acquired.sub-account setting data. The put-into-subaccount module 352', and the withdraw-from-subaccount module 353' are similar to those employed in the previous embodiment.

The electronic settlement program 346' is a program for achieving a capability of performing electronic settlement between a user of a client terminal 307 and a service provider of a service provider server 305.

In the database 340', data 342' representing a screen displayed on the client terminal 307, data 347' associated with service providers, data 325' indicating the purposes of the sub-accounts set by users, a user ledger 348', and sub-account data 350' are stored.

The operation of the online bank system according to the present embodiment is described below.

First, the user of the client terminal 307 accesses a homepage of an online bank whose information is provided by the bank server 303'. In the homepage, the user inputs his/her user ID and password required to log in. The user ID and the password input by the user are transmitted to the bank server 303'. If the bank server 303' receives the user ID and the password required to log in from the user, the bank server 303' performs user authentication. The user authentication is performed, for example, by comparing the user ID and the password given by the user of the client terminal 307 with a user ID and a password registered in the bank server 303'. If the user authentication is successful, the user can receive various banking services from the bank server 303'.

Herein, let us assume that the user has already jumped from the log-in screen to the sub-account management screen to receive service relating to the sub-accounts from the bank server 303'.

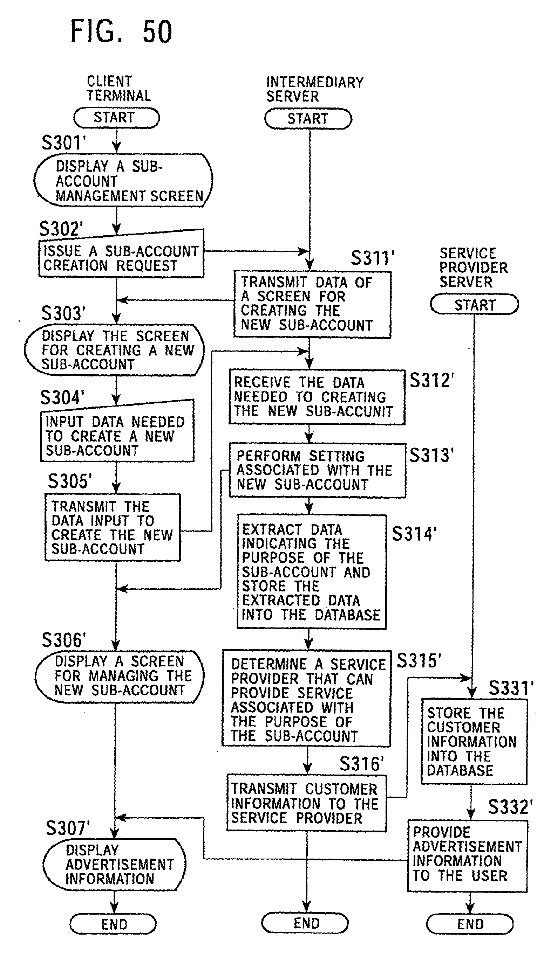

The user of the client 307 can create a new sub-account in the online bank as described below with reference to Fig. 50.

Fig. 44 shows an example of a sub-account management screen. In the sub-account management screen 362 names of sub-accounts "for preparation of marriage" and "for preparation of travel" which have already been created by the user and current amounts stored in those sub-accounts are displayed (step 301').

The data displayed in the sub-account name area 355 and the current amount area 356 of the sub-account management screen 362 is provided as follows. The bank server 303' produces the data in accordance with the sub-account data 350' of the user The client terminal 307 downloads the screen data including the inserted data indicating the sub-account names and the current amounts from the bank server 303' and displays the screen data on the display 320.

If the user clicks on the new sub-account creation button 358 on the sub-account management screen 362, a sub-account create request is transmitted from the client terminal 307 to the bank server 303' (step 302'). In response to receiving the sub-account create request from the client terminal 307, the bank server 303' transmits sub-account creation screen data to the client terminal 307 (step 311').

In response, the client terminal 307 displays the sub-account creation screen on the display 320 (step 303'). The user of the client terminal 307 inputs data needed to create a new sub-account into respective input fields of the sub-account creation screen (step 304').

Thereafter, if an OK button 371 on the sub-account creation screen 361 is clicked, the data input in the respective input fields 366 to 370 is transmitted as sub-account creation data from the client terminal 307 to the bank server 303' (step 305').

If the bank server 303' receives the sub-account creation data transferred from the client terminal 307, the bank server 303' sets a new sub-account using the sub-account program 345' running on the bank server 303' in accordance with the received data (steps 312' and 313').

Furthermore, the bank server 303' extracts data indicating the purpose of the sub-account set by the user (data input in the purpose field and the data input in the item field) from the sub-account creation data received from the client terminal 307, using the cooperative processing program 339' running on the bank server 303'. The bank server 303' stores the extracted data (sub-account purpose data 325') into the database 340' so that the data can be used as information resource according to which customer information to be provided to the service provider server 305 will be produced (step 314').

If the process of creating the new sub-account is completed, the sub-account creation screen 361 displayed on the display 320 of the client terminal 307 of the user is closed, and the sub-account management screen 362 including the additional information about the newly created subaccount "for purchasing a car" is displayed again as shown Fig. 46 (step 306').

The bank server 303' detects service providers capable of providing service associated with the purpose of the sub-account set by the user, on the basis of the sub-account purpose data 325' and the service provider data 347' stored in the database 340' (step 315'). The bank server 303' provides customer information to the service provider servers 305 of detected service providers (step 316').

If each service provider server 305 receives customer information from the bank server 303', the service provider server 305 stores the received customer information into the database 374 (step 331') and provides advertisement information 376 according to the customer information 375 stored in the database 374 to the user (step 332').

In the present embodiment, although the intermediary server is not used, the online bank system operates in a similar manner to that according to the third embodiment and has advantages similar to those obtained in the third embodiment.

Although the construction and the operation of the present invention have been described above with reference to the specific embodiment, the invention is not limited to the above-described construction and operation according to the embodiment but various modifications are possible without departing from the scope of the invention as defined by the claims.

In the present embodiment, the purpose of a sub-account created by a user of a client terminal is input by the user, and customer information is provided to a service provider capable of providing a service relating to the purpose of the sub-account. Alliteratively, the purpose of an account such as an ordinary deposit account may be input by a user of a client terminal, and customer information may be provided to a service provider capable of providing a service relating to the purpose of the account.

In the present embodiment, the sub-account program 345 is installed on the bank server 303. Alternatively, the sub-account program 345 may be installed on the client terminal 307 or the intermediary server 301.

In this case, the put-into-subaccount module 352 and the withdraw-from-subaccount module 353 are linked to an electronic bankbook so that putting and withdrawing of money into or from the account of user can be detected. The electronic bankbook is a database in which data having transaction items similar to those described in normal paper bankbooks is recorded. The electronic bankbook is stored in the storage device 316 of the client terminal 307. When the client terminal 307 is connected to the bank server 303, information about money put into or withdrawn from the account is updated.

Alternatively, in the case in which the sub-account program is installed on the client terminal 307, the user may manually input information about money put into or withdrawn from the account of the user.

The present embodiment may be applied not only to a bank deposit account but also to a post office account, a securities account, or the like.

In the present embodiment, sub-accounts are created for an ordinary deposit account. Alternatively, sub-accounts may be created for another account such as a time deposit account or an investment trust account.

As described above, the present invention provides a deposit/saving display apparatus, a deposit/saving display method, a deposit/saving display program, a deposit/saving information providing apparatus, a deposit/saving information providing method, a deposit/saving information providing program, a storage medium, an asset management apparatus, an asset management method, an asset management program, and an asset management server, which allow a user to easily manage his/her assets such as a deposit and which make it possible to provide not only online bank services but also other various kinds of services to users by means of cooperation between a bank and external service providers.

## Claims

1. A deposit/saving display apparatus for managing and displaying deposit/saving information, comprising:
setting means for setting sub-accounts into which the current amount of money deposited in an account is divided;
current amount indicating means for indicating current amounts of the respective sub-accounts set by the setting means;
amount indicating means for indicating an amount of money which can be transferred into or from one or more of the sub-accounts, if there is such money;
transfer means for transferring the amount of money indicated by the amount indicating means into or from one or more of the sub-accounts; and
update means for updating the current amount of the one or more sub-accounts in accordance with the amounts transferred into or from the one or more sub-accounts by the transfer means.

2. A deposit/saving display apparatus according to Claim 1, further comprising division means for dividing the amount of money indicated by the amount indicating means into plural amounts of money, wherein transfer means transfers each of the plural amounts of money, into which the money has been divided by the division means, into one or more sub-accounts.

3. A deposit/saving display apparatus according to Claim 1, wherein the display means displays a icon indicating the amount of money.

4. A deposit/saving display apparatus according to Claim 1, wherein the display means displays an icon indicating the amount of money, and the division means displays, in response to a specific operation performed by a user on the icon, a plurality of icons indicating amounts whose sum is equal to the amount indicated by the original icon.

5. A deposit/saving display apparatus according to Claim 4, wherein in response to a specific operation performed by a user on a plurality of icons indicating amounts of money, the plurality of icons are combined into a single icon indicating the sum of the amounts of money indicated by the plurality of icons.

6. A deposit/saving display apparatus according to Claim 1, further comprising name setting means for assigning a name to a sub-account indicated by display means and displaying the resultant name.

7. A deposit/saving display apparatus according to Claim 1, wherein the amount of money, which can be put into one or more sub-accounts, is the amount of money which has been put into the account.

8. A deposit/saving display apparatus according to Claim 1, wherein the amount of money, which can withdrawn from one or more sub-accounts, is the amount of money which has been withdrawn from the account.

9. A deposit/saving display apparatus according to Claim 1, wherein the one or more sub-accounts, to or from which the amount of money is to be transferred by the transfer means, can be specified by a user.

10. A deposit/saving display apparatus for managing and displaying deposit/saving information, comprising:
sub-account setting means for setting virtual sub-accounts in one account;
current amount acquisition means for acquiring the current amount of money deposited in the one account;
assigning means for assigning the current amount acquired by the current amount acquisition means to one or more sub-accounts set by the sub-account setting means;
determination means for, when money has been put into or withdrawn from the one account, determining one or more sub-accounts to which the amount of said money is to be assigned; and
update means for updating the current amount of the one or more sub-accounts determined by the determination means.

11. A deposit/saving display method for managing and displaying deposit/saving information, comprising:
a first step of setting sub-accounts into which the current amount of money deposited in an account is divided;
a second step of displaying current amounts of the respective sub-accounts set in the first step; and
steps performed when there is money which can be put into or withdrawn from one or more sub-accounts, said steps including:
a third step of indicating the amount of money which can be put into or withdrawn from one or more of the sub-accounts;
a fourth step of transferring the amount of money indicated in the third step into or from one or more of the sub-accounts; and
a fifth step of updating the current amount of the one or more sub-accounts in accordance with the amounts transferred in the third step into or from the one ore more sub-accounts.

12. A deposit/saving display program for causing a computer to have functions for managing and displaying deposit/saving information, said functions comprising:
a setting function of setting sub-accounts into which the current amount of money deposited in an account is divided;
a current amount indicating function of indicating current amounts of the respective sub-accounts set by the setting function;
an amount indicating function of indicating an amount of money which can be transferred into or from one or more of the sub-accounts, if there is such money;
a transfer function of transferring the amount of money indicated by the amount indicating function into or from one or more of the sub-accounts; and
an update function of updating the current amount of the one or more sub-accounts in accordance with the amounts transferred into or from the one or more sub-accounts by the transfer function.

13. A computer-readable storage medium including a deposit/saving display program stored therein for causing a computer to have functions for managing and displaying deposit/saving information, said functions comprising:
a setting function of setting sub-accounts into which the current amount of money deposited in an account is divided;
a current amount indicating function of indicating current amounts of the respective sub-accounts set by the setting function;
an amount indicating function of indicating an amount of money which can be transferred into or from one or more of the sub-accounts, if there is such money;
a transfer function of transferring the amount of money indicated by the amount indicating function into or from one or more of the sub-accounts; and
an update function of updating the current amount of the one or more sub-accounts in accordance with the amounts transferred into or from the one or more sub-accounts by the transfer function.

14. A deposit/saving information providing server for providing deposit/saving information to a client terminal, comprising:
sub-account setting means for setting virtual sub-accounts in one account;
current amount acquisition means for acquiring the current amount of money deposited in the one account;
assigning means for assigning the current amount acquired by the current amount acquisition means to one or more sub-accounts set by the sub-account setting means;
display data providing means for providing, to the client terminal, display data to be used by the client terminal to display current amounts assigned by the assigning means to respective virtual sub-accounts;
identification information acquisition means for, when money has been put into or withdrawn from the one account, providing, to the client terminal, amount-of-money information indicating the amount of money which has been put into or withdrawn from the one account and acquiring, from the client terminal, identification information indicating one or more sub-accounts to which the amount of money indicated by the amount-of-money information is to be assigned; and
update means for updating the current amount assigned by the assigning means to the one or more sub-accounts in accordance with the identification information acquired by the identification information acquisition means.

15. A deposit/saving information providing method for providing deposit/saving information to a client terminal, comprising:
a first step of setting virtual sub-accounts in one account;
a second step of acquiring the current amount of money deposited in the one account;
a third step of assigning the current amount acquired in the second step to one or more sub-accounts set in the first step;
a fourth step of providing, to the client terminal, display data to be used by the client terminal to display current amounts assigned in the third steps to respective virtual sub-accounts;
a fifth step of, when money has been put into or withdrawn from the one account, providing, to the client terminal, amount-of-money information indicating the amount of money which has been put into or withdrawn from the one account and acquiring, from the client terminal, identification information indicating one or more sub-accounts to which the amount of money indicated by the amount-of-money information is to be assigned; and
a sixth step of updating the current amount assigned in the third step to the one or more sub-accounts in accordance with the identification information acquired in the fifth step.

16. A deposit/saving information providing program for causing a computer to have functions for providing deposit/saving information to a client terminal, said functions comprising:
a sub-account setting function of setting virtual sub-accounts in one account;
a current amount acquisition function of acquiring the current amount of money deposited in the one account;
an assigning function of assigning the current amount acquired by the current amount acquisition function to one or more sub-accounts set by the sub-account setting function;
a display data providing function of providing, to the client terminal, display data to be used by the client terminal to display current amounts assigned by the assigning function to respective virtual sub-accounts;
an identification information acquisition function of, when money has been put into or withdrawn from the one account, providing, to the client terminal, amount-of-money information indicating the amount of money which has been put into or withdrawn from the one account and acquiring, from the client terminal, identification information indicating one or more sub-accounts to which the amount of money indicated by the amount-of-money information is to be assigned; and
an update function of updating the current amount assigned by the assigning function to the one or more sub-accounts in accordance with the identification information acquired by the identification information acquisition function.

17. A computer-readable storage medium including a deposit/saving information providing program stored therein for causing a computer to have functions for providing deposit/saving information to a client terminal, said functions comprising:
a sub-account setting function of setting virtual sub-accounts in one account;
a current amount acquisition function of acquiring the current amount of money deposited in the one account;
an assigning function of assigning the current amount acquired by the current amount acquisition function to one or more sub-accounts set by the sub-account setting function;
a display data providing function of providing, to the client terminal, display data to be used by the client terminal to display current amounts assigned by the assigning function to respective virtual sub-accounts;
an identification information acquisition function of, when money has been put into or withdrawn from the one account, providing, to the client terminal, amount-of-money information indicating the amount of money which has been put into or withdrawn from the one account and acquiring, from the client terminal, identification information indicating one or more sub-accounts to which the amount of money indicated by the amount-of-money information is to be assigned; and
an update function of updating the current amount assigned by the assigning function to the one or more sub-accounts in accordance with the identification information acquired by the identification information acquisition function.

18. A computer-readable storage medium including a deposit/saving information display program stored therein for causing a computer to have functions for displaying deposit/saving information on a client terminal, said functions comprising:
a current amount acquisition function of acquiring the current amount of money deposited in one account from a server;
a current amount division function of dividing the current amount of money deposited in the one account acquired by the current amount acquisition function into virtual sub-accounts;
an assigning function of, if money has been put into or withdrawn from the one account, assigning the amount of money put into or withdrawn from the one account to one or more of the sub-accounts; and
a current amount update function of updating the current amounts of the virtual sub-accounts into which the money has been divided by the current amount division function, in accordance with the amounts of money assigned by the assigning function.

19. A computer-readable storage medium including a deposit/saving information display program stored therein for causing a computer to perform a process of displaying deposit/saving information on a client terminal, said program comprising:
a current amount acquisition function of acquiring the current amount of money deposited in one account from a server;
a current amount division function of dividing the current amount of money deposited in the one account acquired by the current amount acquisition function into virtual sub-accounts;
an assigning function of, if money has been put into or withdrawn from the one account, assigning the amount of money put into or withdrawn from the one account to one or more of the sub-accounts; and
a current amount update function of updating the current amounts of the virtual sub-accounts into which the money has been divided by the current amount division function, in accordance with the amounts of money assigned by the assigning function;
a display function of displaying the respective sub-accounts into which the money in the one account has been divided by the current amount division function.

20. An asset management apparatus comprising:
supplementary account creation means for creating a supplementary account related to an amount of an asset of a customer;
credit/debit means for crediting or debiting the created supplementary account; and
display means for displaying the amount of money stored in the supplementary account;
wherein the total amount of money stored in the supplementary account is equal to or less than the amount of the asset of the customer.

21. An asset management apparatus according to Claim 20, wherein in a case in which there are plural supplementary accounts, the credit/debit means is capable of transferring at least part of the amount stored in one supplementary account into another supplementary account.

22. An asset management apparatus according to Claim 20, wherein the supplementary accounts include a first supplementary account the amount stored in which varies in accordance with a change in the amount of the asset of the customer and a second supplementary account the amount stored in which is not influenced by the change in the amount of the asset of the customer.

23. An asset management apparatus according to Claim 20, wherein funds associated with plural types of financial products can be credited or debited to the supplementary account.

24. An asset management apparatus according to Claim 20, wherein in a case in which the amount stored in the supplementary account includes an amount indicated in monetary units different from predetermined monetary units, the display means calculates the amount in predetermined units equivalent to the amount in said different monetary units and displays the calculated equivalent amount.

25. An asset management apparatus according to Claim 20, wherein in a case in which the amount stored in the supplementary account includes an amount indicated in monetary units different from predetermined monetary units, the display means calculates the amount in predetermined units equivalent to the amount in said different monetary units and further calculates the total equivalent amount stored in the supplementary account and displays the total equivalent amount.

26. An asset management apparatus according to Claim 20, wherein the display means displays the amount stored in the supplementary account in the form of one or more icons together with the supplementary account in a visually recognizable fashion.

27. An asset management apparatus according to Claim 26, wherein an asset belonging to one supplementary account is transferred into another supplementary account in response to moving, by means of a predetermined operation, a displayed icon from said one supplementary account to said another supplementary account.

28. An asset management apparatus according to Claim 26, wherein in response to a predetermined operation, an icon indicating an amount of money is divided into a plurality of icons such that the sum of amounts indicated by the plurality of icons becomes equal to the amount indicated by the original icon.

29. An asset management apparatus according to Claim 20, further comprising name setting means for setting a name of the supplementary account, wherein the display means displays the named supplementary account together with the name in a visually recognizable fashion.

30. An asset management apparatus according to Claim 20, further comprising target setting means for setting a target amount for the amount stored in the supplementary account.

31. An asset management apparatus according to Claim 30, further comprising calculation means for calculating the degree achievement relative to the target value on the basis of the amount stored in the supplementary account and the target amount, wherein the display means displays the calculated degree of achievement relative to the target amount.

32. An asset management apparatus according to Claim 20, further comprising:
character setting means for selecting a character from a plurality of prepared characters and assigning to the selected character to the supplementary account; and
electronic mail transmission means for transmitting an electronic mail related to the character assigned to the supplementary account to a particular electronic mail address.

33. An asset management apparatus according to Claim 32, wherein the particular electronic mail address is an electronic mail address specified by the customer.

34. An asset management apparatus according to Claim 32, further comprising parameter acquisition means for acquiring a parameter related to a content of an electronic mail to be transmitted, wherein the electronic mail transmission means selects a content of the electronic mail to be transmitted, in accordance with the acquired parameter.

35. An asset management apparatus according to Claim 34, wherein the parameter is determined in accordance with an operation performed on the supplementary account by the customer.

36. An asset management method for a computer including supplementary account creation means and credit/debit means to manage an asset, comprising the steps of:
creating a supplementary account related to the amount of an asset of a customer, using the supplementary account creation means;
crediting or debiting the supplementary account such that the total amount stored in the supplementary account is equal to or less than the amount of the asset of the customer; and
displaying the amount stored in the supplementary account, using the display means.

37. An asset management program for causing a computer to have functions including:
a function of creating an supplementary account related to an amount of an asset of a customer;
a function of crediting or debiting the supplementary account such that the total amount stored in the supplementary account is equal to or less than the amount of the asset of the customer; and
a function of displaying the amount stored in the supplementary account.

38. A computer-readable storage medium having an asset management program stored therein for causing a computer to have functions including:
a function of creating an supplementary account related to an amount of an asset of a customer;
a function of crediting or debiting the supplementary account such that the total amount stored in the supplementary account is equal to or less than the amount of the asset of the customer; and
a function of displaying the amount stored in the supplementary account.

39. An asset management server comprising:
information acquisition means for acquiring information necessary to create a supplementary account from a client terminal;
supplementary account creation means for creating the supplementary account related to the amount of an asset of a customer in accordance with the acquired information;
crediting/debiting means for crediting or debiting the supplementary account such that the total amount stored in the supplementary account is equal to or less than the amount of the asset of the customer; and
providing means for providing information indicating the amount stored in the supplementary account to the client terminal.

40. An asset management method for a server including information acquisition means, supplementary account creation means, crediting/debiting means, and providing means to manage an asset, said method comprising the steps of:
acquiring information necessary to create a supplementary account from a client terminal, using the information acquisition means;
creating the supplementary account related to the amount of an asset of a customer in accordance with the acquired information, using the supplementary account creation means;
crediting or debiting the supplementary account using the crediting/debiting means such that the total amount stored in the supplementary account is equal to or less than the amount of the asset of the customer; and
providing information indicating the amount stored in the supplementary account to the client terminal, using the providing means.

41. An asset management program for causing a computer to have functions including:
a function of acquiring information necessary to create a supplementary account from a client terminal;
a function of creating the supplementary account related to the amount of an asset of a customer in accordance with the acquired information;
a function of crediting or debiting the supplementary account such that the total amount stored in the supplementary account is equal to or less than the amount of the asset of the customer; and
a function of providing information indicating the amount stored in the supplementary account to the client terminal.

42. A computer-readable storage medium having an asset management program stored therein for causing a computer to have functions including:
a function of acquiring information necessary to create a supplementary account from a client terminal;
a function of creating the supplementary account related to the amount of an asset of a customer in accordance with the acquired information;
a function of crediting or debiting the supplementary account such that the total amount stored in the supplementary account is equal to or less than the amount of the asset of the customer; and
a function of providing information indicating the amount stored in the supplementary account to the client terminal.

43. A depositing/saving server comprising:
means for setting an account in accordance with a request issued by a client terminal online-connected to the depositing/saving server;
means for allowing a user of the client terminal to input a purpose of said account; and
means for providing on-line customer information to a service provider capable of providing a service relating to the purpose of the account input by the user.

44. A depositing/saving server according to Claim 43, further comprising means for providing on-line information relating to the purpose of the account to the client terminal, said information being provided by the service provider in accordance with the customer information.

45. A depositing/saving server according to Claim 43 or 44, wherein said account is a sub-account created by a user of the client terminal by virtually dividing one account.

46. An online depositing/saving system comprising a depositing/saving server and an intermediary server connected to each other on-line, wherein
the depositing/saving server includes means for setting an account in accordance with a request issued by an online-connected client terminal, and
the intermediary server includes:
means for mediating transmission of information between the client terminal and the depositing/saving server;
means for allowing a user of the client terminal to input a purpose of the account set by the depositing/saving server; and
means for providing on-line customer information to a service provider capable of providing a service relating to the purpose of the account input by the user.

47. An online depositing/saving system according to Claim 46, wherein the intermediary server includes means for providing on-line information relating to the purpose of the account to the client terminal, said information being provided by the service provider in accordance with the customer information.

48. An online depositing/saving system according to Claim 46 or 47, wherein said account is a sub-account created by a user of the client terminal by virtually dividing one account.

49. A method for, in a system including a client terminal, a depositing/saving server, and a service provider server, which are connected to each other on-line, providing deposit/saving information, said method including the steps of:
in the depositing/saving server, setting an account in accordance with a request issued by a client terminal;
getting a user of the client terminal to input a purpose of said account; and
in the depositing/saving server, determining a service provider capable of providing a service relating to the purpose of the account input by the user of the client terminal and providing on-line customer information to said service provider.

50. A method for, in a system including a client terminal, a depositing/saving server, an intermediary server and a service provider server, which are connected to each other on-line, providing deposit/saving information, said method including the steps of:
in the depositing/saving server, receiving a request issued by the client terminal via the intermediary server and setting an account in accordance with the request;
getting a user of the client terminal to input a purpose of said account; and
in the intermediary server, determining a service provider capable of providing a service relating to the purpose of the account input by the user of the client terminal and providing on-line customer information to said service provider.

51. A deposit/saving information providing method according to Claim 49 or 50, further comprising the step of providing on-line information relating to the purpose of the account to the client terminal, said information being provided by the service provider in accordance with the customer information.

52. A program for causing a computer to have functions including:
a function of setting an account in accordance with a request issued by an online-connected client terminal;
a function which allows a user of the client terminal to input a purpose of said account; and
a function of providing on-line customer information to a service provider capable of providing a service relating to the purpose of the account input by the user.

53. A program for causing a computer to have functions including:
a function of setting an account in accordance with a request issued by an online-connected client terminal;
a function which allows a user of the client terminal to input a purpose of said account;
a function of providing on-line customer information to a service provider capable of providing a service relating to the purpose of the account input by the user; and
a function of providing on-line information relating to the purpose of the account to the client terminal, said information being provided by the service provider in accordance with the customer information.

54. A program for causing a computer to have functions for operating an intermediary server online-connected to a depositing/saving server having a capability of setting an account in accordance with a request issued by an online-connected client terminal, said functions comprising:
a function of mediating transmission of information between the client terminal and the depositing/saving server;
a function of allowing a user of the client terminal to input a purpose of the account set by the depositing/saving server; and
a function of providing on-line customer information to a service provider capable of providing a service relating to the purpose of the account input by the user.

55. A program for causing a computer to have functions for operating an intermediary server online-connected to a depositing/saving server having a capability of setting an account in accordance with a request issued by an online-connected client terminal, said functions comprising:
a function of mediating transmission of information between the client terminal and the depositing/saving server;
a function of allowing a user of the client terminal to input a purpose of the account set by the depositing/saving server;
a function of providing on-line customer information to a service provider capable of providing a service relating to the purpose of the account input by the user; and
a function of providing on-line information relating to the purpose of the account to the client terminal, said information being provided by the service provider in accordance with the customer information.

56. A computer-readable storage medium having a program stored therein for causing a computer to have functions including:
a function of setting an account in accordance with a request issued by an online-connected client terminal;
a function which allows a user of the client terminal to input a purpose of said account; and
a function of providing on-line customer information to a service provider capable of providing a service relating to the purpose of the account input by the user.

57. A computer-readable storage medium having a program stored therein for causing a computer to have functions including:
a function of setting an account in accordance with a request issued by an online-connected client terminal;
a function which allows a user of the client terminal to input a purpose of said account;
a function of providing on-line customer information to a service provider capable of providing a service relating to the purpose of the account input by the user; and
a function of providing on-line information relating to the purpose of the account to the client terminal, said information being provided by the service provider in accordance with the customer information.

58. A computer-readable storage medium having a program stored therein for causing a computer to have functions for operating an intermediary server online-connected to a depositing/saving server having a capability of setting an account in accordance with a request issued by an online-connected client terminal, said functions comprising:
a function of mediating transmission of information between the client terminal and the depositing/saving server;
a function of allowing a user of the client terminal to input a purpose of the account set by the depositing/saving server; and
a function of providing on-line customer information to a service provider capable of providing a service relating to the purpose of the account input by the user.

59. A computer-readable storage medium having a program stored therein for causing a computer to have functions for operating an intermediary server online-connected to a depositing/saving server having a capability of setting an account in accordance with a request issued by an online-connected client terminal, said functions comprising:
a function of mediating transmission of information between the client terminal and the depositing/saving server;
a function of allowing a user of the client terminal to input a purpose of the account set by the depositing/saving server;
a function of providing on-line customer information to a service provider capable of providing a service relating to the purpose of the account input by the user; and
a function of providing on-line information relating to the purpose of the account to the client terminal, said information being provided by the service provider in accordance with the customer information.
